(19)

**Europäisches Patentamt**

**European Patent Office**

**Office européen des brevets**

(11) **EP 2 257 057 B1**

(12) **EUROPEAN PATENT SPECIFICATION**

(45) Date of publication and mention of the grant of the patent:
**08.05.2019 Bulletin 2019/19**

(21) Application number: **09721452.2**

(22) Date of filing: **18.03.2009**

(51) Int Cl.:
*H04N 5/76* (2006.01)　　*G06F 17/30* (2006.01)
*G01L 11/00* (2006.01)　　*H04N 5/14* (2006.01)
*G06K 9/00* (2006.01)　　*G10L 25/48* (2013.01)

(86) International application number:
**PCT/JP2009/055315**

(87) International publication number:
**WO 2009/116582 (24.09.2009 Gazette 2009/39)**

(54) **DYNAMIC IMAGE SEARCH DEVICE AND DYNAMIC IMAGE SEARCH PROGRAM**

VORRICHTUNG ZUR DYNAMISCHEN BILDSUCHE UND PROGRAMM ZUR DYNAMISCHEN BILDSUCHE

DISPOSITIF DE RECHERCHE D'IMAGE DYNAMIQUE ET PROGRAMME DE RECHERCHE D'IMAGE DYNAMIQUE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **19.03.2008 JP 2008072537**

(43) Date of publication of application:
**01.12.2010 Bulletin 2010/48**

(73) Proprietor: **National University Corporation Hokkaido University**
**Sapporo-shi, Hokkaido 060-0808 (JP)**

(72) Inventor: **HASEYAMA, Miki**
**Sapporo-shi Hokkaido 060-0814 (JP)**

(74) Representative: **Viering, Jentschura & Partner mbB**
**Patent- und Rechtsanwälte**
**Am Brauhaus 8**
**01099 Dresden (DE)**

(56) References cited:
　　WO-A1-01/04792　　　JP-A- 2004 159 331
　　JP-A- 2005 252 859　　JP-A- 2006 014 084
　　JP-A- 2008 005 167

- Nevenka Dimitrova ET AL: "Visual Associations in DejaVideo", Asian Conference on Computer Vision, Taipei, January 2000, January 2000 (2000-01), pages 1-11, XP55033365, Retrieved from the Internet: URL:http://citeseerx.ist.psu.edu/viewdoc/d ownload?doi=10.1.1.90.595&rep=rep1&type=pd f [retrieved on 2012-07-19]
- Rui Pedro Paiva: "Content-Based Classification and Retrieval of Music: Overview and Research Trends", , 2002, pages 1-26, XP55033480, Retrieved from the Internet: URL:https://www.cisuc.uc.pt/publication/sh owfile?fn=1124_pub_TR_(State-of-the-Art).p df [retrieved on 2012-07-20]
- Qi Tian ET AL: "Display Optimization For Image Browsing" In: "Multimedia Databases and Image Communication", 18 September 2001 (2001-09-18), Springer Berlin Heidelberg, Berlin, Heidelberg, XP55033450, ISBN: 978-3-54-042587-8 vol. 2184, pages 167-176, * pages 168-170; figure 1(a) *

• CHENG WENGANG ET AL: "Content-based video retrieval using audio and visual clues", IEEE TENCON' 02. 2002 IEEE REGION 10 CONFERENCE ON COMPUTERS, COMMUNICATIONS, CONTROL AND POWER ENGINEERING PROCEEDINGS. BEIJING, CHINA, OCT. 28 - 31, 2002; [IEEE REGION 10 ANNUAL CONFERENCE], NEW YORK, NY : IEEE, US, vol. 1, 28 October 2002 (2002-10-28), pages 586-589, XP010628553, DOI: 10.1109/TENCON.2002.1181343 ISBN: 978-0-7803-7490-4

**Description**

TECHNICAL FIELD

The present invention relates to a moving image search device and a moving image search program for searching multiple pieces of moving image data for a scene similar to query moving image data.

BACKGROUND ART

A large amount of videos have been available to a user with the recent increase in capacity of storage media and widely-spread video distribution services via the Internet. However, it is generally difficult for the user to acquire a desired video without clearly designating a specific video. This is because acquisition of a video from an extensive database depends principally on search using keywords such as a video name and a producer. Under these circumstances, besides the video search using keywords, various search techniques based on video contents have been expected to be achieved, such as search focusing on video configuration and search for videos of the same genre. Therefore, methods focusing on similarity between videos or songs have been proposed (see, for example, Patent Document 1 and Patent Document 2).

In the method described in Patent Document 1, each piece of moving image data is associated with simple-graphic-based similarity information for retrieval target in which the similarities between the piece of moving image data and multiple simple graphics are obtained and recorded. Meanwhile, during image retrieval, for an image as a search query, similarity information for retrieval is prepared in which similarities to the multiple simple graphics are obtained and recorded. The simple-graphic-based similarity information for retrieval target and the similarity information for retrieval are collated with each other. When an average similarity of the sum of the similarities to the multiple simple graphics is equal to or greater than a preset prescribed similarity, the moving image data is retrieved as a similar moving image. Moreover, in the method described in Patent Document 2, similar video section information is generated for distinguishing between similar video sections and other sections in video data. In this event, in the method described in Patent Document 2, the shots are classified into similar patterns based on their image characteristic value set.

Meanwhile, there is also a method for calculating similarity between videos or songs, by adding mood-based words as metadata to the videos or songs, based on a relationship between the words (see, for example. Non-patent Document 1 and Non-patent Document 2).

Patent Document 1: Japanese Patent Application Publication No. 2007-58258
Patent Document 2: Japanese Patent Application Publication No. 2007-274233
Non-patent Document 1: L. Lu, D. Liu and H. J. Zhang, "Automatic Mood Detection and Tracking of Music Audio Signals", IEEE Trans . Audio, Speech and Language Proceeding, vol. 14, no. 1, pp. 5-8, 2006.
Non-patent Document 2: T. Li and M. Ogihara, "Toward Intelligent Music Information Retrieval", IEEE Trans. Multimedia, Vol. 8, No. 3, pp. 564-574, 2006.

WO 01/04792 A1 discloses a method for processing video comprising the steps of determining an association between a video segment including a particular feature and at least one additional information source also including that feature, and utilizing the association to display information from the additional information source based at least in part on a selection by a user of the feature in the video segment.

Nevenka Dimitrova et al. : "Visual Associations in DejaVideo", Asian conference on Computer vision, Taipei, January 2000, pages 1 to 11, XP55033365 discloses a way of association extraction which relates to the visual aspect of video, wherein visual associations are extracted using frame characterization and face identification.

Rui Pedro Paiva: "Content-Based Classification and Retrieval of Music Overview and Research Trends", 2002, pages 1 to 26, XP55033480, discloses methods for searching music databases.

Qi Tian et al.: "Display Optimization For Image Browsing", in "Multimedia Databases and Image Communication", 18 September 2001, Springer Berlin Heidelberg, XP55033450, ISBN: 978-3-54-042587-8, vol. 2184, pages 167 to 176, discloses a technique to visualize a multitude of images on a 2-D screen based on their visual features.

Cheng Wengang et al.: "Content-based Video Retrieval Using Audio and Visual Clues", IEEE Tencon 02, 2002 IEEE Region 10 Conference on Computers, Communications, Control and Power Engineering Proceedings, vol. 1, 28 October 2002, pages 586-589, XP010628553, ISBN: 978-0-7803-7490-4 discloses integrating audio features with visual features for video segmentation and retrieval.

DISCLOSURE OF INVENTION

However, the methods described in Patent Document 1 and Patent Document 2 are classification methods based only on image characteristics. Therefore, these methods can merely obtain scenes containing similar images, but have a difficulty in obtaining similar scenes based on the understanding of moods of images contained therein.

Although searching for the scenes which are similar in view of mood of the images is possible with the methods described in Non-patent Document 1 and Non-patent Document 2, each scene needs to be previously provided with metadata.

Although the methods described in Non-patent Document 1 and Non-patent Document 2 allow a similar scene retrieval based on the understanding of moods of images, these methods require each scene to be labeled with metadata.

Therefore, these methods have difficulty in coping with a situation where, with the recent increase in capacity of database, a large amount of moving image data needs to be classified.

Therefore, it is an object of the present invention to provide a moving image search device and a moving image search program for searching for a scene similar to a query scene in moving image data.

The objects of the invention are solved by the features of the independent claims. Further embodiments of the invention are described in the dependent claims. In order to solve the above problem, the first aspect of the present invention relates to a moving image search device for searching scenes of moving image data for a scene similar to a query moving image data. Specifically, the moving image search device according to the first aspect of the present invention includes: a moving image database for storage of sets of moving image data containing set of the query moving image data; a scene dividing unit which divides a visual signal of the sets of moving image data into shots to output, as a scene, continuous shots having a small characteristic value set difference of an audio signal corresponding to the shots; a video signal similarity calculation unit which calculates corresponding sets of video signal similarity between respective two scenes of scenes obtained by the division by the scene dividing unit according to a characteristic value set of the visual signal and a characteristic value set of the audio signal to generate sets of video signal similarity data; and a video signal similarity search unit which searches the scenes according to the sets of video signal similarity data to find a scene having a smaller similarity to each scene of the set of query moving image data than a certain threshold.

Here, a video signal similarity display unit may be further provided which acquires and displays coordinates corresponding to the similarity for each of the scenes searched out by the video signal similarity search unit.

An audio signal similarity calculation unit is further provided which calculates a corresponding audio signal similarity between respective two scenes of the scenes obtained by the division by the scene dividing unit to generate sets of audio signal similarity data, the set of the audio signal similarity including a similarity based on a bass sound, a similarity based on an instrument other than the bass, and a similarity based on a rhythm of the audio signal; and an audio signal similarity search unit which search the scenes according to the sets of audio signal similarity data to find a scene having a smaller similarity to each scene of the set of query moving image data than a certain threshold. Here, an audio signal similarity display unit may be further provided which acquires and displays coordinates corresponding to the similarity for each of the scenes searched out by the audio signal similarity search unit. The audio signal similarity calculation unit is configured to extract a bass sound having a frequency range 40 to 250 Hz from the audio signal, is configured to estimate a bass pitch by obtaining a frequency having a peak on a scale in the extracted bass sound at each time, and is configured to calculate the similarity based on the bass sound according to transition of the bass pitch of the audio signal, and the audio signal similarity calculation unit is configured to calculate the similarity base on the sound other than the bass sound of the audio signal based on the frequency, which is higher than the bass sound, having a pitch on scale.

The scene dividing unit calculates sets of characteristic value data on each clip from an audio signal of the sets of moving image data, calculates a probability of membership in each of audio classes representing respective types of sounds of clips, divides a visual signal of the sets of moving image data into shots, and calculates a fuzzy algorithm value of each of the shots from the probabilities of membership of clips corresponding to the shot in each of the audio classes to output, as a scene, continuous shots including adjacent shots having a small fuzzy algorithm value difference therebetween.

For or each of the scenes obtained by division by the scene dividing unit, the video signal similarity calculation unit divides the scene into clips to calculate a characteristic value set of a visual signal for each of the clips from the visual signal based on a color histogram of a predetermined frame of a moving image of the clip, divides the clip into audio signal frames to classify each of the audio signal frames into a speech frame and a background sound frame based on an energy and a spectrum of the audio signal in the audio signal frame and to calculate a characteristic value set of the audio signal of the clip, and calculates the corresponding similarity between respective scenes based on the characteristic value set of the visual signal and the audio signal in clip unit.

The audio signal similarity calculation unit: calculates the similarity based on a bass sound between any two scenes by acquiring the bass sound from the audio signal, and by calculating a power spectrum focusing on time and frequency; calculates the similarity based on the instrument other than the bass between the two scenes by calculating, from the audio signal, an energy of frequency indicated by each of pitch names of sounds each having a frequency range higher than that of the bass sound, and by calculating a sum of energy differences between the two scenes; and calculates the similarity based on the rhythm between the two scenes by use of an autocorrelation function in such a way that the autocorrelation function is calculated by separating the audio signal into a high-frequency component and a low-frequency component repeatedly a predetermined number of times by use of a two-division filter bank and then by detecting an envelope from a signal containing the high-frequency component.

A moving image search device searches scenes of moving image data for a scene similar to a query moving image data. Specifically, the moving image search device includes: a moving image database for storage of sets of moving image data containing the set of query moving image data; a scene dividing unit configured to divide a visual signal of the sets of moving image data into shots to output, as a scene, continuous shots having a small characteristic value set difference of an audio signal corresponding to the shots; a video signal similarity calculation unit configured to calculate corresponding sets of video signal similarity between respective two scenes of scenes obtained by the division by the scene dividing unit according to a characteristic value set of the visual signal and a characteristic value set of the audio signal to generate sets of video signal similarity data; an audio signal similarity calculation unit configured to calculate a corresponding audio signal similarity between respective two scenes of the scenes obtained by the division by the scene dividing unit to generate sets of audio signal similarity data, the set of the audio signal similarity including a similarity based on a bass sound, a similarity based on an instrument other than the bass, and a similarity based on a rhythm of the audio signal; a search unit configured to acquire preference data that is a ratio between preferences to the video signal similarity and the audio signal similarity and determine weighting factors based on the video signal similarity data and the audio signal similarity data, the weight factors including a weighting factor for a similarity between each two scenes calculated from the characteristic value set of the visual signal and the characteristic value set of the audio signal, a weighting factor for a similarity based on the bass sound of the audio signal, a weighting factor for a similarity based on the instrument other than the bass of the audio signal, and a weighting factor for a similarity based on the rhythm of the audio signal, to search the scenes based on an integrated similarity obtained by integrating the similarities of each scene weighted by the respective weighting factors to find scenes which have a smaller integrated similarity therebetween than a certain threshold; and a display unit configured to acquire and display coordinates corresponding to the integrated similarity for each of the scenes searched out by the search unit.

The second aspect of the present invention relates to a moving image search program for searching scenes of moving image data for each scene similar to a query moving image data. Specifically, the moving image search program according to the third aspect of the present invention allows a computer to function as: scene dividing means which divides into shots visual signal of set of query moving image data and sets of moving image data stored in a moving image database and outputs, as a scene, continuous shots having a small characteristic value set difference of an audio signal corresponding to the shots; video signal similarity calculation means which calculates corresponding sets of video signal similarity between respective two scenes of scenes obtained by the division by the scene dividing means according to a characteristic value set of the visual signal and a characteristic value set of the audio signal to generate sets of video signal similarity data; and video signal similarity search means which searches the scenes according to the sets of video signal similarity data to find a scene having a smaller similarity of to each scene of the set of query moving image data than a certain threshold.

Here, the computer may be further allowed to function as : video signal similarity display means which acquires and displays coordinates corresponding to the similarity for each of the scenes searched out by the video signal similarity search means.

The computer is further allowed to function as: audio signal similarity calculation means which calculates a corresponding audio signal similarity between respective two scenes of the scenes obtained by the division by the scene dividing means to generate sets of audio signal similarity data, the set of the audio signal similarity including a similarity based on a bass sound, a similarity based on an instrument other than the bass, and a similarity based on a rhythm of the audio signal; and audio signal similarity search means which searches the scenes according to the sets of audio signal similarity data to find a scene having a smaller similarity to each scene of the set of query moving image data than a certain threshold. The audio signal similarity calculation means extracts a bass sound having a frequency range 40 to 250 Hz from the audio signal, estimates a bass pitch by obtaining a frequency having a peak on a scale in the extracted bass sound at each time, and calculates the similarity based on the bass sound according to transition of the bass pitch of the audio signal, and the audio signal similarity calculation means calculates the similarity base on the sound other than the bass sound of the audio signal based on the frequency, which is higher than the bass sound, having a pitch on scale.

The computer may be further allowed to function as: audio signal similarity display means which acquires and displays coordinates corresponding to the similarity for each of the scenes searched out by the audio signal similarity search means .

The scene dividing means calculates sets of characteristic value data on each clip from an audio signal of the sets of moving image data, calculates a probability of membership in each of audio classes representing respective types of sounds of clips, divides a visual signal of the sets of moving image data into shots, and calculates a fuzzy algorithm value of each of the shots from the probabilities of membership of clips corresponding to the shot in each of the audio classes to output, as a scene, continuous shots including adjacent shots having a small fuzzy algorithm value difference therebetween.

For each of the scenes obtained by division by the scene dividing means, the video signal similarity calculation means divides the scene into clips to calculate a characteristic value set of a visual signal for each of the clips from the visual signal based on a color histogram of a predetermined frame of a moving image of the clip, divides the clip into audio signal frames to classify each of the audio signal frames into a speech frame and a background sound frame based on an energy and a spectrum of the audio signal in the audio signal frame to calculate a characteristic value set of the audio signal of the respective clip, and calculates the corresponding similarity between respective scenes based on the characteristic value set of the visual signal and the audio signal in clip unit.

The audio signal similarity calculation means: calculates the similarity based on a bass sound between two scenes by acquiring the bass sound from the audio signal, and by calculating a power spectrum focusing on time and frequency; calculates the similarity based on the instrument other than the bass between the two scenes by calculating, from the audio signal, an energy of frequency indicated by each of pitch names of sounds each having a frequency range higher than that of the bass sound, and by calculating a sum of energy differences between the two scenes; and calculates the similarity based on the rhythm between the two scenes by use of an autocorrelation function in such a way that the autocorrelation function is calculated by separating the audio signal into a high-frequency component and a low-frequency component repeatedly a predetermined number of times by use of a two-division filter bank and then by detecting an envelope from a signal containing the high-frequency component.

A moving image search program searches scenes of moving image data for each similar scene. Specifically, the moving image search program allows a computer to function as: scene dividing means which divides into shots visual signal of set of query moving image data and sets of moving image data stored in a moving image database to output, as a scene, continuous shots having a small characteristic value set difference of an audio signal corresponding to the shots; video signal similarity calculation means which calculates corresponding sets of video signal similarity between respective two scenes of scenes obtained by the division by the scene dividing means according to a characteristic value set of the visual signal and a characteristic value set of the audio signal to generate sets of video signal similarity data; audio signal similarity calculation means which calculates a corresponding audio signal similarity between respective two scenes of the scenes obtained by the division by the scene dividing means to generate sets of audio signal similarity data, the set of the audio signal similarity including a similarity based on a bass sound, a similarity based on an instrument other than the bass, and a similarity based on a rhythm of the audio signal; search means which acquires preference data that is a ratio between preferences to the video signal similarity and the audio signal similarity and determines weighting factors based on the video signal similarity data and the audio signal similarity data, the weight factors including a weighting factor for a similarity between two scenes calculated from the characteristic value set of the visual signal and the characteristic value set of the audio signal, a weighting factor for a similarity based on the bass sound of the audio signal, a weighting factor for a similarity based on the instrument other than the bass of the audio signal, and a weighting factor for a similarity based on the rhythm of the audio signal, to search the scenes based on an integrated similarity obtained by integrating the similarities of each scene weighted by the respective weighting factors to find scenes which have a smaller integrated similarity therebetween than a certain threshold; and display means which acquires and displays coordinates corresponding to the integrated similarity for each of the scenes searched out by the search means.

A moving image search device searches scenes of moving image data for each scene similar to a query moving image data. Specifically, the moving image search device includes: a moving image database for storage of sets of moving image data containing the set of query moving image data; a scene dividing unit configured to divide a visual signal of the sets of moving image data into shots to output, as a scene, continuous shots having a small characteristic value set difference of an audio signal corresponding to the shots; an audio signal similarity calculation unit configured to calculate a corresponding audio signal similarity between respective two scenes of scenes obtained by the division by the scene dividing unit to generate sets of audio signal similarity data, the set of the audio signal similarity including a similarity based on a bass sound, a similarity based on an instrument other than the bass, and a similarity based on a rhythm of the audio signal; and an audio signal similarity search unit configured to search the scenes according to the sets of audio signal similarity data to find a scene having a smaller similarity to each scene of the set of query moving image data than a certain threshold.

An audio signal similarity display unit may be further provided which acquires and displays coordinates corresponding to the similarity for each of the scenes searched out by the audio signal similarity search unit.

The audio signal similarity calculation unit may: calculate the similarity based on a bass sound between any two scenes by acquiring the bass sound from the audio signal, and by calculating a power spectrum focusing on time and frequency; calculate the similarity based on the instrument other than the bass between the two scenes by calculating, from the audio signal, an energy of frequency indicated by each of pitch names of sounds each having a frequency range higher than that of the bass sound, and by calculating a sum of energy differences between the two scenes; and calculate the similarity based on the rhythm between the two scenes by use of an autocorrelation function in such a way that the autocorrelation function is calculated by separating the audio signal into a high-frequency component and a low-frequency component repeatedly a predetermined number of times by use of a two-division filter bank and then by detecting an envelope from a signal containing the high-frequency component.

A moving image search program for searching scenes of moving image data for each scene similar to a query moving image data. Specifically, the moving image search program allows a computer to function as: scene dividing means which divides into shots visual signal of set of query moving image data and moving image data stored in a moving image database to output, as a scene, continuous shots having a small characteristic value set difference of an audio signal corresponding to the shots; audio signal similarity calculation means which calculates a corresponding audio signal similarity between respective two scenes of the scenes obtained by division by the scene dividing means to generate sets of audio signal similarity data, the set of the audio signal similarity including a similarity based on a bass sound, a similarity based on an instrument other than the bass, and a similarity based on a rhythm of the audio signal; and audio signal similarity search means which searches the scenes according to the sets of audio signal similarity data to find a scene having a smaller similarity to each scene of the set of query moving image data than a certain threshold.

The computer may be further allowed to function as: audio signal similarity display means which acquires and displays coordinates corresponding to the similarity for each of the scenes searched out by the audio signal similarity search means .

The audio signal similarity calculation means may calculate the similarity based on a bass sound between any two scenes by acquiring the bass sound from the audio signal, and by calculating a power spectrum focusing on time and frequency; calculate the similarity based on the instrument other than the bass between the two scenes by calculating, from the audio signal, an energy of frequency indicated by each of pitch names of sounds each having a frequency range higher than that of the bass sound, and by calculating a sum of energy differences between the two scenes; and calculate the similarity based on the rhythm between the two scenes by use of an autocorrelation function in such a way that the autocorrelation function is calculated by separating the audio signal into a high-frequency component and a low-frequency component repeatedly a predetermined number of times by use of a two-division filter bank and then by detecting an envelope from a signal containing the high-frequency component.

The present invention can provide a moving image search device and a moving image search program for searching for a scene similar to a query scene in moving image data.

BRIEF DESCRIPTION OF THE DRAWINGS

Fig. 1 is a functional block diagram of a moving image search device according to a preferred embodiment of the present invention.

Fig. 2 shows an example of a screen displaying a query image, the screen example showing the output of the moving image search device.

Fig. 3 shows an example of a screen displaying a similar image, the screen example showing the output of the moving image search device.

Fig. 4 is a hardware configuration diagram of the moving image search device according to the preferred embodiment of the present invention.

Fig. 5 is a flowchart illustrating scene dividing processing by a scene dividing unit according to the preferred embodiment of the present invention.

Fig. 6 is a flowchart illustrating video signal similarity calculation processing by a video signal similarity calculation unit according to the preferred embodiment of the present invention.

Fig. 7 is a flowchart illustrating audio signal similarity calculation processing by an audio signal similarity calculation unit according to the preferred embodiment of the present invention.

Fig. 8 is a flowchart illustrating similarity calculation processing based on a bass sound according to the preferred embodiment of the present invention.

Fig. 9 is a flowchart illustrating similarity calculation processing based on an instrument other than the bass sound according to the preferred embodiment of the present invention.

Fig. 10 is a flowchart illustrating similarity calculation processing based on a rhythm according to the preferred embodiment of the present invention.

Fig. 11 is a flowchart illustrating video signal similarity search processing and video signal similarity display processing according to the preferred embodiment of the present invention.

Fig. 12 is a flowchart illustrating audio signal similarity search processing and audio signal similarity display processing according to the preferred embodiment of the present invention.

Fig. 13 is a diagram showing classification of audio clips in the moving image search device.

Fig. 14 is a table showing signals to be referred to in the classification of audio clips in the moving image search device.

Fig. 15 is a diagram showing processing of calculating an audio clip characteristic value set in the moving image search device according to the preferred embodiment of the present invention.

Fig. 16 is a diagram showing processing of outputting a principal component of the audio clip characteristic value set in the moving image search device according to the preferred embodiment of the present invention.

Fig. 17 is a diagram showing in detail the classification of the audio clips in the moving image search device according to the preferred embodiment of the present invention.

Fig. 18 is a diagram showing processing of dividing a video into shots by a $\chi 2$ test method in the moving image search device according to the preferred embodiment of the present invention.

Fig. 19 is a diagram showing processing of generating a fuzzy set in the moving image search device according to the preferred embodiment of the present invention.

Fig. 20 is a diagram showing a fuzzy control rule in the moving image search device according to the preferred embodiment of the present invention.

Fig. 21 is a diagram showing a fuzzy control rule in the moving image search device according to the preferred embodiment of the present invention.

Fig. 22 is a diagram showing a fuzzy control rule in the moving image search device according to the preferred embodiment of the present invention.

Fig. 23 is a flowchart illustrating visual signal characteristic value set calculation processing in the moving image search device according to the preferred embodiment of the present invention.

Fig. 24 is a flowchart illustrating audio signal characteristic value set calculation processing in the moving image search device according to the preferred embodiment of the present invention.

Fig. 25 is a diagram showing grid points of a three-dimensional DTW in the moving image search device.

Fig. 26 is a diagram showing local paths in the moving image search device.

Fig. 27 is a flowchart illustrating inter-scene similarity calculation processing in the moving image search device according to the preferred embodiment of the present invention.

Fig. 28 is a diagram showing calculation of a similarity between patterns by a general DTW.

Fig. 29 is a diagram showing calculation of a path length by the general DTW.

Fig. 30 is a diagram showing similarity calculation processing based on a bass sound in the moving image search device according to the preferred embodiment of the present invention.

Fig. 31 is a flowchart illustrating similarity calculation processing based on a bass sound in the moving image search device according to the preferred embodiment of the present invention.

Fig. 32 is a table showing frequencies of pitch names.

Fig. 33 is a diagram showing pitch estimation processing in the moving image search device according to the preferred embodiment of the present invention.

Fig. 34 is a diagram showing similarity calculation processing based on an instrument other than the bass sound in the moving image search device according to the preferred embodiment of the present invention.

Fig. 35 is a flowchart illustrating similarity calculation processing based on another instrument in the moving image search device according to the preferred embodiment of the present invention.

Fig. 36 is a diagram showing processing of calculating low-frequency and high-frequency components by use of a two-division filter bank in the moving image search device according to the preferred embodiment of the present invention.

Fig. 37 is a diagram showing the low-frequency and high-frequency components calculated by the two-division filter bank in the moving image search device according to the preferred embodiment of the present invention.

Fig. 38 is a diagram showing a signal before being subjected to full-wave rectification and a signal after being subjected to full-wave rectification in the moving image search device.

Fig. 39 is a diagram showing a process target signal by a low-pass filter in the moving image search device.

Fig. 40 is a diagram showing downsampling in the moving image search device.

Fig. 41 is a diagram showing average value removal processing in the moving image search device.

Fig. 42 is a diagram showing autocorrelation of a Sin waveform.

Fig. 43 is a flowchart illustrating processing of calculating an autocorrelation function and of calculating a similarity of a rhythm function by use of the DTW in the moving image search device according to the preferred embodiment of the present invention.

Fig. 44 is a diagram showing perspective transformation in the moving image search device.

Fig. 45 is a functional block diagram of a moving image search device according to a modified embodiment of the present invention.

Fig. 46 shows an example of a screen displaying similar images, the screen example showing the output of the moving image search device according to the modified embodiment of the present invention.

Fig. 47 is a diagram showing an interface of a preference input unit in the moving image search device according to the modified embodiment of the present invention.

Fig. 48 is a flowchart illustrating display processing according to the modified embodiment of the present invention.

Fig. 49 is a diagram showing query image data inputted to the moving image search device in a similar image search simulation according to an embodiment of the present invention.

Fig. 50 is a graph showing a similarity for each scene between the query image data and moving image data to be searched in the similar image search simulation according to the embodiment of the present invention.

Fig. 51 is a diagram showing a three-dimensional DTW path indicating a similarity to a scene similar to the query image data in the similar image search simulation according to the embodiment of the present invention.

Fig. 52 is a diagram showing query image data inputted to the moving image search device in a similar image search simulation based on a video signal according to the embodiment of the present invention.

Fig. 53 is a diagram showing image data to be searched, which is inputted to the moving image search device, in the similar image search simulation based on the video signal according to the embodiment of the present invention.

Fig. 54 is a graph showing a similarity for each scene between the query image data and moving image data to be searched in the similar image search simulation based on the video signal according to the embodiment of the present invention.

Fig. 55 is a diagram showing a three-dimensional DTW path indicating a similarity to a scene similar to the query image data in the similar image search simulation based on the video signal according to the embodiment of the present invention.

Fig. 56 is a diagram showing query image data inputted to the moving image search device in a similar image search simulation based on an audio signal according to the embodiment of the present invention.

Fig. 57 is a diagram showing image data to be searched, which is inputted to the moving image search device, in the similar image search simulation based on the audio signal according to the embodiment of the present invention.

Fig. 58 is a graph showing a similarity for each scene between the query image data and moving image data to be searched in the similar image search simulation based on the audio signal according to the embodiment of the present invention.

Fig. 59 is a diagram showing a three-dimensional DTW path indicating a similarity to a scene similar to the query image data in the similar image search simulation based on the audio signal according to the embodiment of the present invention.

BEST MODE FOR CARRYING OUT THE INVENTION

Next, with reference to the drawings, embodiments of the present invention will be described. In the following description, the same or similar parts will be denoted by the same or similar reference numerals throughout the drawings.

In a preferred embodiment of the present invention, "shots" mean a continuous image frame sequence between camera switching and next camera switching. CG animation and synthetic videos are also used in the same meaning by replacing the camera with shooting environment settings. Here, breakpoints between the shots are called "cut points". A "scene" means a set of continuous shots having meanings. A "clip" means a signal obtained by dividing a video signal by a predetermined clip length. This clip preferably contains multiple frames. The "frame" means still image data constituting moving image data.

(Preferred Embodiment)

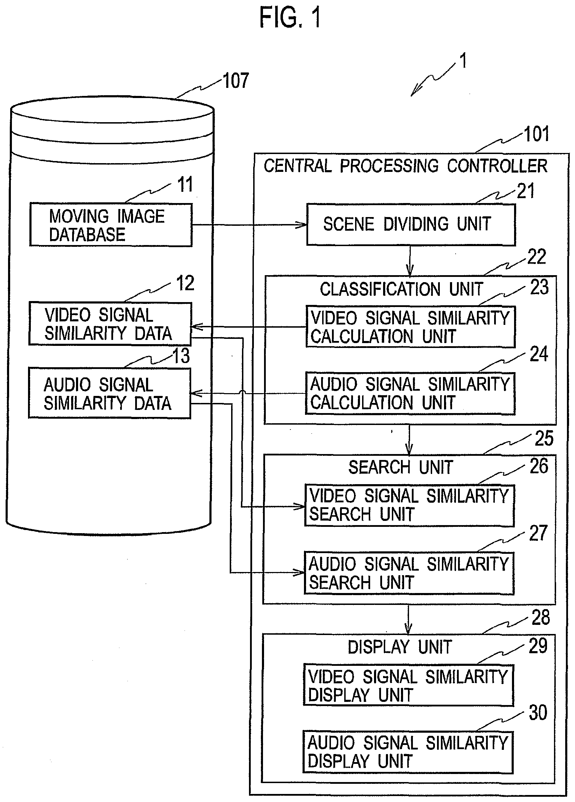

A moving image search device 1 according to the preferred embodiment of the present invention shown in Fig. 1 searches scenes in moving image data for a scene similar to query moving image data. The moving image search device 1 according to the preferred embodiment of the present invention classifies the moving image data in a moving image database 11 into scenes, calculates a similarity between the query moving image data and each of the scenes, and searches for the scene similar to the query moving image data.

To be more specific, a description is given of a system in the preferred embodiment of the present invention for searching for a similar video by calculating a similarity between videos by using a result of analysis of audio and visual signals which are video components, without using metadata. A description is also given of a system for visualizing those search and classification results on a three-dimensional space. The device in the preferred embodiment of the present invention has two functions of similarity calculation on video information for calculating a similarity of the video information and a similarity of music information, the video information based on a video signal including an audio signal and a visual signal, the music information based on the audio signal. Furthermore, the use of these functions enables the device to automatically search for a similar video upon provision of a query video. Moreover, when there is no query video, the use of the above functions also enables the device to automatically classify videos in the database and to present to a user a video similar to a target video. Here, the preferred embodiment of the present invention achieves a user interface which enhances the understanding of the similarity between the videos by a spatial distance with the arrangement of the videos on the three-dimensional space based on similarities between the videos.

The moving image search device 1 according to the preferred embodiment of the present invention shown in Fig. 1 reads multiple videos from the moving image database 11 and allows a scene dividing unit 21 to calculate scenes which are sections containing the same contents for all the videos. Furthermore, the moving image search device 1 causes a classification unit 22 to calculate similarities between all the scenes obtained, causes a search unit 25 to extract moving image data having a high similarity to a query image, and causes a display unit 28 to display the videos in the three-dimensional space in such a way that the videos having similar scenes come close to each other. Note that, when a query video is provided, processing is performed on the basis of the query video. Here, the classification unit 22 in the moving image search device 1 according to the preferred embodiment of the present invention is branched into two units, of (1) a video signal similarity calculation unit 23 based on "search and classification focusing on video information" and (2) an audio signal similarity calculation unit 24 based on "search and classification focusing on music information". These units calculate the similarities by use of different algorithms.

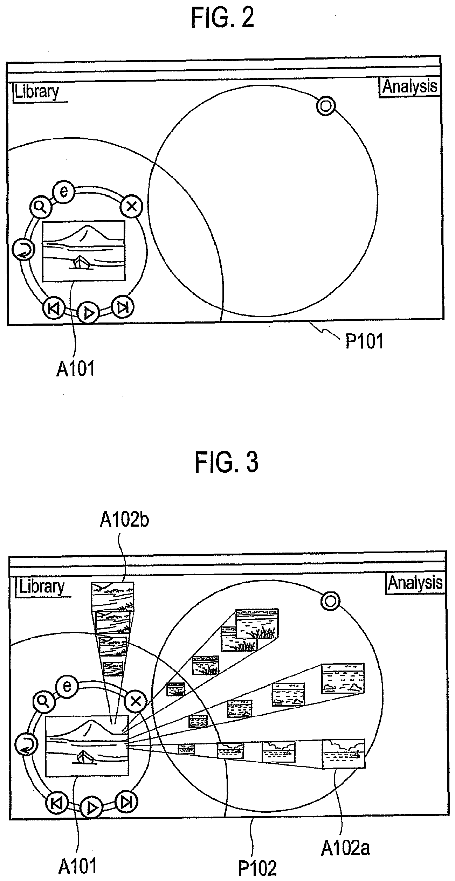

The moving image search device 1 may display display screen P101 and display screen P102 shown in Fig. 2 and Fig. 3 on a display device. The display screen P101 includes a query image display field A101. The moving image search device 1 searches the moving image database 11 for a scene similar to a moving image displayed in the query image display field A101 and displays the display screen P102 on the display device. The display screen P102 includes similar image display fields A102a and A102b. In these similar image display fields A102a and A102b, scenes are displayed which are searched-out scenes of the moving image data from the moving image database 11 and which are similar to the scene displayed in the query image display field A101.

(Hardware Configuration of Dynamic Image Search Device)

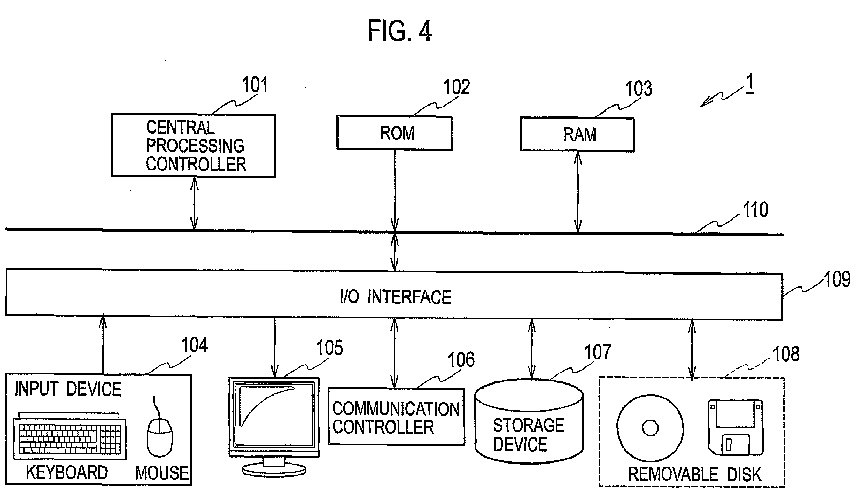

As shown in Fig. 4, in the moving image search device 1 according to the preferred embodiment of the present invention, a central processing controller 101, a ROM (Read Only Memory) 102, a RAM (Random Access Memory) 103 and an I/O interface 109 are connected to each other through a bus 110. An input device 104, a display device 105, a communication controller 106, a storage device 107, and a removable disk 108 are connected to the I/O interface 109.

The central processing controller 101 reads a boot program for starting the moving image search device 1 from the ROM 102 based on an input signal from the input device 104 and executes the boot program. The central processing controller 101 further reads an operating system stored in the storage device 107. Furthermore, the central processing controller 101 is a processor which achieves a series of processing to be described later, including processing to control the various devices based on input signals from the input device 104, the communication controller 106 and the like, to read programs and data stored in the RAM 103, the storage device 107 and the like, to load the programs and data into the RAM 103, and to perform calculation and processing of data based on a command of the program thus read from the RAM 103.

The input device 104 includes input devices, such as a keyboard and a mouse, which are used by an operator to input various operations. The input device 104 creates an input signal based on the operation by the operator and transmits the signal to the central processing controller 101 through the I/O interface 109 and the bus 110. A CRT (Cathode Ray Tube) display, a liquid crystal display or the like is employed for the display device 105, and the display device 105 receives an output signal to be displayed on the display device 105 from the central processing controller 101 through the bus 110 and the I/O interface 109 and displays a result of processing by the central processing controller 101, and the like, for example. The communication controller 106 is a device such as a LAN card and a modem, which connects the moving image search device 1 to the Internet or a communication network such as a LAN. The data pieces transmitted to or received from the communication network through the communication controller 106 are transmitted to and received from the central processing controller 101 as input signals or output signals through the I/O interface 109 and the bus 110.

The storage device 107 is a semiconductor storage device or a magnetic disk device, and stores data and programs to be executed by the central processing controller 101. The removable disk 108 is an optical disk or a flexible disk, and signals read or written by a disk drive are transmitted to and received from the central processing controller 101 through the I/O interface 109 and the bus 110.

In the storage device 107 of the moving image search device 1 according to the preferred embodiment of the present invention, a moving image search program is stored, and the moving image database 11, video signal similarity data 12 and audio signal similarity data 13 are stored as shown in Fig. 1. Moreover, when the central processing controller 101 of the moving image search device 1 reads and executes the moving image search program, the scene dividing unit 21, the classification unit 22, the search unit 25 and the display unit 28 are implemented in the moving image search device 1.

(Functional Blocks of Dynamic Image Search Device)

In the moving image database 11, multiple pieces of moving image data are stored. The moving image data stored in the moving image database 11 is the target to be classified by the moving image search device 1 according to the preferred embodiment of the present invention. The moving image data stored in the moving image database 11 is made up of video signals including audio signals and visual signals.

The scene dividing unit 21 reads the moving image database 11 from the storage device 107, divides a visual signal of the sets of moving image data into shots, and outputs, as a scene, continuous shots having a small difference in characteristic value set with an audio signal corresponding to the shots. To be more specific, the scene dividing unit 21 calculates sets of characteristic value data of each clip from an audio signal of the sets of moving image data and calculates a probability of membership of each clip in each audio class representing the type of sounds. Further, the scene dividing unit 21 divides a visual signal of the sets of moving image data into shots and calculates a fuzzy algorithm value for each shot from a probability of membership of each of the multiple clips corresponding to the shots in each audio class. Furthermore, the scene dividing unit 21 outputs, as a scene, continuous shots having a small difference in fuzzy algorithm value between adjacent shots.

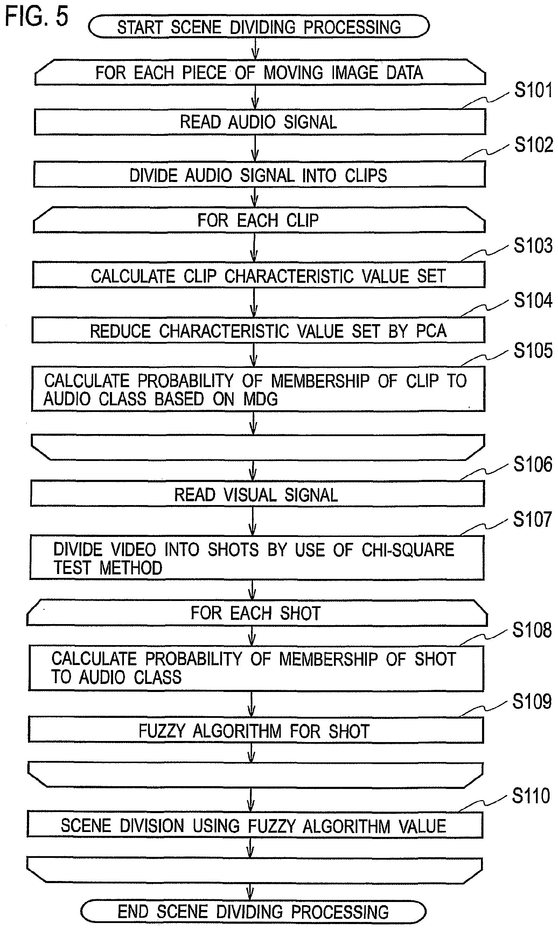

With reference to Fig. 5, processing performed by the scene dividing unit 21 will be briefly described. First, the moving image database 11 is read and processing of Steps S101 to S110 is repeated for each piece of moving image data stored in the moving image database 11.

An audio signal is extracted and read for a piece of the moving image data stored in the moving image database 11 in Step S101, and then the audio signal is divided into clips in Step S102. Next, processing of Steps S103 to S105 is repeated for each of the clips divided in Step S102.

A characteristic value set for the clip is calculated in Step S103, and then parameters of the characteristic value set are reduced by PCA (principal component analysis) in Step S104. Next, on the basis of the characteristic value set after the reduction in Step S104, a probability of membership of the clip in an audio class is calculated based on an MGD. Here, the audio class is a class representing a type of an audio signal, such as silence, speech and music.

After the probability of membership of each clip of the audio signal in the audio class is calculated in Steps S103 to S105, a visual signal corresponding to the audio signal acquired in Step S101 is extracted and read in Step S106. Thereafter, in Step S107, video data is divided into shots according to the chi-square test method. In the chi-square test method, a color histogram not of a speech signal but of the visual signal is used. After the moving image data is divided into the multiple shots in Step S107, processing of Steps S108 and S109 is repeated for each shot.

In Step S108, a probability of membership of each shot in the audio class is calculated. In this event, for the clip corresponding to the shot, the probability of membership in the audio class calculated in Step S105 is acquired. An average value of the probability of membership of each clip in the audio class is calculated as a probability of membership of the shot in the audio class. Furthermore, in Step S109, an output variable of each shot class and values of a membership function are calculated by fuzzy algorithm for each shot.

After the processing of Step S108 and Step S109 is executed for all the shots divided in Step S107, the shots are connected based on the output variable of each shot class and the values of the membership function, which are calculated by the fuzzy algorithm. The moving image data is thus divided into scenes in Step S110.

The classification unit 22 includes the video signal similarity calculation unit 23 and the audio signal similarity calculation unit 24.

The video signal similarity calculation unit 23 calculates a corresponding sets of video signal similarity between respective scenes for each of the scenes obtained through the division by the scene dividing unit 21, according to a corresponding characteristic value set of the respective visual signal and a characteristic value set of the audio signal to generate sets of video signal similarity data 12. Here, the similarity between scenes is a similarity of visual signals between a certain scene and another scene. For example, in a case where n scenes are stored in the moving image database 11, calculation is made on a similarity of visual signals between a first scene and a second scene, a similarity of visual signals between the first scene and a third scene ..., and a similarity of visual signals between the first scene and an nth scene. To be more specific, the video signal similarity calculation unit 23 divides each of the scenes, which are obtained through the division by the scene dividing unit 21, into clips and calculates a characteristic value set of the visual signal from a visual signal for each of the clips based on a color histogram of a predetermined frame of a moving image of each clip. Moreover, the video signal similarity calculation unit 23 divides the clip into frames of the audio signal, classifies the frames of the audio signal into a speech frame and a background music frame based on an energy and a spectrum of the audio signal in each frame, and then calculates a characteristic value set of the audio signal. Furthermore, the video signal similarity calculation unit 23 calculates a similarity between scenes based on the characteristic value set of the visual and audio signals for each clip, and stores the similarity as the video signal similarity data 12 in the storage device 107.

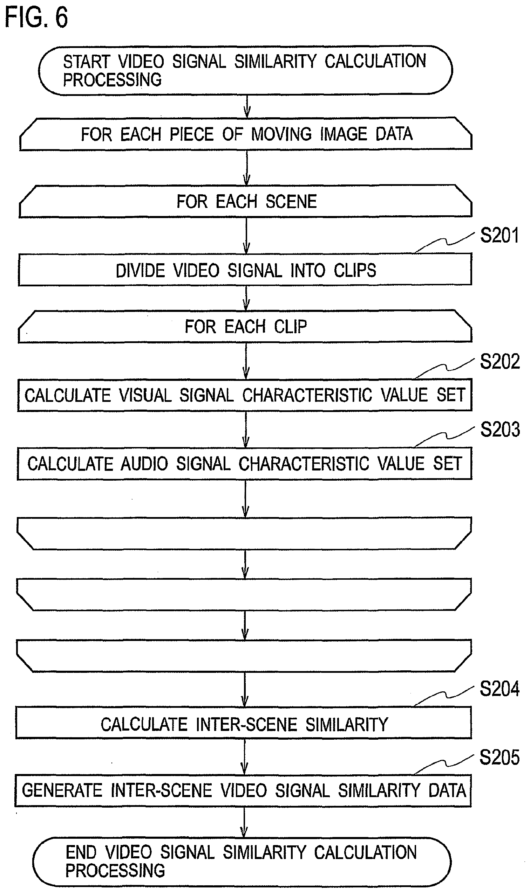

With reference to Fig. 6, a brief description is given of processing performed by the video signal similarity calculation unit 23.

For each of the scenes of the moving image data obtained through the division by the scene dividing unit 21, processing of Step S201 to Step S203 is repeated. First, a video signal corresponding to the scene is divided into clips in Step S201. Next, for each of the clips obtained by the division in Step S201, a characteristic value set of the visual signal is calculated in Step S202 and a characteristic value set of the audio signal is calculated in Step S203.

After the characteristic value set of the visual signal and the characteristic value set of the audio signal are calculated for each of the scenes of moving image data, a similarity between the scenes is calculated in Step S204. Thereafter, in Step S205, the similarity between the scenes calculated in Step S204 is stored in the storage device 107 as the video signal similarity data 12 that is a video information similarity between scenes.

The audio signal similarity calculation unit 24 generates audio signal similarity data 13 by calculating an audio signal similarity between respective scenes for each of the scenes obtained through the division by the scene dividing unit 21, the set of the audio signal similarity including an similarity based on a bass sound, an similarity based on an instrument other than the bass, and an similarity based on a rhythm. The similarities, here, are those between a certain scene and another scene based on the bass sound, the instrument other than the bass, and the rhythm. For example, in a case where n scenes are stored in the moving image database 11, calculation is made on similarities of a first scene to a second scene based on the bass sound, the instrument other than the bass, and the rhythm to a second scene, to a third scene ... and to an nth scene are calculated. To be more specific, in calculation of the similarity based on the bass sound, the audio signal similarity calculation unit 24 acquires a bass sound from the audio signal, calculates a power spectrum focusing on time and frequency, and calculates the similarity based on the bass sound between any two scenes. Moreover, in calculation of the similarity based on the instrument other than the bass, the audio signal similarity calculation unit 24 calculates an energy of frequency indicated by each pitch name, from the audio signal, for a sound having a frequency range higher than that of the bass sound. Thereafter, the audio signal similarity calculation unit 24 calculates a sum of energy differences between the two scenes and thus calculates the similarity based on the instrument other than the bass. Furthermore, in calculation of the similarity based on the rhythm, the audio signal similarity calculation unit 24 repeats, by a predetermined number of times, separation of the audio signal into a high-frequency component and a low-frequency component by use of a two-division filter bank. Thereafter, the audio signal similarity calculation unit 24 calculates an autocorrelation function by detecting an envelope from signals each containing the high-frequency component, and thus calculates the similarity based on the rhythm between the two scenes by use of the autocorrelation function.

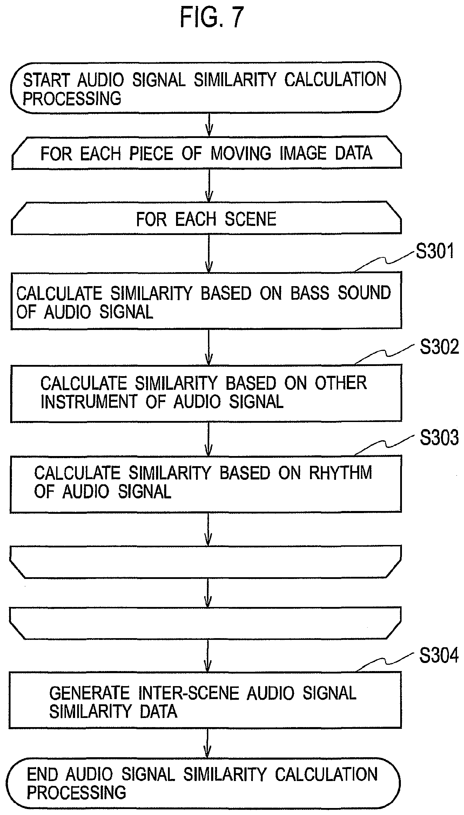

With reference to Fig. 7, a brief description is given of processing performed by the audio signal similarity calculation unit 24.

For any two scenes out of all the scenes obtained by dividing all the moving image data by the scene dividing unit 21, processing of Step S301 to Step S303 is repeated. First, in Step S301, a similarity based on a bass sound of an audio signal corresponding to the scene is calculated. Next, in Step S302, an audio signal similarity based on an instrument other than the bass is calculated. Furthermore, in Step S303, an audio signal similarity based on a rhythm is calculated.

Next, in Step S304, the similarities based on the bass sound, the instrument other than the bass and the rhythm, which are calculated in Step S301 to Step S303, are stored in the storage device 107 as the audio signal similarity data 13 that is sound information similarities between scenes.

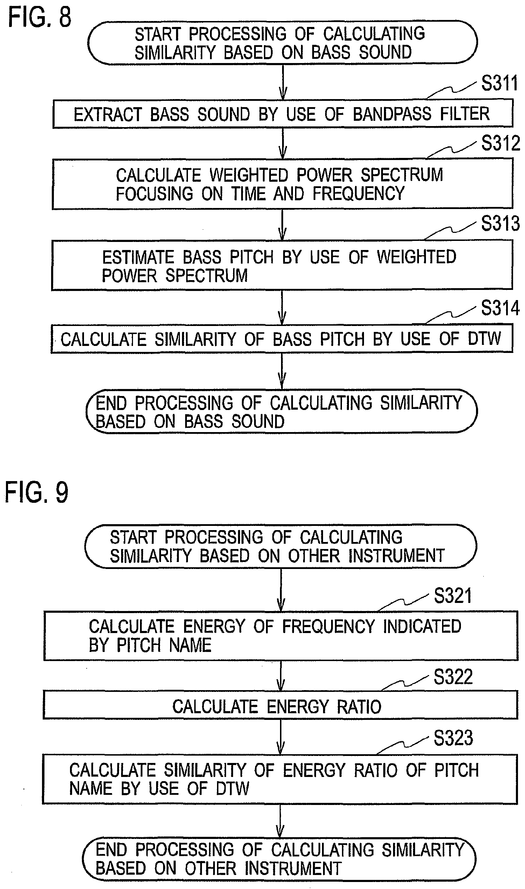

Next, with reference to Fig. 8, a brief description is given of the processing of calculating the bass-sound-based similarity in Step S301 in Fig. 7. First, in Step S311, a bass sound is extracted through a predetermined bandpass filter. The predetermined band here is a band corresponding to the bass sound, which is 40 Hz to 250 Hz, for example.

Next, a weighted power spectrum is calculated by paying attention to the time and frequency in Step S312, and a bass pitch is estimated by use of the weighted power spectrum in Step S313. Furthermore, in Step S314, a bass pitch similarity is calculated by use of a DTW.

With reference to Fig. 9, a brief description is given of the processing of calculating the similarity based on the instrument other than the bass in Step S302 in Fig. 7. First, in Step S321, an energy of frequency indicated by a pitch name is calculated. Here, for frequency energies having pitch names and which is higher than that for the bass sound, the frequency energy indicated by each of the pitch names is calculated.

Next, in Step S322, a ratio of the frequency energy indicated by each pitch name to the energy of all the frequency ranges is calculated. Furthermore, in Step S323, an energy ratio similarity of the pitch names is calculated by use of the DTW.

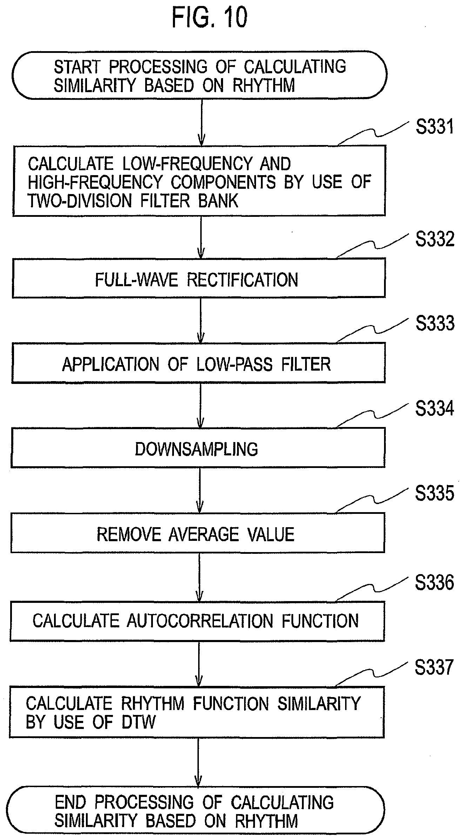

With reference to Fig. 10, a brief description is given of the processing of calculating the similarity based on the rhythm in Step S303 in Fig. 7. First, in Step S331, a low-frequency component and a high-frequency component are calculated by repeating separation by a predetermined number of times with use of the two-division filter bank. Thus, a rhythm composed of multiple types of instrument sounds can be estimated.

Furthermore, by executing processing of Step S332 to Step S335, an envelope is detected to acquire an approximate shape of each signal. Specifically, a waveform acquired in Step S331 is subjected to full-wave rectification in Step S332, and a low-pass filter is applied in Step S333. Furthermore, downsampling is performed in Step S334 and an average value is removed in Step S335.

After the detection of the envelope is completed, an autocorrelation function is calculated in Step S336 and a rhythm function similarity is calculated by use of the DTW in Step S337 .

The search unit 25 includes a video signal similarity search unit 26 and an audio signal similarity search unit 27. The display unit 28 includes a video signal similarity display unit 29 and an audio signal similarity display unit 30.

The video signal similarity search unit 26 searches for a scene having an inter-scene similarity smaller than a certain threshold according to the sets of video signal similarity data 12. The video signal similarity display unit 29 acquires coordinates corresponding to the similarity for each of the scenes searched out by the video signal similarity search unit 26, and then displays the coordinates.

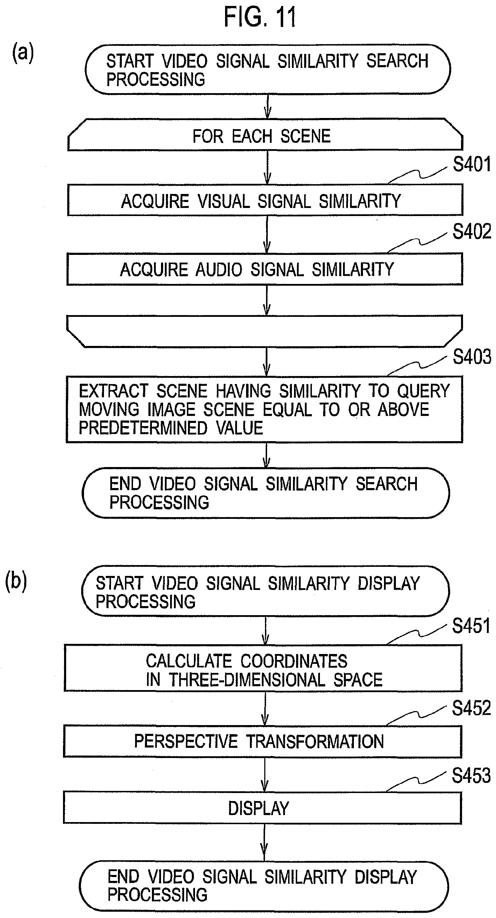

With reference to Fig. 11, a description is given of processing performed by the video signal similarity search unit 26 and the video signal similarity display unit 29.

With reference to Fig. 11 (a), processing performed by the video signal similarity search unit 26 will be described. First, the video signal similarity data 12 is read from the storage device 107. Moreover, for each of the scenes obtained through the division by the scene dividing unit 21, a visual signal similarity to a query moving image scene is acquired in Step S401. Furthermore, an audio signal similarity to the query moving image scene is acquired in Step S402.

Next, in Step S403, a scene having any one of the similarities which is equal to or greater than a predetermined value is searched for, the any one of the similarities acquired in Step S401 and Step S402. Here, the description is given of the case where threshold processing is performed based on the similarity. However, a predetermined number of scenes may be searched for in descending order of similarity.

With reference to Fig. 11 (b), processing performed by the video signal similarity display unit 29 will be described. In Step S451, coordinates in a three-dimensional space are calculated for each of the scenes searched out by the video signal similarity search unit 26. Here, axes in the three-dimensional space serve as three coordinates obtained by a three-dimensional DTW. In Step S452, the coordinates of each scene thus calculated in Step S451 are perspective-transformed to determine a size of a moving image frame of each scene. In Step S453, the coordinates are displayed on the display device.

The audio signal similarity search unit 27 searches for a scene having an audio signal similarity smaller than a certain threshold according to the audio signal similarity data 13. The audio signal similarity display unit 30 acquires coordinates corresponding to the similarity for each of the scenes searched out by the audio signal similarity search unit 27, and then displays the coordinates.

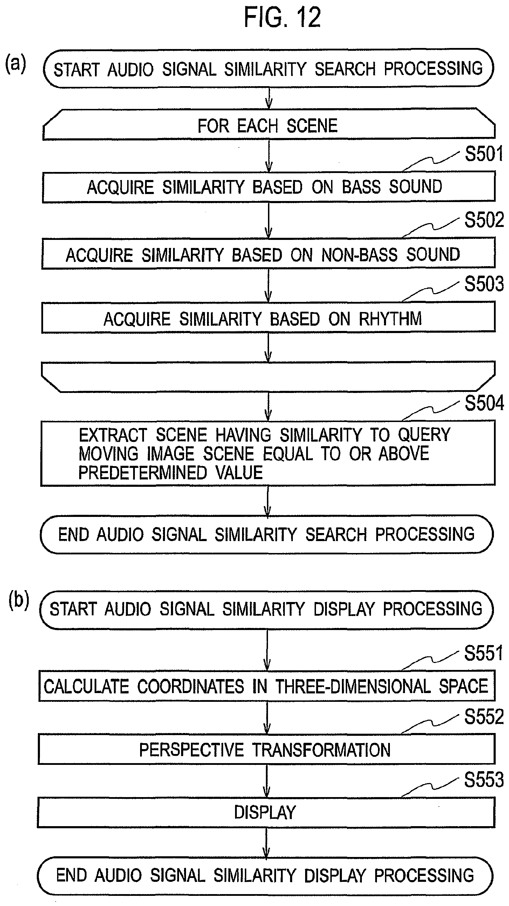

With reference to Fig. 12, a description is given of processing performed by the audio signal similarity search unit 27 and the audio signal similarity display unit 30.

With reference to Fig. 12 (a), processing performed by the audio signal similarity search unit 27 will be described. First, the audio signal similarity data 13 is read from the storage device 107. Moreover, for each of the scenes obtained through the division by the scene dividing unit 21, a bass-sound-based similarity to a query moving image scene is acquired in Step S501. Thereafter, in Step S502, a non-bass-sound-based similarity to the query moving image scene is acquired. Subsequently, in Step S501, a similarity based on a rhythm to the query moving image scene is acquired.

Next, in Step S504, a scene having any one of the similarities which is equal to or greater than a predetermined value is searched for, the similarities acquired in Steps S501 to S503. Here, a description is given of the case where threshold processing is performed based on the similarity. However, a predetermined number of scenes may be searched for in descending order of similarity.

With reference to Fig. 12 (b), processing performed by the audio signal similarity display unit 30 will be described. In Step S551, coordinates in a three-dimensional space are calculated for each of the scenes searched out by the audio signal similarity search unit 27. Here, axes in the three-dimensional space are similarities based on a bass sound, based on an instrument other than the bass and based on a rhythm. In Step S552, the coordinates of each scene thus calculated in Step S551 are perspective-transformed to determine a size of a moving image frame of each scene. In Step S553, the coordinates are displayed on the display device.

The blocks shown in Fig. 1 will be described in detail below.

(Scene Dividing Unit)

Next, processing performed by the scene dividing unit 21 shown in Fig. 1 will be described.

The scene dividing unit 21 divides a video signal into scenes for calculating a similarity between videos in the database. In the preferred embodiment of the present invention, scenes can be calculated by using both a moving image frame and an audio signal of the video signal obtained from the moving image database 11.

The scene dividing unit 21 first divides the audio signal into small sections called clips, calculates a characteristic value set for each of the sections, and reduces the characteristic value set by PCA (principal component analysis) . Next, audio classes (silence, speech, music, and the like) representing types of the audio signal are prepared, and a probability of each of the clips belonging to any of the above classes, that is, a probability of membership is obtained by use of an MGD. Furthermore, in the preferred embodiment of the present invention, a visual signal (frame) in a video is divided, by use of a $\chi^2$ test, into shots which are sections continuously shot with one camera. Moreover, a probability of membership of each shot in the audio class is calculated by obtaining an average probability of membership of the audio signal clips contained in each shot in the audio class. In the preferred embodiment of the present invention, a fuzzy algorithm value of a shot class representing a type of each shot is calculated by performing fuzzy algorithm for each shot based on the obtained probability of membership. Finally, a difference in a fuzzy algorithm value between all adjacent shots is obtained and continuous sections having a small difference in the fuzzy algorithm value are obtained as one scene.

Thus, a degree (fuzzy algorithm value) of how much the shot to be processed belongs to each shot class is obtained. Depending on the type of the audio signal, a shot classification result may vary with various subjective evaluations of the users . For example, assume a case where a speech with background music is to be classified and the volume of the background music is very low. Here, whether to classify the audio signal as the "speech with music" or to classify as the "speech", which is the main, differs depending on a user request. Therefore, by providing the shots with fuzzy algorithm values of all shot clusters and finally obtaining a difference therebetween, scene division in consideration of the subjective evaluation of the user can be performed.

Here, the scene dividing 21 according to the preferred embodiment of the present invention classifies the signals to be processed into the audio classes. Here, besides audio signals including a single audio class such as music or speech, there are a large number of audio signals each of which falls within multiple types of audio classes, such as speech in an environment where there is music in the background (speech with noise) and speech in an environment where there is noise in the background (speech with noise). It is difficult to draw the line for determining into which audio class such an audio signal is classified. Therefore, in the preferred embodiment of the present invention, the classification is performed by accurately calculating a degree of how much the process target signal belongs to each audio class by use of an inference value in the fuzzy algorithm.

As to the scene dividing unit 21 according to the preferred embodiment of the present invention, a specific algorithm will be described.

In the preferred embodiment of the present invention, degrees of how much the audio signal belongs to the four types of audio classes defined below (hereinafter referred to as probabilities of membership) are first calculated by use of PCA and MGD.

- silence (Si)
- speech (Sp)
- music (Mu)
- noise (No)

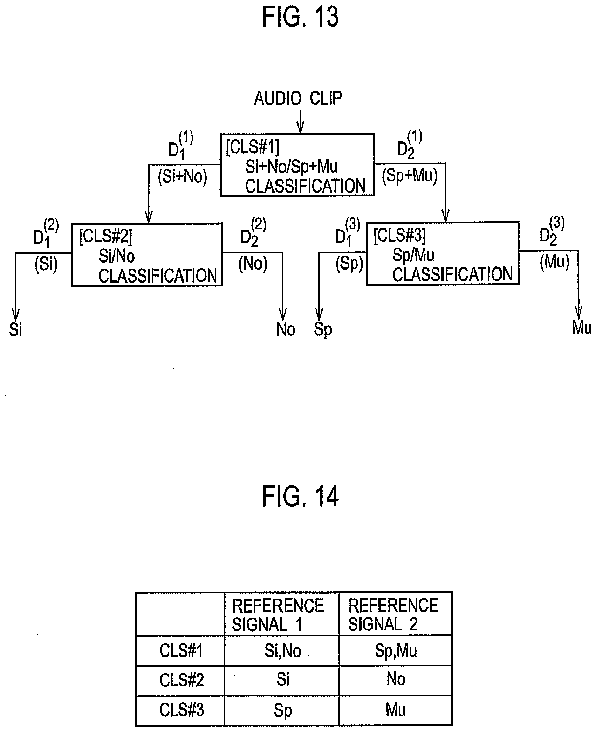

The probability of membership in each of the audio classes is calculated by subjecting three classification processes "CLS#1" to "CLS#3" shown in Fig. 13, and then by using the classification results thereof. Here, the classification processes CLS#1 to CLS#3 are all performed by the same procedures. Specifically, on a process target signal and two kinds of reference signals, three processes of "Calculation of Characteristic value set", "Application of PCA" and "Calculation of MGD" are performed. However, as shown in Fig. 14, each of the reference signals includes an audio signal belonging to any one of (or more than one of) Si, Sp, Mu, and No according to the purpose of the classification process . Each of the above processes will be described below.

First, a description is given of processing of calculating a characteristic value set of an audio signal clip. This processing corresponds to Step S103 in Fig. 5.

The scene dividing unit 21 calculates a characteristic value set of the audio signal in frame unit (frame length: $W_f$) and a characteristic value set in clip unit (clip length: $W_c$, however $W_c > W_f$) described below from an audio process target signal and the two kinds of reference signals shown in Fig. 14.

- Characteristic value set in Frame Unit:
  Volume, Zero Cross Rate, Pitch, Frequency Center Position, Frequency Bandwidth, Sub-Band Energy Rate
- Characteristic value set in Clip Unit:
  Non-Silence Rate, Zero Rate

Furthermore, the scene dividing unit 21 calculates an average value and a standard deviation of the characteristic value set of the audio signal in frame unit within clips, and adds those values thus calculated to the characteristic value set in clip unit.

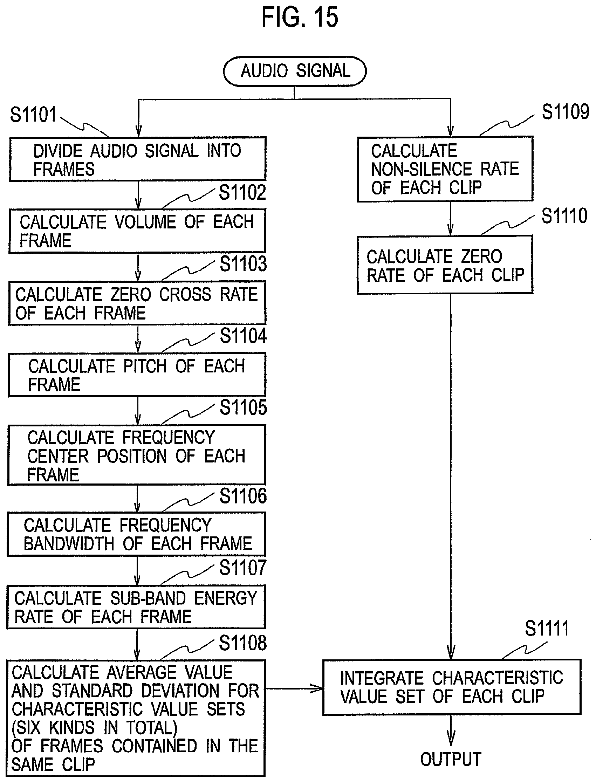

This processing will be described with reference to Fig. 15.

First, in Step S1101, one clip of the audio signal is divided into audio signal frames. Next, for each of the audio signal frames thus divided in Step S1101, a volume, a zero cross rate, a pitch, a frequency center position, a frequency bandwidth, and a sub-band energy rate are calculated in Step S1102 to Step S1107. Thereafter, in Step S1108, an average value and a standard deviation of the characteristic value sets of the audio signal frames contained in one clip are calculated, the characteristic value set including the volume, zero cross rate, pitch, frequency center position, frequency bandwidth, sub-band energy rate.

Meanwhile, for one clip of the audio signal, a non-silence rate is calculated in Step S1109 and a zero rate is calculated in Step S1110.

In Step S1111, the characteristic value set including the average value, standard deviation, non-silence rate, and zero rate, which are calculated in Step S1108 to Step S1110, is integrated and outputted as the characteristic value set of the audio signal in the clip.

Next, characteristic value set reduction processing by PCA will be described. This processing corresponds to Step S104 in Fig. 5.

The scene dividing unit 21 normalizes the characteristic value set calculated from the clip of the process target signal and the characteristic value set in clip unit calculated from the two kinds of reference signals, and then subjects the normalized characteristic value set to PCA. The performance of the PCA allows the reduction in influence between the characteristic value set highly correlated to each other. Meanwhile, a principal component having an eigenvalue of 1 or more, among those obtained by the PCA is used in subsequent processing. The use thereof allows the prevention of an increase in computational complexity and of a fuse problem.

The reference signals used here vary depending on classes into which the signals are to be classified. For example, in "CLS#1" shown in Fig. 13, the signals are classified into Si+No and Sp+Mu. One of the two kinds of reference signals used in this event is a signal obtained by attaching a signal composed only of silence (Si) and a signal composed only of noise (No) in a time axis direction so as not to overlap with each other. The other reference signal is a signal obtained by attaching a signal composed only of speech (Sp) and a signal composed only of music (Mu) in the time axis direction so as not to overlap with each other. Moreover, two kinds of reference signals used in "CLS#2" are a signal composed only of silence (Si) and a signal composed only of noise (No). Similarly, two kinds of reference signals used in "CLS#3" are a signal composed only of speech (Sp) and a signal composed only of music (Mu).

Here, the principal component analysis (PCA) is a technique of expressing a covariance (correlation) among multiple variables by a smaller number of synthetic variables. The PCA can obtain a solution of an eigenvalue problem of a covariance matrix. In the preferred embodiment of the present invention, the performance of the principal component analysis on the characteristic value set obtained from the process target signal reduces influences between the characteristic value set highly correlated to each other. Moreover, a principal component having an eigenvalue of 1 or more is selected from those obtained to be used. The use thereof prevents an increase in computational complexity and a fuse problem.

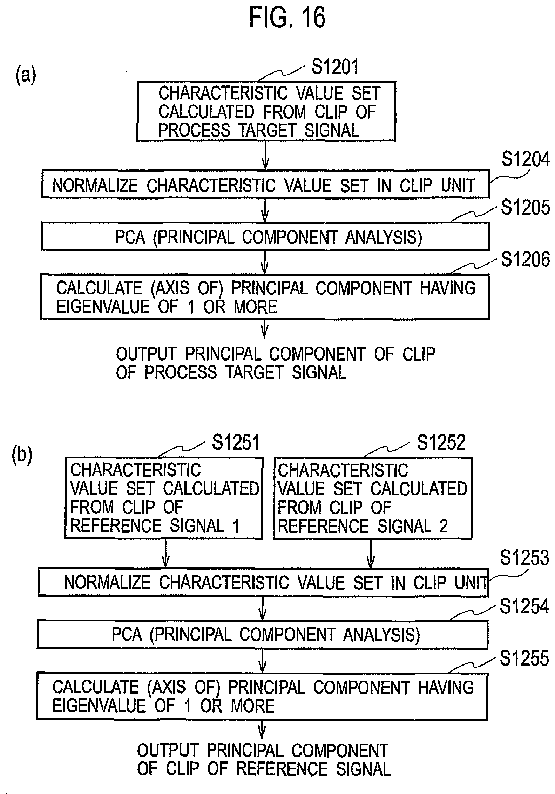

This processing will be described with reference to Fig. 16. Fig. 16 (a) shows processing of outputting a principal component of a clip of a process target signal, and Fig. 16 (b) shows processing of outputting a principal component of clips of a reference signal 1 and a reference signal 2.

The processing shown in Fig. 16 (a) will be described. First, in Step S1201, the characteristic value set of the clip of the process target signal is inputted, the characteristic value set being calculated by the processing described with reference to Fig. 15.

Next, the characteristic value set in clip unit is normalized in Step S1204 and then subjected to PCA (principal component analysis) in Step S1205. Furthermore, an axis of a principal component having an eigenvalue of 1 or more is calculated in Step S1206 and the principal component of the clip of the process target signal is outputted.

The processing shown in Fig. 16 (b) will be described. First, a characteristic value set calculated from the clip of the reference signal 1 is inputted in Step S1251 and a characteristic value set calculated from the clip of the reference signal 2 is inputted in Step S1252.

Next, the characteristic value set in clip unit of the reference signals 1 and 2 are normalized in Step S1253 and then subjected to PCA (principal component analysis) in Step S1254. Furthermore, an axis of a principal component having an eigenvalue of 1 or more is calculated in Step S1255 and one principal component is outputted for the reference signals 1 and 2.

The reference signal 1 and reference signal 2 inputted here vary depending on the classification processing as described above. The processing shown in Fig. 16 (b) is previously executed for all the reference signal 1 and reference signal 2 used in their corresponding classification processes in CLS#1 to CLS#3 to be described later.

Next, a description is given of processing of calculating a probability of membership of a clip in an audio class by use of an MGD. This processing corresponds to Step S105 in Fig. 5.

An MGD is calculated by use of the principal component obtained by the characteristic value set reduction processing using PCA.

Here, the MGD (Mahalanobis' generalized distance) is a distance calculated based on a correlation among many variables . In MGD, a distance between the process target signal and a characteristic vector group of reference signals is calculated by use of a Mahalanobis' generalized distance. Thus, a distance taking into consideration a distribution profile of the principal components obtained by the principal component analysis can be calculated.

First, a distance represented by the following Expression 1 between a characteristic vector $f^{(c)}$ (c= 1, ..., 3; corresponding to CLS#1 to CLS#3) of the process target signal, which consists of the principal component obtained by the characteristic value set reduction processing using PCA, and a similarly calculated characteristic vector group of the two kinds of reference signals is calculated by the following Equation 1-1.

[Expression 1]

$$\mathrm{MGD}\ d_i'^{(c)}$$

(i= 1, 2; corresponding to reference signals 1 and 2)

[Expression 2]

$$d_i^{(c)} = \left(f^{(c)} - m_i^{(c)}\right)^{\mathbf{T}} S_i'^{(c)^{-1}} \left(f^{(c)} - m_i^{(c)}\right)$$

(Equation 1-1)

Note, however, that the following Expression 3 represents an average vector of characteristic vectors and a covariance matrix, which are calculated from the reference signal i.

[Expression 3]

$$m_i^{(c)} \quad \text{and} \quad S_i^{(c)}$$

This distance represented by the following Expression 4 serves as a distance scale taking into consideration the distribution profile of the principal components in an eigenspace.

[Expression 4]

$$\mathrm{MGD}\ d_i^{(c)}$$

Therefore, by use of the following Expression 5, a degree of membership, which is represented by the following Expression 6, of the process target signal to the same cluster as that of the reference signals 1 and 2 is defined by the following Equation 1-2.

[Expression 5]

$$\mathrm{MGD}\ d_i^{(c)}$$

[Expression 6]

$$D_i^{(c)}$$

[Expression 7]

$$D_i^{(c)} = 1 - \frac{d_i^{(c)}}{d_1^{(c)} + d_2^{(c)}}$$

(Equation 1-2)

The following membership degree represented by the following Expression 8 is obtained by performing the above three processes in the classification processes CLS#1 to CLS#3.

[Expression 8]

$$D_i^{(c)} \ (i = 1, 2 \ ; \ c = 1, \cdots, 3)$$

The following probability of membership, represented by the following Expression 9, to each of the audio classes (Si, Sp, Mu and No) is defined by the following Equations 1-3 to 1-6.

[Expression 9]

$$P_{l_1}$$

($l_1 = 1, ..., 4$; corresponding to Si, Sp, Mu, and No, respectively)
[Expression 10]

$$P_1 = D_1^{(1)} D_1^{(2)}$$

(Equation 1-3)

$$P_2 = D_2^{(1)} D_1^{(3)}$$

(Equation 1-4)

$$P_3 = D_2^{(1)} D_2^{(3)}$$

(Equation 1-5)

$$P_4 = D_1^{(1)} D_2^{(2)}$$

(Equation 1-6)

In each of the above equations, the following Expression 11 is regarded as a probability of the process target signal to be classified into the same cluster as the reference signals 1 and 2 in the classification processes CLS#1 to CLS#3. The probability of the process target signal to belong to each of the audio classes Si, Sp, Mu and No is calculated by integrating those probabilities.

[Expression 11]

$$D_i^{(c)}$$

Therefore, this probability of membership, represented by the following Expression 12, makes it possible to show how much the process target audio signal belongs to which audio class.

[Expression 12]

$$P_{l_1} \ (l_1 = 1, \cdots, 4)$$

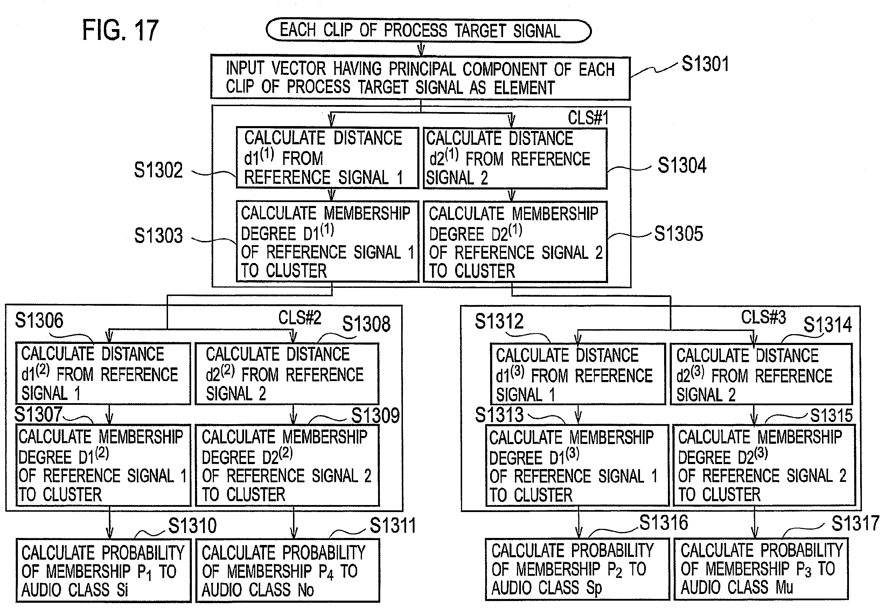

The above processing will be described with reference to Fig. 17. This processing is executed for each clip of the process target signal.

First, in Step S1301, a vector which consists of a principal component of each clip of the process target signal is inputted. The vector inputted here is data calculated by the processing shown in Fig. 16 (a) described above.

Next, as the classification process of CLS#1, processing of Step S1302 to Step S1305 is performed. Specifically, a distance between the process target signal and the reference signal 1 is calculated in Step S1302, and then a degree of membership of the process target signal to the cluster of the reference signal 1 is calculated in Step S1303. Moreover, a distance between the process target signal and the reference signal 2 is calculated in Step S1304, and then a degree of membership of the process target signal to the cluster of the reference signal 2 is calculated in Step S1305.

Furthermore, as the classification process of CLS#2, processing of Step S1306 to Step S1309 is performed. Specifically, a distance between the process target signal and the reference signal 1 is calculated in Step S1306, and then a degree of membership of the process target signal to the cluster of the reference signal 1 is calculated in Step S1307. Moreover, a distance between the process target signal and the reference signal 2 is calculated in Step S1308, and then a degree of membership of the process target signal to the cluster of the reference signal 2 is calculated in Step S1309.

Here, in Step S1310, a probability of membership of the process target signal $P_1$ in the audio class Si is calculated based on the membership degrees calculated in Step S1303 and Step S1307. Similarly, in Step S1311, a probability of membership $P_4$ of the process target signal in the audio class No is calculated based on the membership degrees calculated in Step S1303 and Step S1309.

Meanwhile, as the classification process of CLS#3, processing of Step S1312 to Step S1315 is performed. Specifically, a distance between the process target signal and the reference signal 1 is calculated in Step S1312, and then a degree of membership of the process target signal to the cluster of the reference signal 1 is calculated in Step S1313. Moreover, a distance between the process target signal and the reference signal 2 is calculated in Step S1314, and then a degree of membership of the process target signal to the cluster of the reference signal 2 is calculated in Step S1315.

Here, in Step S1316, a probability of membership $P_2$ in the audio class Sp is calculated based on the membership degrees calculated in Step S1305 and Step S1313. Similarly, in Step S1317, a probability of membership $P_3$ in the audio class Mu is calculated based on the membership degrees calculated in Step S1305 and Step S1315.

Next, a description is given of processing of dividing a video into shots by use of a $\chi 2$ test method. This processing corresponds to Step S107 in Fig. 5.

In the preferred embodiment of the present invention, shot cuts are obtained by use of a division $\chi 2$ test method. In the division $\chi 2$ test method, first, a moving image frame is divided into sixteen ($4 \times 4 = 16$) rectangular regions of the same size and a color histogram H (f, r, b) of sixty-four colors is created for each of the regions. Here, f represents a frame number of a video signal, r represents a region number, and b represents the number of bins in the histogram. Based on the color histograms of two adjacent moving image frames , evaluated values $E_r$ (r= 1, ..., 16) are calculated by the following equation.

[Expression 13]

$$E_r = \sum_{b=0}^{63} \frac{\{H(f,r,b) - H(f-1,r,b)\}^2}{H(f,r,b)}$$

(Equation 1-7)

Furthermore, a sum $E_{sum}$ of eight smaller values among the calculated sixteen values $E_r$ (r= 1, ..., 16) is calculated, and it is determined that a shot cut is present at a time when $E_{sum}$ takes a value greater than a preset threshold.

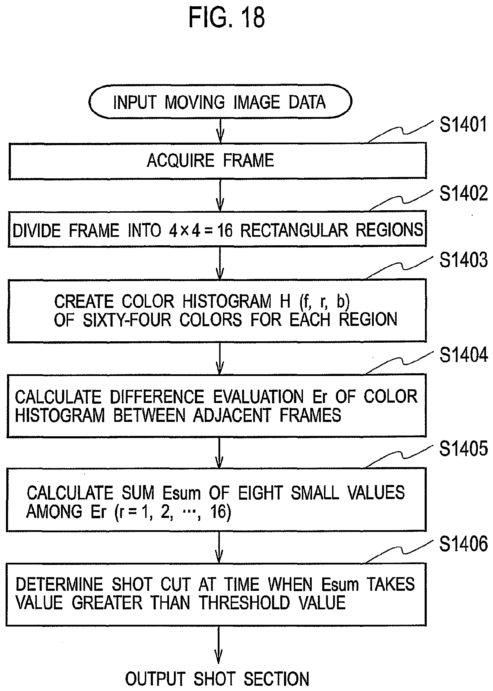

This processing will be described with reference to Fig. 18.

First, in Step S1401, data of a visual signal frame is acquired. Next, the visual signal frame acquired in Step S1401 is divided into sixteen ($4 \times 4 = 16$) rectangular regions in Step S1402, and a color histogram H (f, r, b) of sixty-four colors is created for each of the regions in Step S1403.

Furthermore, in Step S1404, difference evaluations $E_r$ of the color histograms between the visual signal frames adjacent to each other are calculated. Thereafter, a sum $E_{sum}$ of eight smaller evaluations among the difference evaluations $E_r$ calculated for the respective regions is calculated.

In Step S1406, a shot cut is determined at a time when $E_{sum}$ takes a value greater than a threshold and a shot section is outputted.

As described above, in the preferred embodiment of the present invention, the time at which the color histograms are significantly changed between adjacent sections is determined as the shot cut, thereby outputting the shot section.

Next, a description is given of processing of calculating a probability of membership of each shot in the audio class. This processing corresponds to Step S108 in Fig. 5.

In the preferred embodiment of the present invention, first, an average value, which is represented by the following Expression 14, of probabilities of membership to the audio classes in a single shot is calculated by the following Equation 1-8.

$$[\text{Expression 14}]$$

$$x_{l_1}$$

$$(l_1 = 1, \ldots, 4;$$

corresponding to Si, Sp, Mu, and No, respectively)

[Expression 15]

$$x_{l_1} = \frac{1}{N} \sum_{k=0}^{N-1} P_{l_1}(k)$$

$$(\text{Equation 1-8})$$

Note, however, that N represents a total number of clips in the shot, k represents a clip number in the shot, and the following Expression 16 represents a probability of membership, which is represented by the following Expression 17, in a kth clip.

$$[\text{Expression 16}]$$

$$P_{l_1}(k) \; (l_1 = 1, \cdots, 4)$$

$$[\text{Expression 17}]$$

$$P_{l_1}$$

The observation of the four average values represented by the following Expression 18 shows which kind of audio signal, silence, speech, music, or noise, is contained the most in the shot to be classified.

$$[\text{Expression 18}]$$

$$x_{l_1} \; (l_1 = 1, \cdots, 4)$$

However, since these kinds of audio signal do not include classes such as speech with music and speech with noise, there is a risk that classification accuracy is poor when speech with music or speech with noise is contained in the shot. Incidentally, a probability of membership calculated by the conventional technique shows a degree of how much each clip of an audio signal belongs to each audio class. With this probability of membership, not only an probability of membership in the audio class of speech but also probabilities of membership to the audio classes of music and noise show high values when the audio signal of speech with music or speech with noise is to be processed. Therefore, by performing fuzzy algorithm for the following Expression 19, each shot is classified into six kinds of shot classes including silence, speech, music, noise, speech with music, and speech with noise.

[Expression 19]

$$x_{l_1}$$

In the preferred embodiment of the present invention, first, the process target signal is classified into four audio classes, including silence, speech, music, and noise. However, the classification accuracy is poor with only these four kinds of classes, when multiple kinds of audio signals are mixed, such as speech in an environment where there is music in the background (speech with music) and speech in an environment where there is noise in the background (speech with noise). To address this situation, in the preferred embodiment of the present invention, the audio signals are classified into six audio classes which newly include the class of speech with music and the class of speech with noise, in addition to the above four audio classes. This improves the classification accuracy, thereby allowing a further accurate search of the similar scenes.

First, eleven levels of fuzzy variables listed below are prepared.

NB (Negative Big)
NBM (Negative Big Medium)
NM (Negative Medium)
NSM (Negative Small Medium)
NS (Negative Small)
ZO (Zero)
PS (Positive Small)
PSM (Positive Small Medium)
PM (Positive Medium)
PBM (Positive Big Medium)
PB (Positive Big)

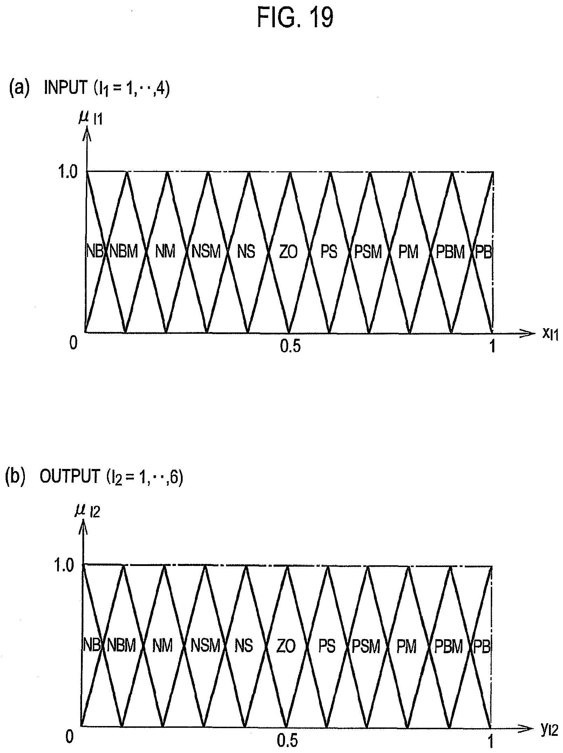

Here, a triangular membership function defined by the following Equation 1-9 is set for each of the fuzzy variables, and a fuzzy set is generated by assigning the variables in such a way as shown in Fig. 19.
[Expression 20]

$$\mu(x_{l_1}) = \max\left(0, \frac{1}{a}(-|x_{l_1} - b| + a)\right)$$

(Equation 1-9)

Note, however, that a= 0.1 and b= {0, 0.1, ..., 0.9, 1.0}. The value represented by the following Expression 21, which is calculated by (Equation 1-8), is assigned to (Equation 1-9), thereby calculating values of the membership function, which are represented by the following Expression 22, for each of the input variables.

[Expression 21]

$$x_{l_1} \ (l_1 = 1, \cdots, 4)$$

[Expression 22]

$$\mu(x_{l_1}) \ (l_1 = 1, \cdots, 4)$$

Next, fuzzy algorithm processing for each shot will be described. This processing corresponds to Step S109 in Fig. 5.

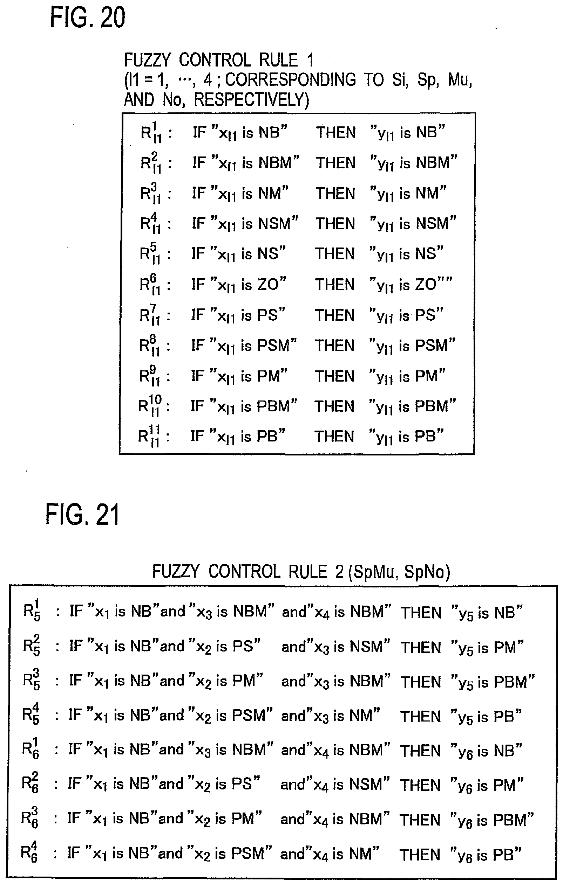

In the preferred embodiment of the present invention, fuzzy control rules shown in Fig. 20 and Fig. 21, which are represented by the following Expression 24, are applied to the input variables set by the processing of calculating the probability of membership of each shot in the audio class and to the values of the membership function represented by the following Expression 23.

[Expression 23]

$$\mu(x_{l_1})$$

[Expression 24]

$$R_{l_2}^{j}$$

($l_2$= 1, ..., 6; corresponding to Si, Sp, Mu, No, SpMu, and SpNo,) respectively)

Thus, output variables of the respective shot classes, which are represented by the following Expression 25, and the values of the membership function, which are represented by the following Expression 26, are calculated.

[Expression 25]

$$y_{l_2}$$

[Expression 26]

$$\mu(y_{l_2})$$

Next, a description will be given of scene dividing processing using a fuzzy algorithm value. This processing corresponds to Step S110 in Fig. 5.

In the preferred embodiment of the present invention, a video signal is divided into scenes by use of a degree of how much each shot belongs to each shot class, the degree being calculated by the fuzzy algorithm processing and being represented by the following Expression 27.

[Expression 27]

$$\mu_{l_2}$$

Here, assuming that $\eta$ is a shot number, a distance D ($\eta_1$, $\eta_2$) between adjacent shots is defined by the following Equation 1-10.

[Expression 28]

$$D(\eta_1, \eta_2) = \sum_{l_2=1}^{6} |\mu_{l_2}(\eta_1) - \mu_{l_2}(\eta_2)|$$

(Equation 1-10)

When the distance D ($\eta_1$, $\eta_2$) shows a value greater than a previously set threshold Th$_D$, it is determined that a similarity between the shots is low and there is a scene cut on a boundary between the shots. On the other hand, when the distance D ($\eta_1$, $\eta_2$) shows a value smaller than the threshold Th$_D$, it is determined that the similarity between the shots is high and the shots belong to the same scene. Thus, in the preferred embodiment of the present invention, scene division taking into consideration the similarity between shots can be performed.

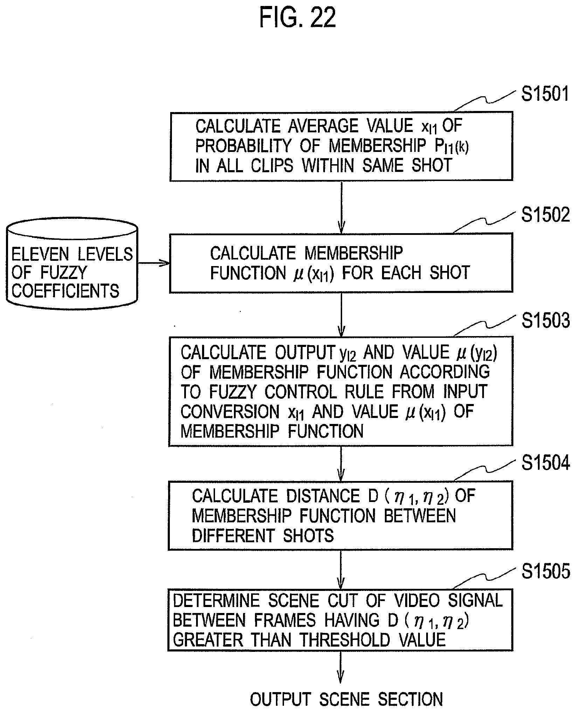

Here, with reference to Fig. 22, a description will be given of the processing of calculating the probability of membership of each shot in the audio class, the fuzzy algorithm processing for each shot, and the scene dividing processing using a fuzzy algorithm value.

First, in Step S1501, an average probability of membership for all clips of each shot is calculated. Next, in Step S1502, eleven levels of fuzzy coefficients are read to calculate a membership function for each shot. The processing of Step S1501 and Step S1502 corresponds to the processing of calculating the probability of membership of each shot in the audio class.

In Step S1503, based on the input variables and values of the membership function, an output and values of a membership function of the output are calculated. In this event, the fuzzy control rules shown in Fig. 20 and Fig. 21 are referred to. The processing of Step S1503 corresponds to the processing of calculating the probability of membership of each shot in the audio class.

Furthermore, a membership function distance between different shots is calculated in Step S1504 and then whether or not the distance is greater than a threshold is determined in Step S1505. When the distance is greater than the threshold, a scene cut of the video signal is determined between frames and a scene section is outputted. The processing of Step S1504 and Step S1505 corresponds to the scene dividing processing using a fuzzy algorithm value.

As described above, in the preferred embodiment of the present invention, for each of the shots obtained by division by the processing of dividing a visual signal into shots by the $\chi 2$ test method, calculation is made on a probability of membership of an audio signal of a clip in the audio class, the clip belonging to each shot, and then fuzzy algorithm is performed. Thus, scene division using a fuzzy algorithm value can be performed.

(Video Signal Similarity Calculation Unit)

Next, a description will be given of processing performed by the video signal similarity calculation unit 23 shown in Fig. 1.

The video signal similarity calculation unit 23 performs search and classification focusing on video information. Therefore, a description will be given of processing of calculating a similarity between each of the scenes obtained by the scene dividing unit 21 and another scene. In the preferred embodiment of the present invention, a similarity between video scenes in the moving image database 11 is calculated as the similarity based on a visual (moving image) signal characteristic value set and a characteristic value set of the audio signal. In the preferred embodiment of the present invention, first, a scene in a video is divided into clips and then a characteristic value set of the visual signal and a characteristic value set of the audio signal are extracted for each of the clips. Furthermore, a three-dimensional DTW is set for those characteristic value sets, thereby enabling calculation of a similarity between scenes.

The DTW is a technique of calculating a similarity between two one-dimensional signals by extending and contracting the signals. Thus, the DTW is effective in comparison between signals which are frequently extended and contracted.

In the preferred embodiment of the present invention, the DTW conventionally defined in two dimensions is redefined in three dimensions and cost setting is newly performed for the use thereof. In this event, by setting costs both for a visual signal and an audio signal, a similar video can be searched and classified even when two scenes are different in one of a moving image and a sound. Furthermore, due to DTW features, similar portions between the scenes can be properly associated with each other even when the scenes are different in a time scale or when there occurs a shift in each of start time of the visual signals and start time of the audio signals between the scenes.

A description of a specific algorithm is given as to the video signal similarity calculation unit 23 according to the preferred embodiment of the present invention.

In the preferred embodiment of the present invention, a similarity between scenes is calculated by focusing on both a visual signal (moving image signal) and an audio signal (sound signal) which are contained in a video. First, in the preferred embodiment of the present invention, a given scene is divided into short-time clips and the scene is expressed as a one-dimensional sequence of the clips. Next, a characteristic value set of the visual signal and a characteristic value set of the audio signal are extracted from each of the clips. Finally, similar portions of the characteristic value sets between clip sequences are associated with each other by use of the DTW, and an optimum path thus obtained is defined as a similarity between scenes. Here, in the preferred embodiment of the present invention, the DTW is used after being newly extended in three dimensions. Thus, the similarity between scenes can be calculated by collaborative processing of the visual signal and the audio signal. The respective processes will be described below.

First, a description will be given of processing of dividing a video signal into clips. This processing corresponds to Step S201 in Fig. 6.

In the preferred embodiment of the present invention, a process target scene is divided into clips of a short time $T_c$[sec].

Next, a description will be given of processing of extracting a characteristic value set of the visual signal. This processing corresponds to Step S202 in Fig. 6.

In the preferred embodiment of the present invention, a characteristic value set of the visual signal is extracted from each of the clips obtained by the processing of dividing the video signal into the clips. In the preferred embodiment of the present invention, image color components are focused on as visual signal characteristics. A color histogram in an HSV color system is calculated from a predetermined frame of a moving image in each clip and is used as the characteristic value set. Here, the predetermined frame of the moving image means a leading frame of the moving image in each clip, for example. Moreover, by focusing on the fact that hues are more important in the human perception system, the numbers of bins in the histogram for hue, saturation, and value are set, for example, to 12, 2, and 2, respectively. Thus, the characteristic value set of the visual signal obtained in clip unit has forty-eight dimensions in total. Although the description will be given of the case where the numbers of bins in the histogram for hue, saturation, and value are set to 12, 2 and 2 in this embodiment, any numbers of bins may be set.

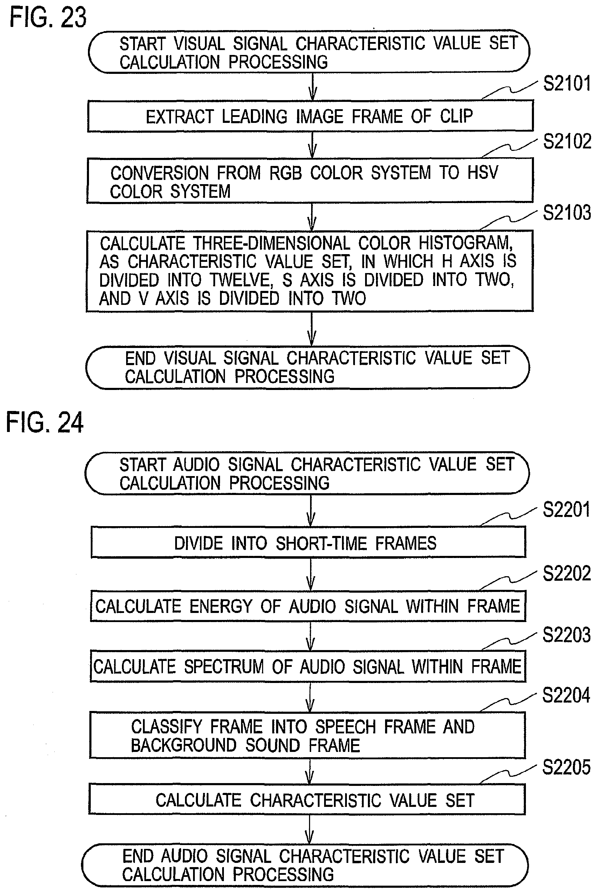

This processing will be described with reference to Fig. 23.

First, a predetermined frame of a moving image of a clip is extracted in Step S2101 and is converted from an RGB color system to the HSV color system in Step S2102.

Next, in Step S2103, a three-dimensional color histogram is generated, in which an H axis is divided into twelve regions, an S axis is divided into two regions, and a V axis is divided into two regions, for example, and this three-dimensional color histogram is calculated as a characteristic value set of the visual signal of the clip.

Next, a description will be given of processing of extracting a characteristic value set of the audio signal. This processing corresponds to Step S203 in Fig. 6.

In the preferred embodiment of the present invention, a characteristic value set of the audio signal is extracted from each of the clips obtained by the processing of dividing the video signal into clips. In the preferred embodiment of the present invention, a ten-dimensional characteristic value set is used as the characteristic value set of the audio signal. Specifically, an audio signal contained in the clip is analyzed for each frame having a fixed length of $T_f$[sec] ($T_f$<$T_c$).

First, in extracting the characteristic value set of the audio signal from each clip, each frame of the audio signal is classified into a speech frame and a background sound frame in order to reduce influences of a speech portion contained in the audio signal. Here, by focusing on the fact that characteristics of the speech portion in the audio signal include a large amplitude and low frequency power, most of which is called formant frequency, each frame of the audio signal is classified by use of short-time energy (hereinafter referred to as STE) and short-time spectrum (hereinafter referred to as STS).

Here, STE and STS obtained from each frame of the audio signal are defined by the following Equations 2-1 and 2-2.

[Expression 29]

$$STE(n) = \sqrt{\frac{1}{L} \sum_m [x(m)\omega(m - nF_s)]^2}$$

(Equation 2-1)

$$STS(k) = \frac{1}{2\pi L} \left| \sum_{m=0}^{L-1} x(m)e^{-j\frac{2\pi}{L}km} \right|$$

(Equation 2-2)

Here, $\eta$ represents a frame number of the audio signal, $F_s$ represents the number of movements indicating a movement width of the frame of the audio signal, $x(m)$ represents an audio discrete signal, and $\omega(m)$ takes 1 if $m$ is within a time frame and takes 0 if not. Moreover, STS(k) is a short-time spectrum when a frequency is represented by the following Expression 30, and f is a discrete sampling frequency.

[Expression 30]

$$\frac{kf}{L}(k = 0, ..., L-1)$$

In a case where the STE value exceeds a threshold $Th_1$ and where the STS value within a range of 440 to 4000 Hz exceeds a threshold $TH_2$, the frame of the audio signal is classified as the speech frame. On the other hand, if the STE value and the STS value do not exceed the thresholds described above, the frame of the audio signal is classified as the background sound frame.

By use of the audio signal frames thus classified, a ten-dimensional characteristic value set in clip unit below is calculated.

[Expression 31]

a) Average Short-time Energy $\overline{STE}$

$$\overline{STE} = \frac{1}{N} \sum_{n=0}^{N-1} STE(n)$$

(Equation 2-3)

Here, an average energy is an average of energies of all the audio signal frames in a clip.

[Expression 32]

b) Low STE rate LSTER:

$$LSTER = \frac{1}{2N_B} \sum_{n=0}^{N_B-1} |sgn[\overline{STE} - STE(n)] + 1|$$

(Equation 2-4)

Here, a low energy rate (low STE rate) means a ratio of the background sound frames having an energy below the average of energies in the clip.

[Expression 33]

c) Average Zero Cross Rate $\overline{ZCR}$

Zero cross rate ZCR(n) is defined by the following Equation 2-5.

$$ZCR(n) = \frac{1}{2}\sum_{m}\left|sgn[x(m)] - sgn[x(m-1)]\right||\omega(m)$$

Here, if x(m)≥0, then sgn[x(m)]= 1; otherwise sgn[x(m)]= −1.

Average zero cross rate $\overline{ZCR}$ is an average of ZCRs in the background sound frames.

(Equation 2-5)

Here, the average zero cross rate means an average of ratios at which signs of adjacent audio signals in all the background sound frames within the clip are changed.

[Expression 34]

d) Spectral Flux Density SF:

$$SF = \frac{1}{(N-1)(K-1)}\sum_{n=1}^{N-1}\sum_{k=1}^{K-1}\left|log(STS(n,k)) - log(STS(n-1,k))\right|$$

(Equation 2-6)

Here, STS(n, k),(k= 1, ..., K) is a kth spectrum at a time n.

Here, a spectral flux density is an index of a time transition of a frequency spectrum of the audio signal in the clip.

(e) Voice Frame Rate VFR:

Here, VFR is a ratio of voice frames to all the audio signal frames included in the clip.

[Expression 35]

f) Average Sub-band Energy Rate $\overline{ERSB}$ 1/2/3/4:

Average sub-band energy rates $\overline{ERSB}$ 1/2/3/4 are average sub-band energy rates respectively in bands of 0 to 630 Hz, 630 to 1720 Hz, 1720 to 4400 Hz, and 4400 to 11000 Hz.
Here, average sub-band energy rates are ratios of power spectrums respectively in ranges of 0 to 630, 630 to 1720, 1720 to 4400, and 4400 to 11000 (Hz) to the sum of power spectrums in all the frequencies, the power spectrums being of audio spectrums of the audio signals in the clip.

g) STE Standard Deviation ESTD:

An STE standard deviation ESTD is defined by the following Equation 2-7.
[Expression 36]

$$ESTD = \sqrt{\frac{1}{N}\sum_{n=0}^{N-1}(STE(n) - \overline{STE})^2}$$

Here, the energy (STE) standard deviation is a standard deviation of the energy of all the frames of the audio signal in the clip.

This processing will be described with reference to Fig. 24.

First, in Step S2201, each audio signal clip is divided into short-time audio signal frames. Next, an energy of the audio signal in the audio signal frame is calculated in Step S2202, and then a spectrum of the audio signal in the frame is calculated in Step S2203.

In Step S2204, each of the audio signal frames obtained by the division in Step S2201 is classified into a speech frame and a background sound frame. Thereafter, in Step S2205, the above characteristic value set a) to g) is calculated based on the audio signal frames thus classified.

Next, a description will be given of processing of calculating a similarity between scenes by use of the three-dimensional DTW. This processing corresponds to Step S204 in Fig. 6.

In the preferred embodiment of the present invention, a similarity between scenes is defined by use of the characteristic value set in clip unit obtained by the characteristic value set of the visual signal extraction processing and the characteristic value set of the audio signal extraction processing. Generally, clip sequences are compared by using the DTW so that the similar portions are associated with each other, and an optimum path thus obtained is defined as the similarity between the scenes. However, in this case, a local cost used for the DTW is determined based on a total characteristic value set difference between the clips. Thus, an appropriate similarity may not be obtained with this definition in such cases where only one of the signals is similar between the scenes and where there occurs a shift in each of start time of the visual signals and start time of the audio signals between the scenes.

Therefore, the preferred embodiment of the present invention addresses the problems described above by setting new local cost and local path by extending the DTW in three dimensions. The local cost and local path used for the three-dimensional DTW in (Processing 4-1) and (Processing 4-2) will be described below. Furthermore, a similarity between scenes to be calculated by the three-dimensional DTW in (Processing 4-3) will be described.

(Processing 4-1) Local Cost Setting

In the preferred embodiment of the present invention, first, as three elements of the three-dimensional DTW, a clip $\tau$ ($1 \leq \tau \leq T_1$) of a query scene, a visual signal clip $t_x$ ($1 \leq t_x \leq T_2$) of a target scene, and an audio signal clip $t_y$ ($1 \leq t_y \leq T_2$) of the target scene are used. For the three elements, the following three kinds are defined for each of local costs d ($\tau$, $t_x$, $t_y$) at grid points on the three-dimensional DTW.

[Expression 37]

$$d(\tau, t_x, t_y) = \begin{cases} \left| f_{V,\tau}^{query} - f_{V,t_x}^{target} \right| & \cdots d_v(\tau, t_x, t_y) \\ \left| f_{A,\tau}^{query} - f_{A,t_y}^{target} \right| & \cdots d_a(\tau, t_x, t_y) \\ \frac{d_v(\tau, t_x, t_y) + d_a(\tau, t_x, t_y)}{2} & \cdots d_{av}(\tau, t_x, t_y) \end{cases}$$

(Equation 2-8)

Here, $f_{v,t}$ is a characteristic vector obtained from a visual signal contained in a clip of a time t, and $f_{A,t}$ is a characteristic vector obtained from an audio signal contained in the clip of the time t. These characteristic vectors are normalized, so as to set a sum of the characteristic value set to 1 at each time.

(Processing 4-2) Local Path Setting

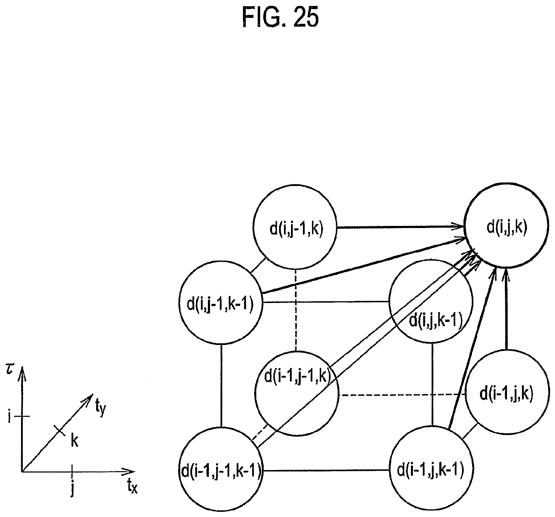

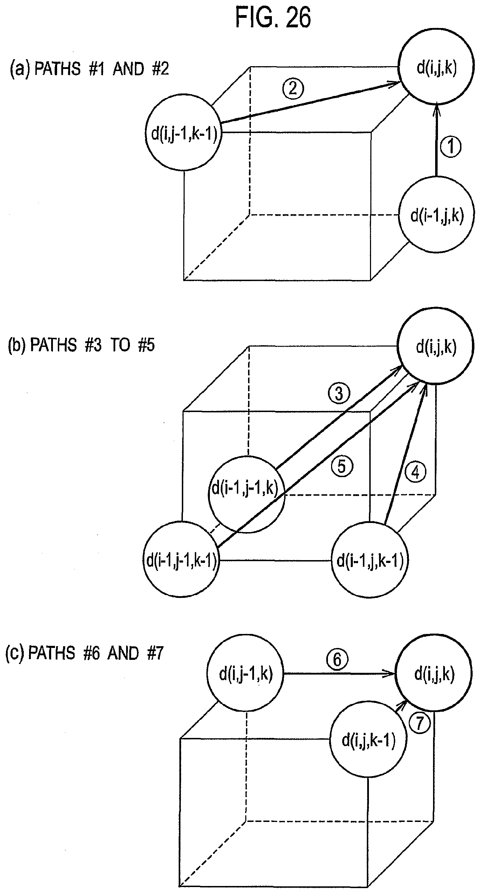

Each of the grid points on the three-dimensional DTW is connected with seven adjacent grid points by local paths #1 to #7, respectively, as shown in Fig. 25 and Fig. 26. Roles of the local paths will be described below.

a) About Local Paths #1 and #2

The local paths #1 and #2 are paths for allowing expansion and contraction in clip unit. The path #1 has a role of allowing the clip of the query scene to be expanded and contracted in a time axis direction, and the path #2 has a role of allowing the clip of the target scene to be expanded and contracted in the time axis direction.

b) About Local Paths #3 to #5

The local paths #3 to #5 are paths for associating similar portions with each other. The path #3 has a role of associating visual signals as the similar portion between clips, the path #4 has a role of associating audio signals as the similar portion between clips, and the path #5 has a role of associating the both signals as the similar portion between clips.

c) About Local Paths #6 and #7

The local paths #6 and #7 are paths for allowing a shift caused by synchronization of the both signals. The path #6 has a role of allowing a shift in the visual signal in the time axis direction between scenes, and the path #7 has a role of allowing a shift in the audio signal in the time axis direction between scenes.

(Processing 4-3) Definition of Similarity Between Scenes

By use of the local cost and local path described in the above (Processing 4-1) and (Processing 4-2), a cumulative cost S ($\tau$, $t_x$, $t_y$) is defined below by use of a grid point at which a sum of cumulative costs and movement costs from the seven adjacent grid points is the smallest.
[Expression 38]

$$S(0,0,0) = \min(d_v(0,0,0), d_a(0,0,0), d_{av}(0,0,0))$$

(Equation 2-9)

[Expression 39]

$$S(\tau, t_x, t_y) = \min \begin{cases} S(\tau-1, t_x, t_y) + d_{av}(\tau, t_x, t_y) + \alpha \\ S(\tau, t_x-1, t_y-1) + d_{av}(\tau, t_x, t_y) + \alpha \\ S(\tau-1, t_x-1, t_y) + d_v(\tau, t_x, t_y) + \beta \\ S(\tau-1, t_x, t_y-1) + d_a(\tau, t_x, t_y) + \beta \\ S(\tau-1, t_x-1, t_y-1) + d_{av}(\tau, t_x, t_y) \\ S(\tau, t_x-1, t_y) + d_v(\tau, t_x, t_y) + \gamma \\ S(\tau, t_x, t_y-1) + d_a(\tau, t_x, t_y) + \gamma \end{cases}$$

(Equation 2-10)

Note, however, that $\alpha$, $\beta$ and $\gamma$ are constants representing the movement costs required when the corresponding local paths are used. Thus, the final association of similar portions between scenes and an inter-scene similarity $D_s$ obtained by the association are defined by the following Equation 2-11.
[Expression 40]

$$D_S = \min\left(\frac{S(T_1, T_2, t_y)}{T_1 + 2T_2}, \frac{S(T_1, t_x, T_2)}{T_1 + 2T_2}\right)$$

(Equation 2-11)

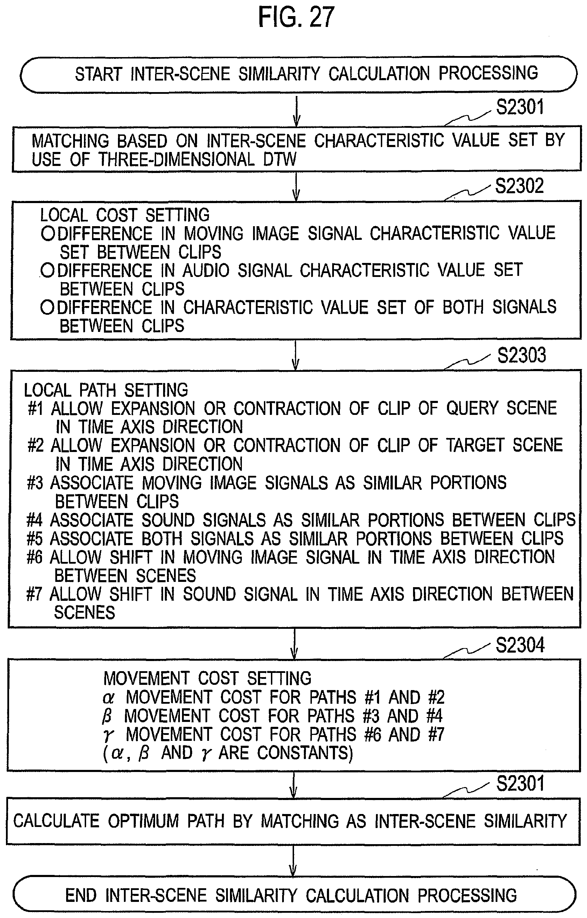

This processing will be described with reference to Fig. 27.
First, in Step S2301, matching based on the characteristic value set between the scenes is performed by use of the three-dimensional DTW. Specifically, the smallest one of the seven results within { } in the above (Equation 2-10) is selected.

Next, a local cost required for the three-dimensional DTW is set in Step S2302, and then a local path is set in Step S2303. Furthermore, in Step S2304, the respective movement costs $\alpha$, $\beta$ and $\gamma$ are set. The constant $\alpha$ is a movement cost for the paths #1 and #2, the constant $\beta$ is a movement cost for the paths #3 and #4, and the constant $\gamma$ is a movement cost for the paths #6 and #7.

Thereafter, in Step S2305, an optimum path obtained by the matching is calculated as an inter-scene similarity.

As described above, in the preferred embodiment of the present invention, the inter-scene similarity is calculated based on the characteristic value set of the visual signal and the characteristic value set of the audio signal by use of the three-dimensional DTW. Here, the use of the three-dimensional DTW allows the display unit, which will be described later, to visualize the scene similarity based on three-dimensional coordinates.

(Overview of DTW)

Here, an overview of the DTW will be described.

A description will be given of a configuration of the DTW used for the similarity calculation processing in the preferred embodiment of the present invention. The DTW is a technique of calculating a similarity between two one-dimensional signals by extending and contracting the signals. Thus, the DTW is effective in comparison between signals and the like which are extended and contracted in time series. Particularly, as to a music signal, a performance speed is frequently changed. Thus, the use of the DTW is considered to be effective to calculate similarity which is obtained by the similarity. Hereinafter, in the similarity calculation, a signal to be referred to will be called a reference pattern and a signal for obtaining a similarity to the reference pattern will be called a referred pattern.

First, a description will be given of calculation of a similarity between patterns by use of the DTW. Elements contained in a one-dimensional reference pattern having a length I are sequentially expressed as $a_1$, $a_2$, ... $a_I$, and elements contained in a referred pattern having a length J are sequentially expressed as $b_1$, $b_2$, ... $b_J$. Furthermore, position sets of the patterns are expressed as {1, 2, ..., I} and {1, 2, ..., J}. Then an elastic map w: {1, 2, ..., I}->{1, 2, .... J} which determines a correspondence between the elements of the patterns satisfies the following properties. a) w matches a starting point with an end point of each pattern.

[Expression 41]

$$w(1) = 1$$
$$w(I) = J$$

(Equation 2-12)

b) w is a monotonous map.

[Expression 42]

$$\forall i, j \in \{1, 2, \ldots, I\} : (i \leq j \Rightarrow w(i) \leq w(j))$$

(Equation 2-13)

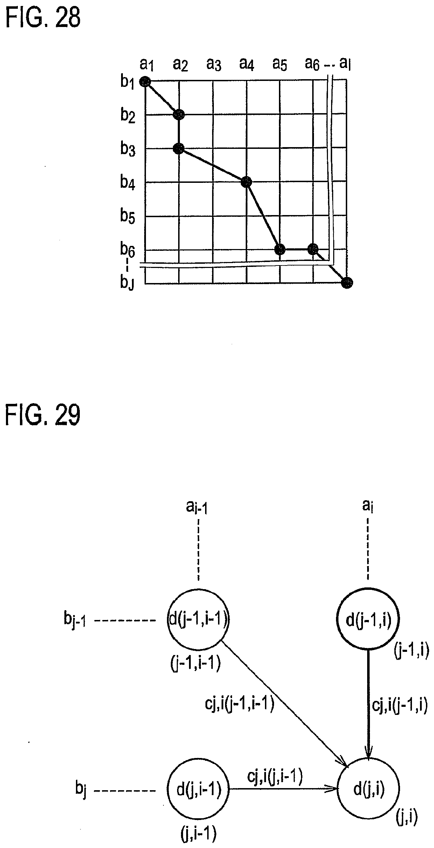

When such a map w is used, a problem of searching for a shortest path from a grid point $(b_I, a_I)$ to a grid point $(b_J, a_I)$ in Fig. 28 can be substituted for calculation of a similarity between the patterns. Therefore, the DTW solves the above path search problem based on the principle of optimality "whatever the initial state and initial decision are, the remaining decisions must constitute an optimal policy with regard to the state resulting from the first decision".

Specifically, a total path length is obtained by adding up partial path lengths. The partial path length is calculated by use of a cost d (j, i) at a grid point (j, i) on a path and a movement cost $c_{j,i}$ (b, a) between two grid points (j, i) and (b, a). Fig. 29 shows the calculation of the partial path length. Here, the cost d (j, i) on the grid point is a penalty when the corresponding elements are different between the reference pattern and the referred pattern. Moreover, the movement cost $c_{j,i}$ (b, a) is a penalty moving from the grid point (b, a) to the grid point (j, i) when expansion or contraction occurs between the reference pattern and the referred pattern.

The partial path length is calculated based on the above costs, and partial paths to minimize the cost of the entire path are selected. Finally, the total path length is obtained by calculating a sum of the costs of the partial paths thus selected. In this manner, a similarity of the entire patterns can be obtained from similarities of portions of the patterns.

In the preferred embodiment of the present invention, the DTW is applied to the audio signal. Accordingly, a further detailed similarity calculation method is determined in consideration of characteristics in the audio signal similarity calculation.

The preferred embodiment of the present invention focuses on the point that music has a characteristic that there are no missing notes on a score even if performance speeds are different for the same song. In other words, it is considered that the characteristic can be expressed in the following two points.

a) When the referred pattern is a pattern obtained by only expanding or contracting the reference pattern, these patterns are regarded as the same.
b) When the referred pattern and the reference pattern are the same, the referred pattern contains the reference pattern without any missing parts.

Application of the characteristic described above to the similarity calculation by movement between grid points means determination of correspondence between each of all the elements contained in the reference pattern and each of the elements contained in the referred pattern. Thus, a gradient restriction represented by the following inequality can be added to the elastic map w.

[Expression 43]

$$w(i) \leq w(i+1) \leq w(i) + 1 (1 \leq i \leq I)$$

(Equation 2-14)

In the preferred embodiment of the present invention, similarity calculation using the DTW is performed according to the above conditions. Thus, the similarity can be calculated by recurrently obtaining path lengths by use of the following (Equation 2-15).

[Expression 44]

$$D(j+1, i+1) = d(j+1, i+1) + \min\{(D(j,i) + c_{j+1,i+1}(j,i)), (D(j,i+1) + c_{j+1,i+1}(j,i+1)),$$

$$(D(j+1,i) + c_{j+1,i+1}(j+1,i))\}$$

(Equation 2-15)

(Audio Signal Similarity Calculation Unit)

Next, a description will be given of processing performed by the audio signal similarity calculation unit 24 shown in Fig. 1.

The audio signal similarity calculation unit 24 performs similarity calculation to execute search and classification, focusing on music information, of the scenes obtained by the scene dividing unit 21. In the preferred embodiment of the present invention, calculations are made for all the scenes that the scene dividing unit 21 has obtained from the moving image database 11, of a similarity based on a bass sound of an audio signal, a similarity based on another instrument of the an audio signal, and a similarity based on a rhythm of the an audio signal. In the preferred embodiment of the present invention, the audio signal similarity calculation unit 24 performs the following three kinds of similarity calculations for the audio signal.

- similarity calculation based on a bass sound
- similarity calculation based on another instrument
- similarity calculation based on a rhythm

In the similarity calculation based on the bass sound in the preferred embodiment of the present invention, the audio signal is subjected to pass through a bandpass filter in order to obtain only a signal of a frequency which is likely to contain a bass sound. Next, to obtain a spectrum at each time from the obtained signal, a weighted power spectrum is calculated by use of a weighting function focusing on the time and frequency. Moreover, a bass pitch can be estimated by obtaining a frequency having a peak in the obtained power spectrum at each time. Furthermore, a transition of the bass pitch of the audio signal between every two scenes is obtained and the obtained transition is inputted to the DTW, thereby achieving calculation of a similarity between two signals.

In the similarity calculation based on another instrument in the preferred embodiment of the present invention, for the audio signal, energies of frequency indicated by twelve elements including pitch names such as "do", "re", "mi" and "so#" are calculated from the power spectrum. Furthermore, the energies of the twelve elements are normalized to calculate a time transition of an energy ratio . In the preferred embodiment of the present invention, the use of the DTW for the energy ratio thus obtained allows the calculation of an audio signal similarity based on another instrument between every two scenes.

In the similarity calculation based on the rhythm in the preferred embodiment of the present invention, first, signals containing different frequencies are calculated, respectively, by processing an audio signal through a two-division filter bank. Next, for each of the signals containing the frequencies, an envelope "that is a curve sharing a tangent at each time of the signal" is detected to obtain an approximate shape of the signal. Note that this processing is achieved by sequentially performing "full-wave rectification", "application of a low-pass filter", "downsampling" and "average value removal". Furthermore, an autocorrelation function is obtained for a signal obtained by adding up all the above signals, and is defined as a rhythm function. Finally, the rhythm functions of the audio signals described above are inputted to the DTW between every two scenes, thereby achieving calculation of a similarity between two signals.

By performing the three kinds of similarity calculations described above, three similarities can be obtained as indices indicating similarities between songs in the preferred embodiment of the present invention.

As described above, the preferred embodiment of the present invention focuses on a melody that is a component of music; The melody in music is a time transition of a basic frequency composed of a plurality of sound sources. In the preferred embodiment of the present invention, according to the definition of the melody, it is assumed that the melody is composed of a bass sound and other instrument sounds. Furthermore, based on this assumption, a transition of energy indicated by the bass sound and a transition of energy indicated by the instrument other than the bass are subjected to matching processing, thereby obtaining a similarity. As the energy indicated by the bass sound, a power spectrum of a frequency range in which the bass sound is present is used. As the energy indicated by the other instrument sounds , an energy of frequency indicated by pitch names such as C, D, E ... is used. The use of the above energies is considered to be effective in the following two characteristics of music signals.

First, since an instrument sound contains many overtones of a basic frequency (hereinafter referred to as an overtone structure), identification of the basic frequency becomes difficult as the frequency range gets higher. Secondly, a song contains noise such as twanging sounds generated in sound production and a frequency that does not exist on the scale may be estimated as the basic frequency of the instrument sound.

In the preferred embodiment of the present invention, the frequency energy indicated by each of the pitch names is used as the energy of the sound of the instrument other than the bass. Thus, influences of the overtone structure and noise described above can be reduced. Moreover, simultaneous use of the bass sound having the basic frequency in a low frequency range enables similarity calculation which achieves further reduction in the influences of the overtone structure. Furthermore, since the DTW is used for similarity calculation, the similarity calculation can be performed even when the melody is extended or contracted or when the melody is missing. Thus, in the preferred embodiment of the present invention, a similarity between songs can be calculated based on the melody.

Furthermore, in the music configuration, a rhythm, besides the melody, is known as an important element. Therefore, the preferred embodiment of the present invention additionally focuses on the rhythm as a component of music, and a similarity between songs is calculated based on the rhythm. Moreover, the use of the DTW for similarity calculation allows a song to be extended or contracted in the time axis direction and the similarity can be properly calculated.

The audio signal similarity calculation unit 24 according to the preferred embodiment of the present invention calculates a "similarity based on a bass sound", a "similarity based on another instrument" and a "similarity based on a rhythm" for music information in a video, that is, an audio signal.

First, the preferred embodiment of the present invention focuses on a transition of a melody of music to enable calculation of a similarity of songs. In the preferred embodiment of the present invention, it is assumed that the melody is composed of a bass sound and a sound of an instrument other than the bass. This is because each of sounds simultaneously produced by the bass sound and other instrument sounds serves as an index of a chord or a key which determines characteristics of the melody.

In the preferred embodiment of the present invention, based on the above assumption, the DTW is applied to energies of the respective instrument sounds, thereby enabling similarity calculation.

Furthermore, in the preferred embodiment of the present invention, a new similarity based on a rhythm of a song is calculated. In music, rhythm, which is called one of three elements of music together with melody and chord, is known as an important element to determine a fine structure of a song. Therefore, in the preferred embodiment of the present invention, a similarity between songs is defined by focusing on the rhythm.

In the preferred embodiment of the present invention, similarity calculation is performed by newly defining a quantitative value (hereinafter referred to as a rhythm function) representing a rhythm based on an autocorrelation function of a music signal and applying the DTW to the rhythm function. Thus, the preferred embodiment of the present invention enables achievement of similarity calculation based on the rhythm which is important as the component of music.

The "similarity based on a bass sound", the "similarity based on another instrument" and the "similarity based on a rhythm" will be described in detail below.

(Similarity Calculation Based on Bass Sound)

A description will be given of processing of calculating a similarity based on a bass sound by the audio signal similarity calculation unit 24. This processing corresponds to Step S301 in Fig. 7 and to Fig. 8.

In the preferred embodiment of the present invention, as a transition of a bass sound in a song, a transition of a pitch indicated by the bass sound is used. The pitch is assumed to be a basic frequency indicated by each of the notes written on a score. Therefore, the transition of the pitch means a transition of energy in a main frequency contained in the bass sound.

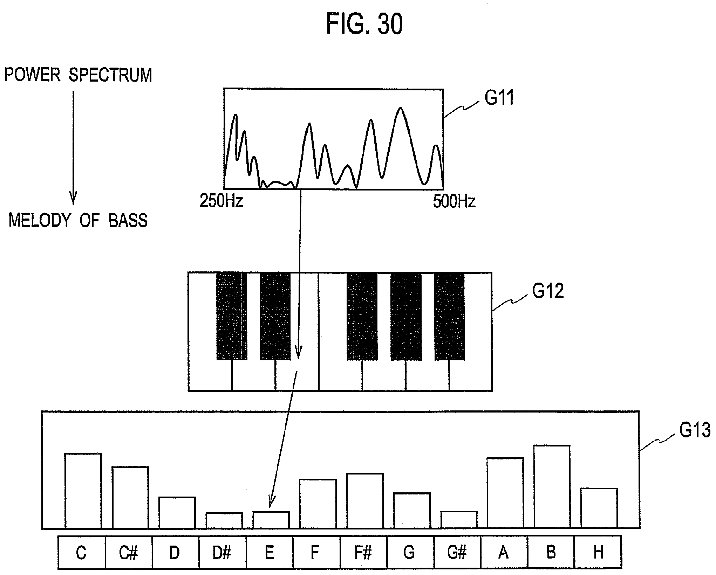

In the similarity calculation based on the bass sound, as shown in Fig. 30, first, the bass sound is extracted by a bandpass filter. A power spectrum in this event is indicated by G11. A weighted power spectrum is calculated from this power spectrum, and scales are assigned as indicated by G12. Furthermore, as indicated by G13, a histogram is calculated for each of the scales. In this event, "B" having a maximum value in the histogram is selected as a scale of the bass sound.

In Fig. 30, the description was given of the case where the scales are assigned from the power spectrum and then the scale of the bass sound is selected. The present invention is, however, not limited to this method. Specifically, a histogram for each frequency may be acquired from the power spectrum and a scale may be acquired from the frequency having a maximum value.

As to the processing of calculating a similarity based on the bass sound, a specific algorithm will be described below. Note that processes described below correspond to the steps in Fig. 8, respectively.

First, processing of extracting a bass sound by use of a passband filter will be described. This processing corresponds to Step S311 in Fig. 8.

In this processing, an audio signal is subjected to pass through a bandpass filter having a frequency range 40 to 250 Hz which is a frequency band of the bass sound. Thereafter, a power spectrum is calculated at each time of the obtained signal.

Next, a description will be given of weighted power spectrum calculation processing focusing on the time and frequency. This processing corresponds to Step S312 in Fig. 8.

In this processing, weights based on a Gaussian function are added in the time axis direction and frequency axis direction of the power spectrum obtained by the bass sound extraction processing using the passband filter. Here, by adding the weight in the time axis direction, a power spectrum at a target time is significantly utilized. Meanwhile, by adding the weight in the frequency axis direction, each of the scales (C, C#, D, ... and H) is weighted and thus a signal on the scale is selected. Here, the weight based on the Gaussian function is $\exp\{-(x-\mu)/(2\sigma^2)\}$ ($\mu$= average, $\sigma$= standard deviation). Finally, a frequency that gives a maximum energy in the weighted power spectrum at each time is estimated as a pitch. Assuming that an energy calculated by the power spectrum at a frequency f and a time t ($0 \leq t \leq T$) is $P(t, f)$, the weighted power spectrum is defined as $R(t, f)$ expressed by (Equation 3-1).

[Expression 45]

$$R(t, f) = \int_0^T P(s, f) \cdot v_t(s) \cdot w(f)ds$$

(Equation 3-1)

[Expression 46]
Weight in time axis direction: $u_t(s)$

$$v_t(s) = \begin{cases} \exp\left\{\dfrac{-(t-s)^2}{2\sigma^2}\right\} & \text{if } t - 3\sigma \le s \le t + 3\sigma \\ \\ 0 & \text{otherwise} \end{cases}$$ 

(Equation 3-2)

**Expression 47]**

However, $\sigma$ is a constant to be an index of sound duration.
[Expression 47]
Weight in frequency axis direction: $w(f)$

$$w(f) = \begin{cases} \exp\left\{\dfrac{-f^2}{2\sigma_m^2}\right\} & \text{if } \dfrac{F_{m-1}+F_m}{2} \le f < F_m \\ \\ \exp\left\{\dfrac{-f^2}{2\sigma_{m+1}^2}\right\} & \text{if } F_m \le f < \dfrac{F_m+F_{m+1}}{2} \\ \\ 0 & \text{otherwise} \end{cases}$$

(Equation 3-3)

However, assuming that m is a natural number,

$$F_m = 440 \cdot 2^{\frac{m-69}{12}}$$

(Equation 3-4)

$$m = \frac{F_m - F_{m-1}}{6}$$

Moreover, $F_m$ expressed by (Equation 3-4) represents a frequency in an mth note of an MIDI (Musical Instrument Digital Interface).
R(t, f) expressed by (Equation 3-1) makes it possible to estimate a basic frequency having a certain duration as the pitch by the weight in the time axis direction expressed by (Equation 3-2). Moreover, R(t, f) also makes it possible to estimate only a frequency present on the scale as the pitch by the weight in the frequency axis direction expressed by (Equation 3-3).
Next, a description will be given of processing of estimating a bass pitch by use of the weighted power spectrum. This processing corresponds to Step S313 in Fig. 8.
In this processing, a frequency f which gives a maximum value at each time t of R(t, f) is set to be the bass pitch and expressed as B(t).
Next, a description will be given of processing of calculating a similarity of the bass pitch by use of the DTW. This processing corresponds to Step S314 in Fig. 8.
In this processing, a bass pitch of an audio signal is estimated between every two videos in the database and similarity calculation using the DTW described above is performed. Here, in the description of the DTW described above, each of the costs used in (Equation 2-15) is set as follows.
[Expression 48]

$$d(j,i) = \begin{cases} \alpha & \text{if } a_i \neq b_j \\ 0 & \text{otherwise} \end{cases}$$

(Equation 3-6)

$$c_{j,i}(b,a) = \begin{cases} \beta & \text{if } (b,a) = (j-1,i), (j,i-1) \\ 0 & \text{otherwise} \end{cases}$$

(Equation 3-7)

Note, however, that $\alpha > \beta$. Thus, as compared with a cost due to a mismatching in melody, a cost for a shift in melody due to a change in performance speed and the like is reduced. A similarity thus obtained is expressed as $D_b$.

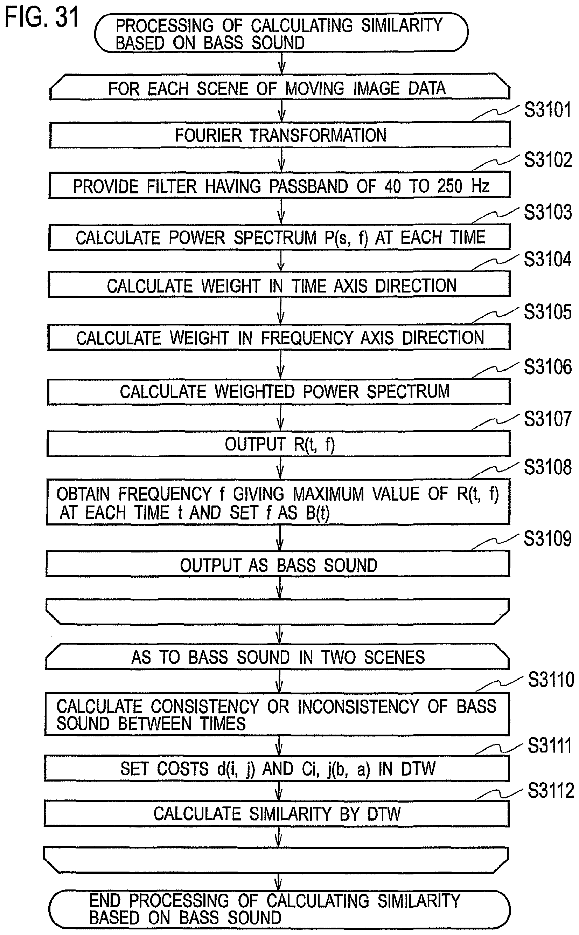

Here, with reference to Fig. 31, a description will be given of processing of calculating a similarity based on a bass sound according to the preferred embodiment of the present invention.

First, processing of Step S3101 to Step S3109 is executed for each of the scenes in the moving image database 11.

In Step S3101, one scene is Fourier-transformed. In Step S3102, the scene is subjected to processing with a filter having a passband of 40 to 250 Hz. In Step S3103, a power spectrum P(s, f) is calculated for each time.

Thereafter, a weight in the time axis direction is calculated in Step S3104 and then a weight in the frequency axis direction is calculated in Step S3105. Furthermore, in Step S3106, a weighted power spectrum is calculated based on the weight in the time axis direction and the weight in the frequency axis direction, which are calculated in Step S3104 and Step S3105. Subsequently, in Step S3107, R(t, f) is outputted. Furthermore, a frequency f which gives a maximum value of R(t, f) at each time t is obtained and expressed as B(t). In Step S3109, this B(t) is outputted as a time transition of the bass sound.

After the processing of Step S3101 to Step S3109 is finished for each scene, a similarity based on the bass sound between any two scenes is calculated in Step S3110 to Step S3112 .

First, in Step S3110, consistency or inconsistency of the bass sound is calculated to determine a cost d(i, j) by (Equation 3-6) between predetermined times. Next, in Step S3111, costs d(i, j) and $c_{i,j}$(b, a) in the DTW are set according to (Equation 3-6) and (Equation 3-7). In Step S3112, a similarity is calculated by use of the DTW.

(Similarity Calculation Based on Another Instrument)

A description will be given of processing of calculating a similarity based on another instrument by the audio signal similarity calculation unit 24. This processing corresponds to Step S302 in Fig. 7 and to Fig. 9.

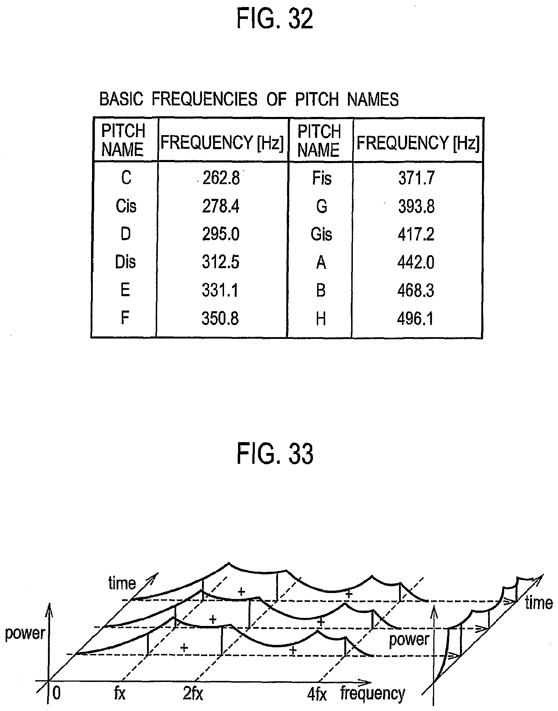

In a general music configuration, a bass sound is mainly the lowest sound in a song and thus other instrument sounds have frequencies higher than a frequency range of the bass sound. Moreover, in a frequency range higher than that of the bass sound, pitch names have frequencies shown in Fig. 32 and a frequency $2^k$ (k= 1, 2, ...) times as high as each of the frequencies is also treated as the same pitch name.

Therefore, in the preferred embodiment of the present invention, an energy of frequency which is higher than the bass sound and has a pitch name is used as an energy indicated by the instrument sound other than the bass. Furthermore, a sum of energies indicated by the frequencies $2^k$ times as high as those shown in Fig. 32 is used as frequency energies indicated by the respective pitch names. Thus, in the preferred embodiment of the present invention, an overtone structure formed of multiple instruments can be reduced and instrument sounds present in a frequency range in which pitch estimation is difficult can also be used for similarity calculation.

As described above, when attention is focused on a certain scale X (for example, C, C#, D, H or the like), sounds thereof exist similarly in octaves, such as those higher by one octave and by two octaves. Here, when a frequency of the certain scale is expressed as fx, the sounds higher by one octave, two octaves, ... exist in 2fx, 4fx ... as shown in Fig. 33.

The details will be described below. Note that the audio signal has a signal length T seconds and a sampling rate $f_s$, and an energy for a frequency f at a time t ($0 \leq t \leq T$) is calculated from a power spectrum and expressed as P(t, f).

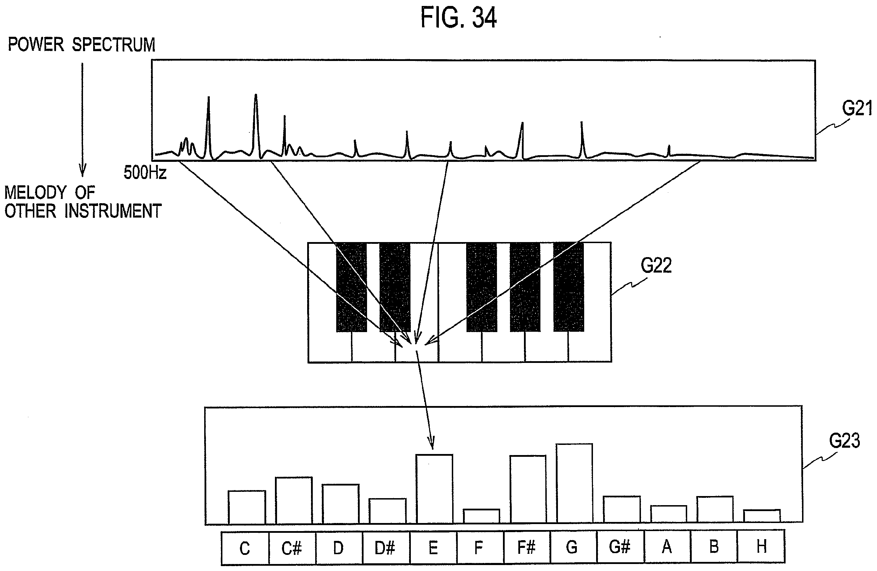

In the similarity calculation based on another instrument, as shown in Fig. 34, first, an energy of frequency indicated by a pitch name is extracted. Specifically, an energy $P_x(t)$ expressed by (Equation 4-1) to be described later is indicated by G21. As indicated by G22, scales are assigned, respectively, from the energy $P_x(t)$. Furthermore, as

indicated by G23, a histogram is calculated for each of the scales. G23 shows a result of adding power spectrums of four octaves for each of the scales, specifically, $P_X(t)$ obtained by (Equation 4-1).

In the processing shown in Fig. 34, frequency energies $P_c(t)$, $P_{c\#}(t)$ ... $P_H(t)$ for four octaves are calculated for the twelve scales C to H.

In Fig. 34, the description was given of the case where the scales are assigned from the power spectrum and then the scale of the bass sound is selected. The present invention is, however, not limited to this method. Specifically, a histogram for each frequency may be acquired from the power spectrum and a scale may be acquired from the frequency having a maximum value.

A specific algorithm will be shown below. Note that processes correspond to the steps in Fig. 9, respectively.

First, processing of calculating an energy of frequency indicated by a pitch name will be described. This processing corresponds to Step S321 in Fig. 9.

A frequency energy indicated by each pitch name is calculated from a power spectrum. In Fig. 32, assuming that a frequency corresponding to a pitch name X is $f_X$, an energy of frequency $P_X(t)$ indicated by the pitch name X is defined by the following Equation 4-1.

[Expression 49]

$$P_X(t) = \sum_{k=1}^{K} P(t, f_X \cdot 2^k)$$

(Equation 4-1)

However, K is any integer not exceeding the following Expression 50.

[Expression 50]

$$\log_2 \frac{f_s}{2 f_X}$$

By using (Equation 4-1) to define the frequency energy indicated by each pitch name, influences of overtones of a sound present in the low frequency range can be reduced.

Next, processing of calculating an energy ratio will be described. This processing corresponds to Step S322 in Fig. 9.

The frequency energy indicated by each pitch name, which is obtained by the processing of calculating the frequency energy indicated by the pitch name, is expressed by an energy ratio to all frequency ranges. This makes it possible to make a comparison in the time axis direction for each of the pitch names and thus a transition can be obtained. A ratio $px(t)$ of the frequency energy indicated by the pitch name X is expressed by the following Equation 4-2.

[Expression 51]

$$px(t) = \frac{P_X(t)}{\int_0^{\frac{f_s}{2}} P(t, f) df}$$

(Equation 4-2)

The above processing is performed for all t and X, and $px(t)$ thus obtained is used as an energy transition in the instrument sound other than the bass.

Next, a description will be given of processing of calculating a similarity of a pitch name energy ratio by use of the DTW. This processing corresponds to Step S323 in Fig. 9.

Energies of instrument sounds other than the bass of the audio signal are calculated between every two videos in the database and are expressed as $px_r(t)$ and $px_i(t)$. By use of these energies , similarity calculation using the DTW is performed for each of the pitch names. Therefore, twelve similarities corresponding to the number of pitch names are obtained. The similarity of the instrument sounds other than the bass is defined by a sum of the similarities obtained for the respective pitch names. Specifically, assuming that the similarity obtained for the pitch name X is $Da_X$, a similarity Da of the sounds of the instruments other than the bass is expressed by the following Equation 4-3.
[Expression 52]

$$D_a = D_{a_C} + D_{a_{C\sharp}} + D_{a_D} + D_{a_{D\sharp}} + D_{a_E} + D_{a_F} +$$
$$D_{a_{F\sharp}} + D_{a_G} + D_{a_{G\sharp}} + D_{a_A} + D_{a_B} + D_{a_H}$$

(Equation 4-3)

Note that costs used for the similarity calculation using the DTW are set as follows.
[Expression 53]

$$d(j, i) = |p_{X_i}(j) - p_{X_r}(i)|$$

(Equation 4-4)

$$c_{j,i}(b, a) = \begin{cases} \gamma & \text{if } (b, a) = (j-1, i), (j, i-1) \\ 0 & \text{otherwise} \end{cases}$$

(Equation 4-5)

(Equation 4-3) enables similarity calculation using a transition of the frequency energies indicated by all the pitch names. Moreover, by setting the cost expressed by (Equation 4-4), influences of the pitch name corresponding to a frequency having a large energy on all the similarities are increased. Thus, similarity calculation reflecting a main frequency component included in a melody can be performed.

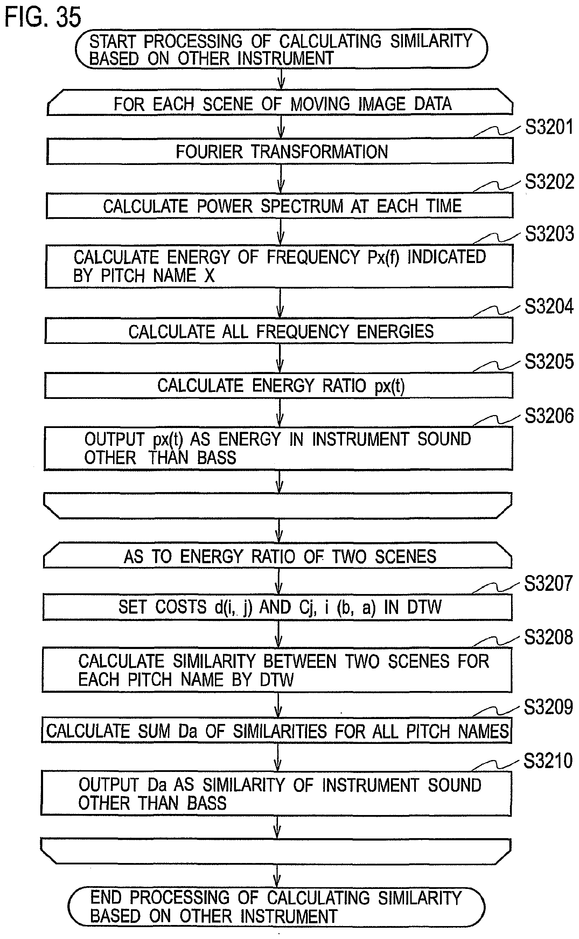

Here, with reference to Fig. 35, a description will be given of processing of calculating a similarity based on another instrument according to the preferred embodiment of the present invention.

First, processing of Step S3201 to Step S3206 is executed for each of the scenes in the moving image database 11.

In Step S3201, one scene is Fourier-transformed. In Step S3202, a power spectrum at each time is calculated. In Step S3203, an energy of frequency Px(t) indicated by the pitch name X is calculated and px(t) is calculated.

Thereafter, in Step S3204, all frequency energies are calculated. Subsequently, in Step S3205, an energy ratio px(t) is calculated based on the frequency energy Px(t) indicated by the pitch name calculated in Step S3203 and all the frequency energies calculated in Step S3204. In Step S3206, this energy ratio px(t) is outputted as an energy in the instrument sound other than the bass.

When the processing of Step S3201 to Step S3206 is finished for each of the scenes, a similarity of the energy ratio between any two scenes is calculated in Step S3207 to Step S3210.

First, costs d(i, j) and $C_{i,j}(b, a)$ in the DTW are set in Step S3207 and then a similarity between two scenes for each of the pitch names is calculated by use of the DTW in Step S3208. In Step S3209, a sum Da of the similarities of all the pitch names calculated in Step S3208 is calculated. In Step S3210, this sum Da is outputted as a similarity of the instrument sound other than the bass sound.

(Similarity Calculation Based on Rhythm)

A description will be given of processing of calculating a similarity based on a rhythm by the audio signal similarity calculation unit 24. This processing corresponds to Step S303 in Fig. 7 and to Fig. 10.

A fine rhythm typified by a tempo of a song is defined by an interval between sound production times for all instruments including percussions. Moreover, a global rhythm is considered to be determined by intervals each of which is between appearances of a phrase, a passage and the like including continuously produced instrument sounds. Therefore, the rhythm is given by the above time intervals and thus does not depend on a time of a song within a certain section. Accordingly, in the preferred embodiment of the present invention, assuming that the audio signal is weakly stationary, a rhythm function is expressed by an autocorrelation function. Consequently, the preferred embodiment of the present invention enables unique expression of the rhythm of the song by use of the audio signal and thus enables similarity calculation based on the rhythm.

A specific algorithm will be described below. Note that processes correspond to the steps in Fig. 10, respectively.

First, a description will be given of processing of calculating low-frequency and high-frequency components by use of a two-division filter bank. This processing corresponds to Step S331 in Fig. 10.

In the processing of calculating low-frequency and high-frequency components by use of the two-division filter bank, a process target signal is hierarchically broken down U times into high-frequency and low-frequency components , and the signals containing the high-frequency components are expressed as $x_u(n)$ (u= 1, ... U; n= 1, ... $N_U$). Here, $N_U$ represents a signal length of $x_u$. Since the signals thus obtained show different frequency bands, types of the instruments included are also considered to be different. Therefore, with an estimation of a rhythm for each of the signals obtained and the integration of the results, a rhythm by multiple kinds of instrument sounds can be estimated.

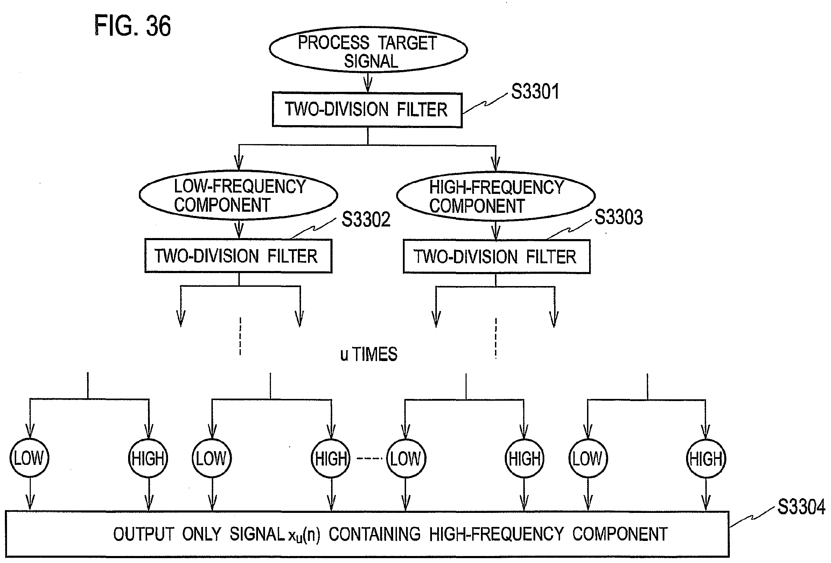

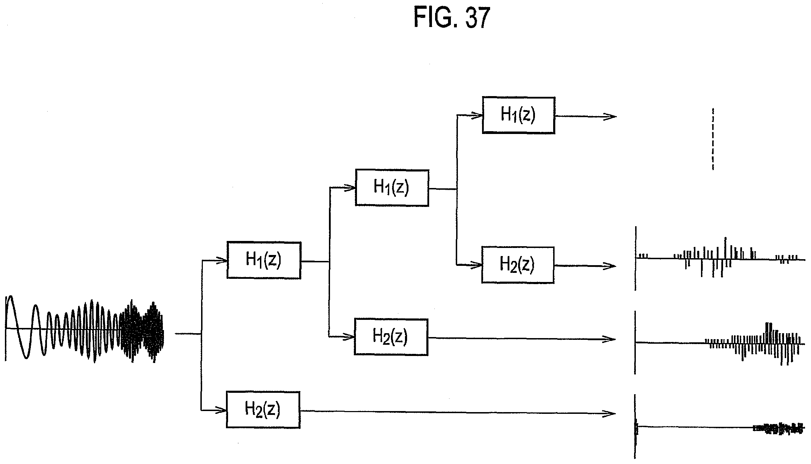

With reference to Fig. 36, a description will be given of the processing of calculating low-frequency and high-frequency components by use of the two-division filter bank. In Step S3301, the process target signal is divided into a low-frequency component and a high-frequency component by use of a two-division filter. Next, in Step S3302, the low-frequency component obtained by the division in Step S3301 is further divided into a low-frequency component and a high-frequency component. Meanwhile, in Step S3303, the high-frequency component obtained by the division in Step S3301 is further divided into a low-frequency component and a high-frequency component. In this manner, two-division filter processing is repeated for a predetermined number of times (U times) and then the signals $x_u(n)$ containing the high-frequency components are outputted in Step S3304. As shown in Fig. 37, the high-frequency components of the signal inputted are outputted by the processing of calculating low-frequency and high-frequency components by use of the two-division filter bank.

Next, a description will be given of an envelope detection processing. This processing corresponds to Step S332 to Step S335 in Fig. 10. The following 1) to 4) correspond to Step S332 to Step S335 in Fig. 10.

An envelope is detected from the signals $x_u(n)$ obtained by the processing of calculating low-frequency and high-frequency components by use of the two-division filter bank. The envelope is a curve sharing a tangent at each time of the signal and enables an approximate shape of the signal to be obtained. Therefore, the detection of the envelope makes it possible to estimate a time at which a sound volume is increased with sound production by the instruments. The processing of detecting the envelope will be described in detail below.

1) Full-Wave Rectification

Full-wave rectification expressed by (Equation 5-1) is performed to obtain a signal $y_{1u}(n)$ (u= 1, ..., U; n= 1, ..., $N_U$).
[Expression 54]

$$y_{1_u}(n) = |x_u(n)| \qquad \text{(Equation 5-1)}$$

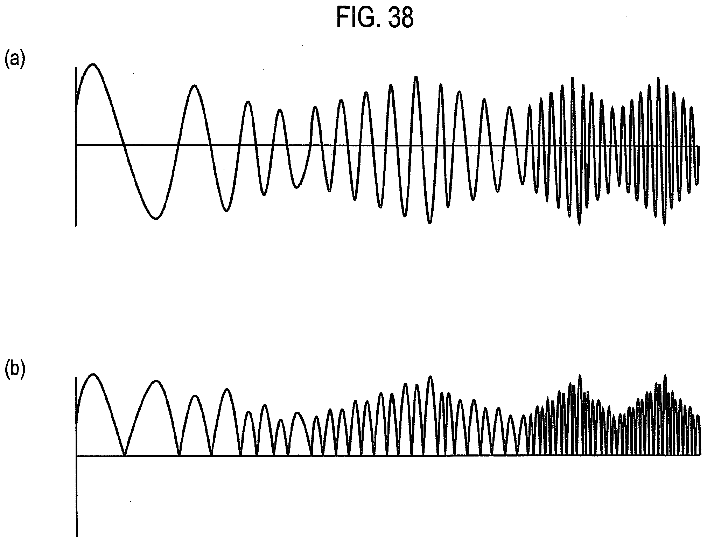

By performing the full-wave rectification, a waveform shown in Fig. 38 (b) can be obtained from a waveform shown in Fig. 38 (a).

2) Application of Low-Pass Filter

The signal $y_{1u}(n)$ obtained by 1) the full-wave rectification is subjected to pass through a simple low-pass filter expressed by (Equation 5-2), thereby obtaining a signal $y_{2u}(n)$ (u= 1, ..., U; n= 1, ..., $N_u$).
[Expression 55]

$$y_{2_u}(n) = (1 - \alpha)y_{1_u}(n) + \alpha y_{2_u}(n - 1)$$

$$\text{(Equation 5-2)}$$

Note, however, that $\alpha$ is a constant to determine a cutoff frequency.

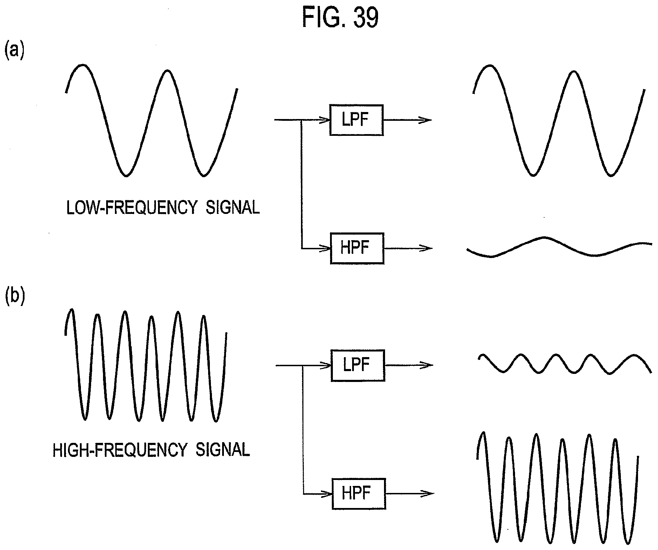

By subjecting the low-frequency signal to pass through the low-pass filter, signals shown in Fig. 39 (a) are outputted. Specifically, the signal is not changed even after passing through the low-pass filter, while a signal in the form of wiggling wave is outputted by subjecting the signal to pass through a high-pass filter. Moreover, by subjecting a high-frequency signal to pass through the low-pass filter, signals shown in Fig. 39 (b) are outputted. Specifically, the signal is not changed even after passing through the high-pass filter, while a signal in the form of gentle wave is outputted by subjecting the signal to pass through the low-pass filter.

3) Downsampling

The signals $y_{2u}(n)$ obtained by 2) the application of the low-pass filter are subjected to downsampling expressed by (Equation 5-3), thereby obtaining signals represented by the following Expression 56.

[Expression 56]

$$y_{3_u}(n) \ \left(u=1,\ldots,U; \ n=1,\ldots,\frac{N_u}{s}\right)$$

[Expression 57]

$$y_{3_u}(n) = y_{2_u}(sn)$$

(Equation 5-3)

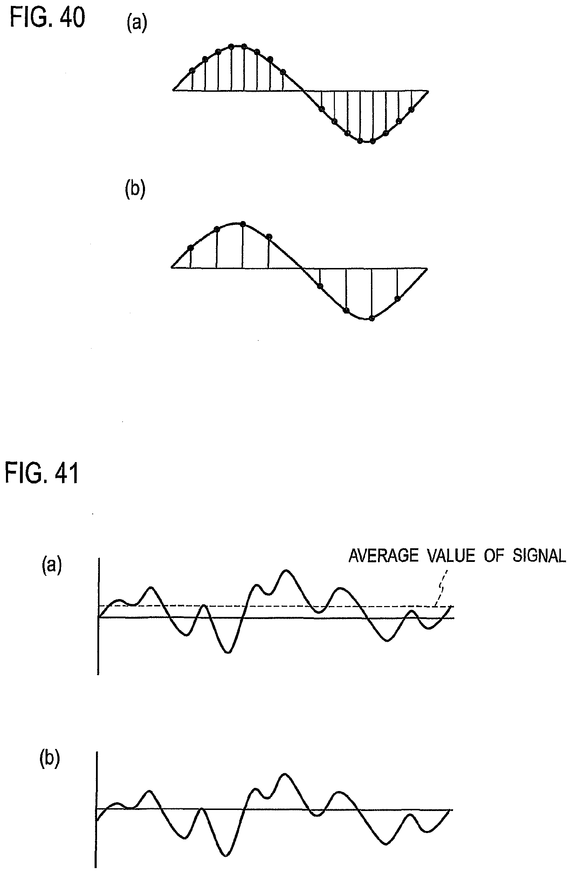

Note, however, that s is a constant to determine a sampling interval.
The performance of the downsampling processing thins a signal shown in Fig. 40 (a), and a signal shown in Fig. 40 (b) is outputted.

4) Average Value Removal

The signals $y_{3u}(n)$ obtained by 3) the downsampling are subjected to (Equation 5-4), thereby obtaining signals $y_u(n)$ (u= 1, ..., U; n= 1, ..., $N_u$) having a signal average of 0.
[Expression 58]

$$y_u(n) = y_{3_u}(n) - E[y_{3_u}(n)]$$

(Equation 5-4)

Note, however, that $E[y_{3u}(n)]$ represents an average value of the signals $y_{3u}(n)$.
By performing the average value removal processing, a signal shown in Fig. 41 (b) is outputted from a signal shown in Fig. 41 (a).
Next, a description will be given of processing of calculating an autocorrelation function. This processing corresponds to Step S336 in Fig. 10.
After the signals $y_u(n)$ obtained by the envelope detection processing are upsampled to a sampling rate $2^{u-1}$ times higher and signal lengths are equalized, all the signals are added. The signal thus obtained is assumed to be y(n) (n= 1, ..., $N_1$). Note that $N_1$ represents a signal length. Furthermore, by use of y(n), an autocorrelation function z(m) (m= 0, ..., $N_1$-1) is calculated by the following Equation 5-5.
[Expression 59]

$$z(m) = \frac{1}{N_1} \sum_{n}^{N_1} y(n)y(n-m)$$

(Equation 5-5)

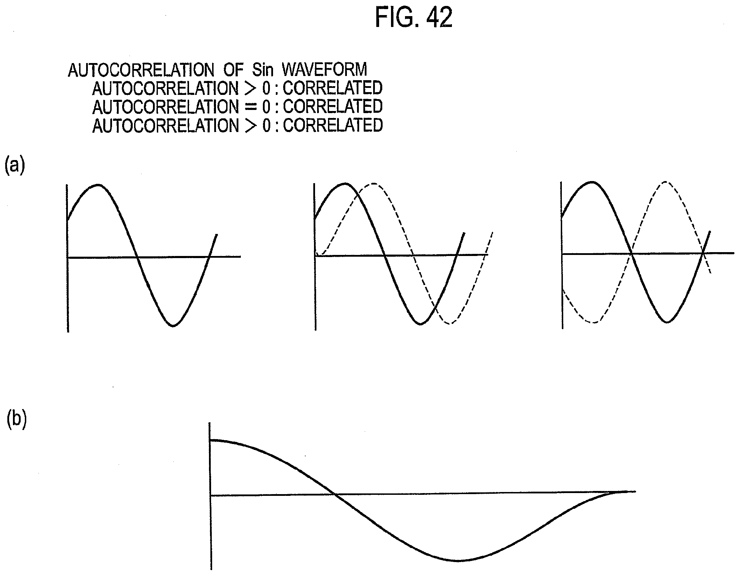

With reference to Fig. 42, the autocorrelation will be described. The autocorrelation function represents a correlation between a signal and another signal obtained by moving (shifting) itself by m, and is a function that is maximized at m= 0. Here, it is known that when a repetition exists in the signal, the signal takes a high value as in the case of m= 0 at positions multiple (m) thereof. By detecting peaks thereof, the repetition can be found out.

The use of the autocorrelation makes it easier to search for a repetition pattern contained in the signal and to extract a periodic signal contained in noise.

As described above, in the preferred embodiment of the present invention, various characteristics of the audio signal can be expressed by factors extracted from the autocorrelation function.

Next, a description will be given of processing of calculating a similarity of rhythm function by use of the DTW. This processing corresponds to Step S337 in Fig. 10.

In the preferred embodiment of the present invention, the above autocorrelation function calculated by use of a signal lasting for a certain period from a time t is set to be a rhythm function at the time t. This rhythm function is used for calculation of a similarity between songs . The rhythm function includes rhythms of multiple instrument sounds since the rhythm function expresses a time cycle in which a sound volume is increased in multiple frequency ranges. Thus, the preferred embodiment of the present invention enables calculation of a similarity between songs by use of multiple rhythms including a local rhythm and a global rhythm.

Next, the similarity between songs is calculated by use of the obtained rhythm function. First, a rhythm similarity will be discussed. A rhythm in a song fluctuates depending on a performer or an arranger. Therefore, there is a case where songs are entirely or partially performed at different speeds, even though the songs are the same. Thus, in order to define a similarity between songs based on the rhythm, it is required to allow fluctuations of the rhythm. Therefore, in the preferred embodiment of the present invention, the DTW is used for calculation of the similarity based on the rhythm as in the case of the similarity based on the melody. Thus, in the preferred embodiment of the present invention, the song having its rhythm changed by the performer or arranger can be determined to be the same as a song before the change. Moreover, also in the case of different songs, if the songs have similar rhythms, they can be determined to be similar songs.

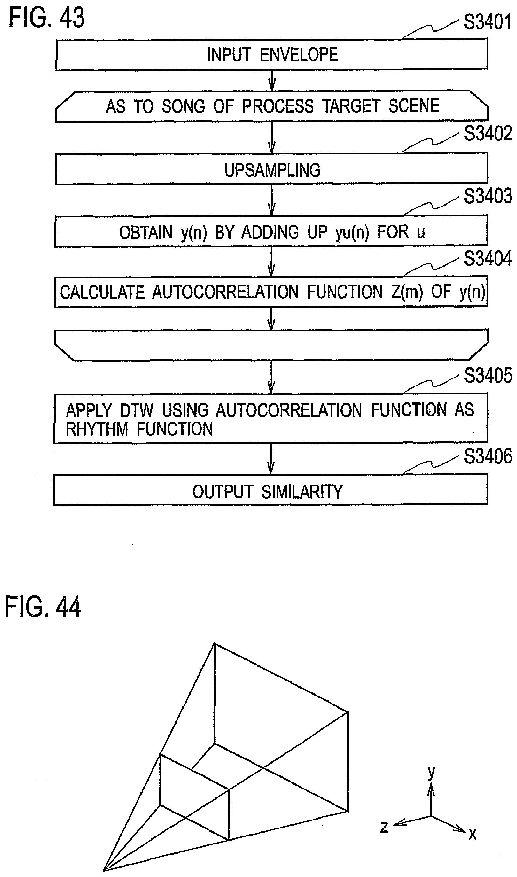

With reference to Fig. 43, a description will be given of autocorrelation function calculation processing and rhythm function similarity calculation processing using the DTW.

In Step S3401, after an envelope is inputted, processing of Step S3402 to Step S3404 is repeated for a song of a process target scene and a reference song.

First, in Step S3402, an envelope outputted is upsampled based on an audio signal of a target scene. In Step S3403, $y_u(n)$ are all added for u to acquire $y(n)$ . Thereafter, in Step S3404, an autocorrelation function $Z(m)$ of $y(n)$ is calculated.

Meanwhile, an autocorrelation function $Z(m)$ in the reference song is calculated. In Step S3405, by using the autocorrelation function $Z(m)$ in the song of the process target scene as a rhythm function, a similarity to the autocorrelation function $Z(m)$ in the reference song is calculated by applying the DTW. Thereafter, in Step S3406, the similarity is outputted.

The display unit 28 includes the video signal similarity display unit 29 and the audio signal similarity display unit 30.

The display unit 28 is a user interface configured to display a result of search by the search unit 25 and to play and search for a video and visualize results of search and classification. The display unit 28 as the user interface preferably has the following functions.

- Playing of Video

Video data stored in the moving image database 11 is arranged at an appropriate position and played.

In this event, an image of a frame positioned behind a current frame position of a video that is being played is arranged and displayed behind the video on a three-dimensional space.

By constantly updating positions where respective images are arranged, such a visual effect can be obtained that images are flowing from the back to the front.

- Top Searching By Unit of Scene

Top searching is performed by the unit of scenes obtained by division by the scene dividing unit 21. A moving image frame position is moved by a user operation to a starting position of a scene before or after a scene that is being played.

- Display of Search Result

By performing a search operation during playing of a video, similar scene search is performed by the search unit 25 and a result of the search is displayed. The similar scene search by the search unit 25 is performed based on a similarity obtained by the classification unit. The display unit 28 extracts scenes each having a similarity to a query scene smaller than a certain threshold from the moving image database 11 and displays the scene as a search result.

The scenes are displayed in a three-dimensional space having the query scene display position as an origin. In this event, each of the scenes obtained as the search result is provided with coordinates corresponding to the similarity. Those coordinates are perspective-transformed as shown in Fig. 44 to determine a display position and a size of each scene of the search result.

However, when a classification algorithm focusing on video information is used by the video signal similarity calculation unit 23 in the classification unit 22, axes on the three-dimensional space serve as three coordinates obtained by the three-dimensional DTW. Moreover, when a classification algorithm focusing on music information is used by the audio signal similarity calculation unit 24 in the classification unit 22, axes on the three-dimensional space serve as a similarity based on a bass sound, a similarity based on another instrument, and a similarity based on a rhythm, respectively.

Thus, a scene more similar to a query scene in the search result is displayed closer to the query scene. Moreover, if a video obtained as the search result thus displayed is selected in the similar manner, similar scene search can be performed using as a query a scene that is being played at the time of the selection.

As described above, in the present invention, by changing the coordinates to be displayed on the display device for the classification focusing on video information and the classification focusing on music information, a classification result having further weighted classification parameters can be acquired. For example, for the classification focusing on music information, a scene having a high similarity based on the rhythm and a low similarity based on the bass sound or another instrument is displayed on the coordinates having a high similarity based on the rhythm.

(Effects)

The moving image search device 1 according to the preferred embodiment of the present invention as described above makes it possible to calculate a similarity between videos by use of an audio signal and a video signal, which are components of the video, and to visualize those classification results on a three-dimensional space. In the preferred embodiment of the present invention, two similarity calculation functions are provided, including similarity calculation based on a song for the video and similarity calculation based on both of audio and visual signals. Moreover, by focusing on different elements of the video, a search mode that suits preferences of the user can be achieved. Further, the use of these functions allows an automatic search of similar videos by providing a query video. Meanwhile, in the case where a query video is absent, videos in a database are automatically classified, and a video which is similar to a video of interest can be found and provided to a user.

Furthermore, in the preferred embodiment of the present invention, the videos are arranged on the three-dimensional space based on similarities between the videos. This achieves a user interface which enhances the understanding of the similarity between the videos by a spatial distance. Specifically, when a search and classification algorithm focusing on video information is used, axes on the three-dimensional space serve as three coordinates obtained by the three-dimensional DTW. Moreover, when a search and classification algorithm focusing on music information is used, the axes on the three-dimensional space serve as a similarity based on a bass sound, a similarity based on another instrument, and a similarity based on a rhythm, respectively. Thus, the user can subjectively evaluate which portions of video and music are similar on the three-dimensional space.

(Modified Embodiment)

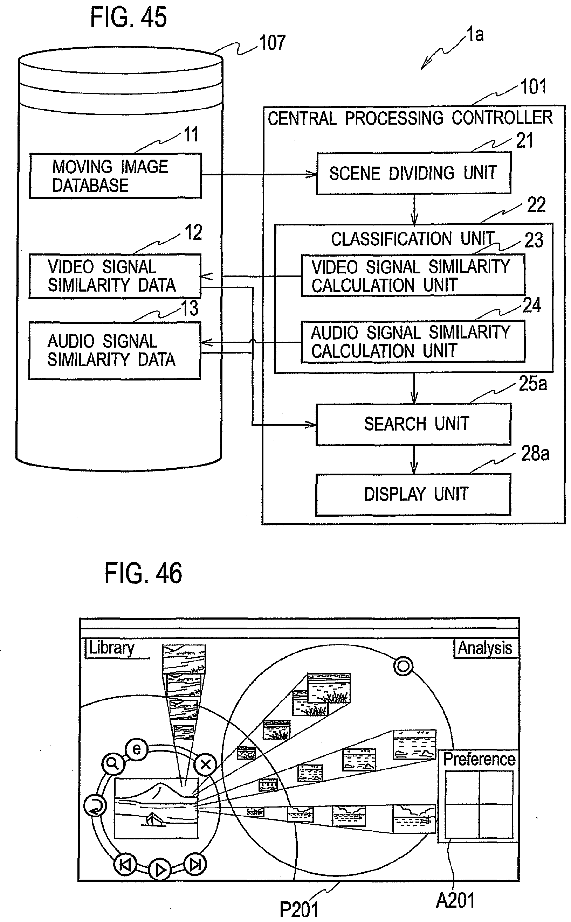

In a moving image search device 1a according to a modified embodiment of the present invention shown in Fig. 45, a search unit 25a and a display unit 28a are different from the corresponding ones in the moving image search device 1 according to the preferred embodiment of the present invention shown in z1. In the search unit 25 according to the preferred embodiment of the present invention, the video signal similarity search unit 26 searches for moving image data similar to query moving image data based on the video signal similarity data 12 and the audio signal similarity search unit 27 searches for moving image data similar to query moving image data based on the audio signal similarity data 13. Furthermore, in the display unit 28 according to the preferred embodiment of the present invention, the video signal similarity search unit 29 displays a result of the search by the video signal similarity search unit 26 on a screen and the audio signal similarity search unit 30 displays a result of the search by the audio signal similarity search unit 27 on a screen.

On the other hand, in the modified embodiment of the present invention, the search unit 25a searches for moving image data similar to query moving image data based on the video signal similarity data 12 and the audio signal similarity data 13 and the display unit 28a displays a search result on a screen. Specifically, upon input of preference data by a user, the search unit 25a determines a similarity ratio of the video signal similarity data 12 and the audio signal similarity data 13 for each scene according to the preference data, and acquires a search result based on the ratio. The display unit 28a further displays the search result acquired by the search unit 25a on the screen.

Thus, in the modified embodiment of the present invention, a classification result calculated in consideration of multiple parameters can be outputted with a single operation.

The search unit 25a acquires preference data in response to a user's operation of an input device and the like, the preference data being a ratio between preferences for the video signal similarity and the audio signal similarity. Moreover, based on the video signal similarity data 12 and the audio signal similarity data 13, the display unit 25a determines a weighting factor for each of an inter-scene similarity calculated from a characteristic value set of the visual signal and a characteristic value set of the audio signal, an audio signal similarity based on a bass sound, an audio signal similarity based on an instrument other than the bass, and an audio signal similarity based on a rhythm. Furthermore, each of the similarities of each scene is multiplied by the weighting factor, and the similarities are integrated. Based on the integrated similarity, the search unit 25a searches for a scene having an inter-scene integrated similarity smaller than a certain threshold.

The display unit 28a acquires coordinates corresponding to the integrated similarity for each of the scenes searched out by the search unit 25a and then displays the coordinates.

Here, three-dimensional coordinates given to the display unit 28a as each search result are determined as follows. X coordinates correspond to an inter-scene similarity calculated by the similarity calculation unit focusing on the music information. Y coordinates correspond to an inter-scene similarity calculated by the similarity calculation unit focusing on the video information. Z coordinates correspond to a final inter-scene similarity obtained based on preference parameters. However, these coordinates are adjusted so that all search results are displayed within the screen and that the search results are prevented from overlapping with each other.

In acquisition of the preference data, for example, the search unit 25a displays a display screen P201 shown in Fig. 46 on the display device. The display screen P201 includes a preference input unit A201. The preference input unit A201 receives an input of preference parameters. The preference parameters are used to determine how much weight is given to each of the video signal similarity data 12 and the audio signal similarity data 13 in order to display these pieces of similarity data, the video signal similarity data 12 and the audio signal similarity data 13 calculated by the video signal similarity calculation unit 23 and the audio signal similarity calculation unit 24 in the classification unit 22. The preference input unit A201 calculates a weight based on coordinates clicked on by a mouse, for example.

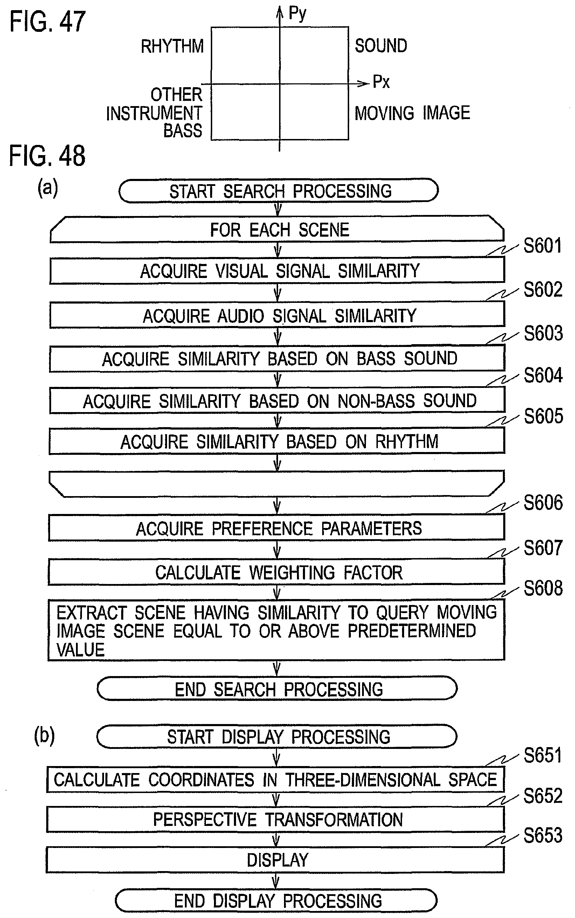

The preference input unit A201 has axes as shown in Fig. 47, for example. In Fig. 47, the preference input unit A201 has four regions divided by axes Px and Py. The similarities related to the video signal similarity data 12 are associated with the right side. Specifically, a similarity based on a sound is associated with the upper right cell and a similarity based on a moving image is associated with the lower right cell. Meanwhile, the similarities related to the audio signal similarity data 13 are associated with the left side. Specifically, a similarity based on a rhythm is associated with the upper left cell and a similarity based on another instrument and a bass is associated with the lower left cell.

When the user clicks on any of the cells in the preference input unit A201, the search unit 25a weights the video signal similarity data 12 calculated by the video signal similarity calculation unit 23 and the audio signal similarity data 13 calculated by the audio signal similarity data 13, respectively, based on Px coordinates of the click point. Furthermore, the search unit 25a determines weighting of the parameters for each piece of the similarity data based on Py coordinates of the click point. Specifically, the search unit 25a determines weights of the similarity based on the sound and the similarity based on the moving image in the video signal similarity data 12, and also determines weights of the similarity based on the rhythm and the similarity based on another instrument and the bass in the audio signal similarity data 13.

Here, with reference to Fig. 48, a description will be given of processing performed by the search unit 25a and the display unit 28a according to the modified embodiment of the present invention.

With reference to Fig. 48 (a), processing performed by the search unit 25a will be described. First, the video signal similarity data 12 and the audio signal similarity data 13 are read from the storage device 107. Moreover, for each of the scenes obtained by division by the scene dividing unit 21, a similarity of a visual signal to a query moving image scene is acquired from the video signal similarity data 12 in Step S601 and a similarity of an audio signal to the query moving image scene is acquired from the video signal similarity data 12 in Step S602. Furthermore, for each of the scenes divided by the scene dividing unit 21, a similarity based on a bass sound to the query moving image scene is acquired from the audio signal similarity data 13 in Step S603. Thereafter, in Step S604, a similarity based on a non-bass sound to the query moving image scene is acquired. Subsequently, in Step S605, a similarity based on a rhythm to the query moving image scene is acquired.

Next, preference parameters are acquired from the coordinates in the preference input unit A201 in Step S606, and then weighting factors are calculated based on the preference parameters in Step S607. Thereafter, in Step S608, a scene having a similarity equal to or greater than a predetermined value among the similarities acquired in Step S601 and Step S605 is searched for. Here, the description is given of the case where threshold processing is performed based on the similarity. However, a predetermined number of scenes may be searched for in descending order of similarity.

With reference to Fig. 48 (b), processing performed by the display unit 28a will be described. In Step S651, coordinates in a three-dimensional space are calculated for each of the scenes searched out by the search unit 25a. In Step S652, the coordinates of each scene calculated in Step S651 are perspective-transformed to determine a size of a moving image frame of each scene. In Step S653, the coordinates are displayed on the display device.

As described above, the search unit 25a according to the modified embodiment of the present invention allows the user to specify which element, the inter-scene similarity calculated by the video signal similarity calculation unit 23 focusing on the video information or the inter-scene similarity calculated by the audio signal similarity calculation unit 24 focusing on the music information, to focus on for search in execution of similarity scene search.

The user specifies two-dimensional preference parameters as shown in Fig. 47, and the weighting factor for each of the similarities is determined based on the preference parameters. A sum of the similarities multiplied by the weighting factor is set as a final inter-scene similarity, and similar scene search is performed based on the inter-scene similarity.

Here, a relationship between the preference parameters $P_x$ and $P_y$ specified by the user and the final inter-scene similarity D is expressed by the following equations.

[Expression 60]

$$D = W_{sv}D_{sv} + W_{sa}D_{sa} + W_bD_b + W_aD_a + W_rD_r$$

$$W_{sv} = P_xP_y$$

$$W_{sa} = P_x(1 - P_y)$$

$$W_b = (1 - P_x)(1 - P_y)$$

$$W_a = \frac{(1 - P_x)P_y}{2}$$

$$W_r = \frac{(1 - P_x)P_y}{2}$$

Note that $D_{sv}$ and $D_{sa}$ are inter-scene similarities calculated by the similarity calculation unit focusing on the video information. $D_{sv}$ is a similarity based on a visual signal and $D_{sa}$ is a similarity based on an audio signal. Moreover, $D_b$, $D_a$ and $D_\gamma$ are inter-scene similarities calculated by the similarity calculation unit focusing on the music information. $D_b$ is a similarity based on a bass sound, $D_a$ is a similarity based on another instrument, and $D_\gamma$ is a similarity based on a rhythm.

The moving image search device 1 according to the modified embodiment as described above makes it possible to generate preference parameters by combining multiple parameters and to display a scene that meets the preference parameters. Therefore, the moving image search device that is self-explanatory and understandable for the user can be provided.

(Effects)

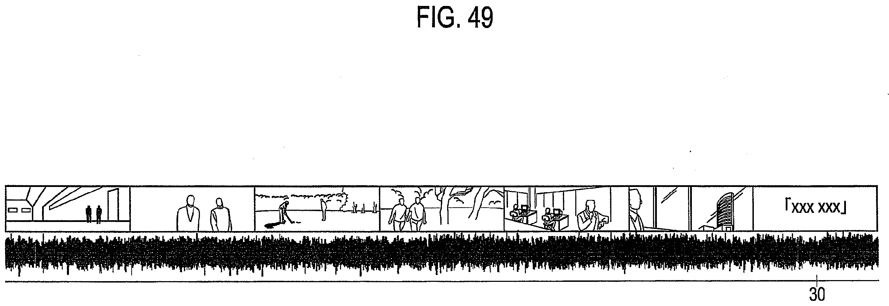

With reference to Fig. 49 to Fig. 59, a description will be given of simulation results obtained by the moving image search device according to the embodiment of the present invention. In this simulation, moving image data containing a query scene and moving image data lasting for about 10 minutes and containing a scene similar to the query scene are stored in the moving image database 11. In this simulation, moving image data containing the scene similar to the query scene is set as target moving image data to be searched for, and it is simulated whether or not the scene similar to the query scene can be searched out from multiple scenes contained in the moving image data.

Fig. 49 to Fig. 51 show results of simulation by the classification unit 22 and the search unit 25.

Fig. 49 shows moving image data of a query scene. Upper images are frame images at given time intervals composed of moving image data visual signals. A lower image is a waveform of a moving image data audio signal.

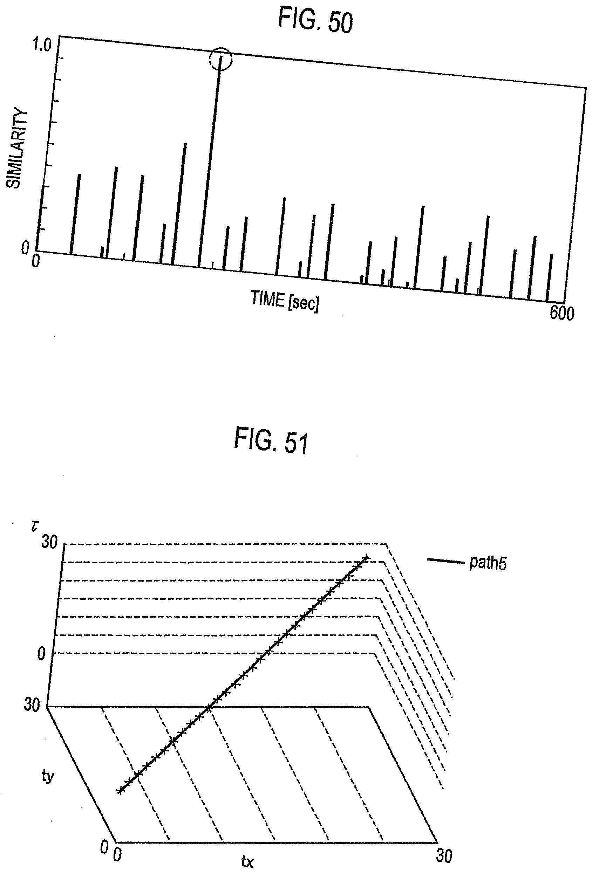

Fig. 50 shows a similarity to the query scene for each of the scenes of moving image data to be experimented. In Fig. 50, a horizontal axis represents a time from a start position of moving image data to be searched and a vertical axis represents the similarity to the query scene. In Fig. 50, each of positions where the similarity is plotted is the start position of each scene of the moving image data to be searched. In Fig. 50, a scene having a similarity of about "1.0" is a scene similar to the query scene. In this simulation, the same scene as the scene shown in Fig. 49 is actually searched out as a scene having a high similarity.

Fig. 51 shows three coordinates obtained by the three-dimensional DTW. A path #5 shown in Fig. 51 is, as described above, a path having a role of associating both of the visual signal and the audio signal with their corresponding similar portions.

The result shown in Fig. 50 shows that inter-scene similarities are calculated with high accuracy. Moreover, Fig. 51 shows that the inter-scene similarities are properly associated with each other by the three-dimensional DTW used in the embodiment.

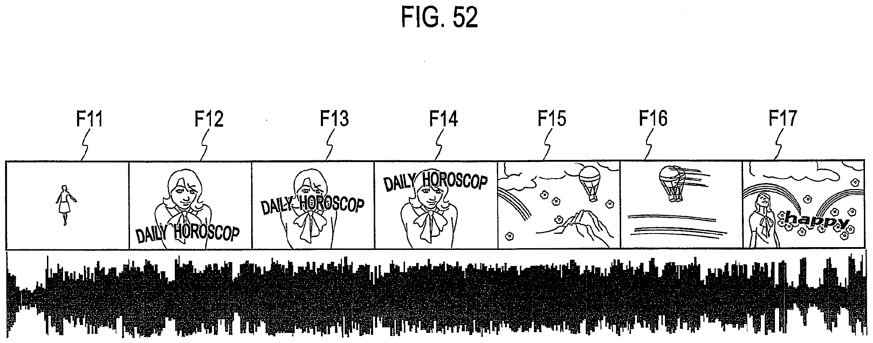

Fig. 52 to Fig. 55 show results of simulation by the video signal similarity calculation unit 23 and the video signal similarity search unit 26.

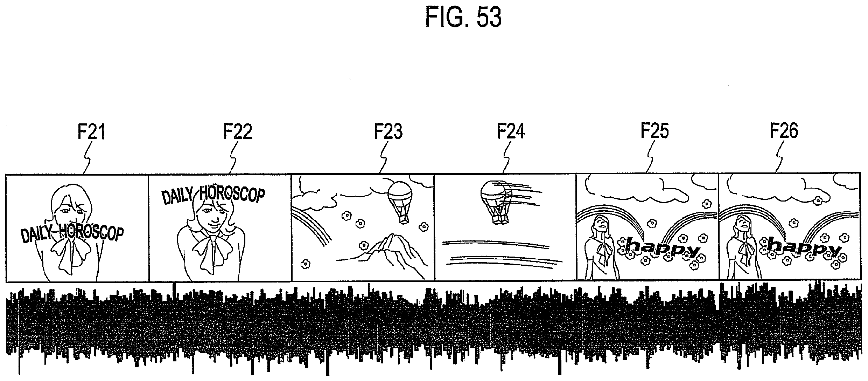

Fig. 52 shows moving image data of a query scene. Upper images are frame images at given time intervals composed of moving image data visual signals. A lower image is a waveform of a moving image data audio signal. On the other hand, Fig. 53 shows a scene contained in moving image data to be searched. Frame F13 to Frame F17 of the query scene shown in Fig. 52 are similar to frame F21 to frame F25 of the scene to be searched shown in Fig. 53. The audio signal shown in Fig. 52 is clearly different from an audio signal shown in Fig. 53.

Fig. 53 shows a similarity to the query scene for each of the scenes of moving image data to be experimented. In Fig. 53, a horizontal axis represents a time from a start position of moving image data to be searched and a vertical axis represents the similarity to the query scene. In Fig. 53, each of positions where the similarity is plotted is the start position of each scene of the moving image data to be searched. In Fig. 53, a scene having a similarity of about "0.8" is a scene similar to the query scene. In this simulation, the scene having the similarity of about "0.8" is actually the scene shown in Fig. 52. This scene is searched out as a scene having a high similarity.

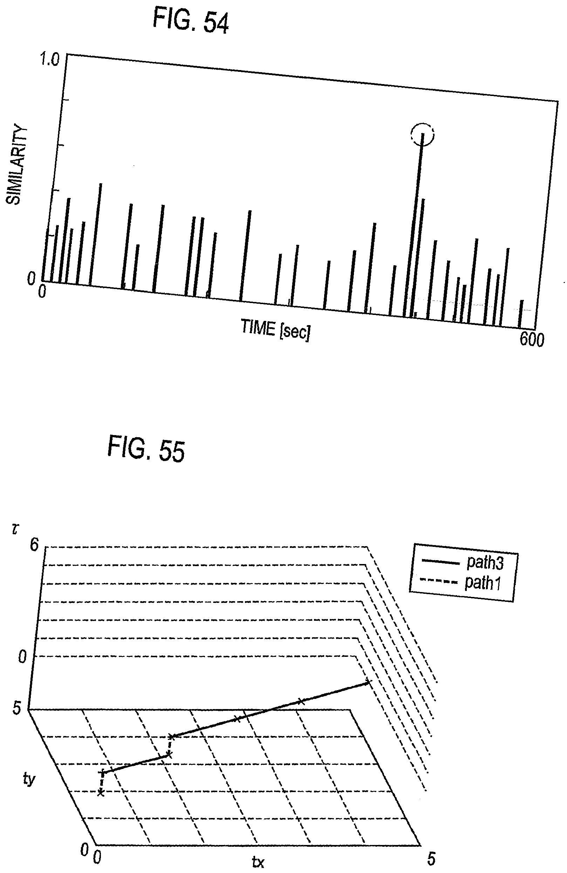

Fig. 54 shows three coordinates obtained by the three-dimensional DTW. A path #1 shown in Fig. 54 is, as described above, a path having a role of allowing expansion or contraction of clips of the query scene in the time axis direction. Moreover, a path #3 shown in Fig. 54 has a role of associating the visual signal with a similar portion.

The result shown in Fig. 54 shows that inter-scene similarities are calculated with high accuracy even for the visual signal which is shifted in the time axis direction. Moreover, Fig. 54 shows that the inter-scene similarities are properly associated with each other by the three-dimensional DTW used in the embodiment.

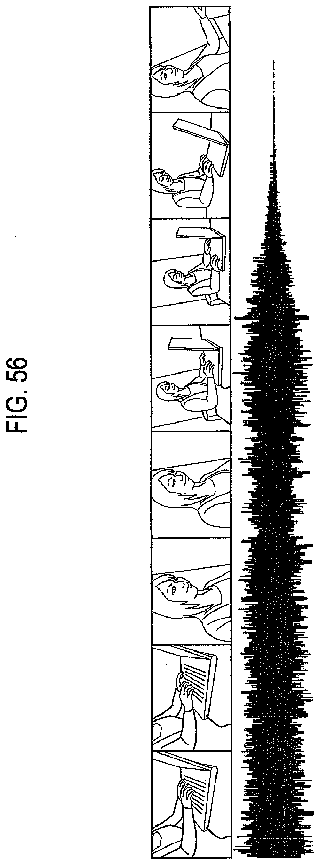

Fig. 56 to Fig. 59 show results of simulation by the audio signal similarity calculation unit 24 and the audio signal similarity search unit 27.

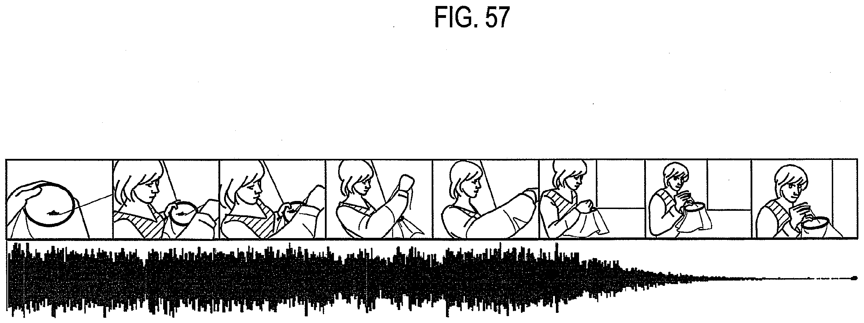

Fig. 56 shows moving image data of a query scene. Upper images are frame images at given time intervals composed of moving image data visual signals. A lower image is a waveform of a moving image data audio signal. On the other hand, Fig. 57 shows a scene contained in moving image data to be searched. Frame images composed of visual signals of the query scene shown in Fig. 56 are clearly different from frame images composed of visual signals of the scene to be searched shown in Fig. 57. On the other hand, the audio signal of the query data shown in Fig. 56 is similar to an audio signal of the scene to be searched shown in Fig. 57.

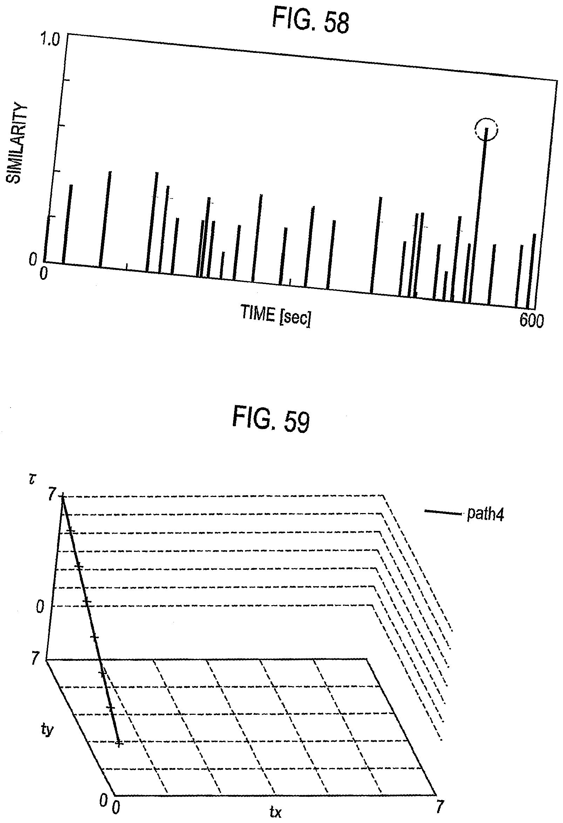

Fig. 58 shows a similarity to the query scene for each of the scenes of moving image data to be experimented. In Fig. 58, a horizontal axis represents a time from a start position of moving image data to be searched and a vertical axis represents the similarity to the query scene. In Fig. 58, each of positions where the similarity is plotted is the start position of each scene of the moving image data to be searched. In Fig. 58, a scene having a similarity of about "0.8" is a scene similar to the query scene. In this simulation, the scene having the similarity of about "0.8" is actually the scene shown in Fig. 57. This scene is searched out as a scene having a high similarity.

Fig. 59 shows three coordinates obtained by the three-dimensional DTW. A path #4 shown in Fig. 54 has a role of associating the audio signal with a similar portion.

The result shown in Fig. 59 shows that inter-scene similarities are calculated with high accuracy even for the visual signal which is shifted in the time axis direction. Moreover, Fig. 54 shows that the inter-scene similarities are properly associated with each other by the three-dimensional DTW used in the embodiment.

As described above, the moving image search device according to the embodiment of the present invention can accurately search for images having similar video signals by use of a moving image data video signal. Thus, in programs and the like broadcast every week or every day, a specific feature repeatedly started with the same moving image can be accurately searched out by use of a video signal. Moreover, even with a title dated or a sound changed, an image can be searched out as a highly similar image as long as the images are similar as a whole. Furthermore, also between different programs, scenes having similar moving images or sounds can be easily searched out.

Moreover, the moving image search device according to the embodiment of the present invention can accurately search out images having similar audio signals by use of a moving image data audio signal. Furthermore, in the embodiment of the present invention, a similarity between songs is calculated based on a bass sound and a transition of a melody. Thus, similar songs can be searched out regardless of a change or modulation of a tempo of the songs.

(Other Embodiments)

Although the present invention has been described as above with reference to the preferred embodiments and modified examples of the present invention, it should be understood that the present invention is not limited to the description and drawings which constitute a part of this disclosure. From this disclosure, various alternative embodiments, examples and operational techniques will become apparent to those skilled in the art.

For example, the moving image search device described in the preferred embodiment of the present invention may be configured on one piece of hardware as shown in Fig. 1 or may be configured on a plurality of pieces of hardware according to functions and the number of processes. Alternatively, the moving image search device may be implemented in an existing information system.

Moreover, in the preferred embodiment of the present invention, the description was given of the case where the moving image search device 1 includes the classification unit 22, the search unit 25, and the display unit 28 and where the classification unit 22 includes the video signal similarity calculation unit 23 and the audio signal similarity calculation unit 24. Here, in the preferred embodiment of the present invention, the moving image search device 1 calculates, searches, and displays a similarity based both on the video signal and the audio signal. Specifically, the search unit 25 includes the video signal similarity search unit 26 and the audio signal similarity search unit 27, the classification unit 22 includes the video signal similarity calculation unit 23 and the audio signal similarity calculation unit 24, and the display unit 28 includes the video signal similarity display unit 29 and the audio signal similarity calculation unit 30.

Alternatively, an embodiment is also conceivable in which a similarity is calculated, searched, and displayed based only on a video signal. Specifically, the classification unit 22 includes the video signal similarity calculation unit 23, the search unit 25 includes the video signal similarity search unit 26, and the display unit 28 includes the video signal similarity calculation unit 29.

Similarly, an embodiment is also conceivable in which a similarity is calculated, searched, and displayed based only on an audio signal. Specifically, the classification unit 22 includes the audio signal similarity calculation unit 24, the search unit 25 includes the audio signal similarity search unit 27, and the display unit 28 includes the audio signal similarity calculation unit 30.

As a matter of course, the present invention includes various embodiments and the like which are not described herein. Therefore, the technical scope of the present invention is defined only by matters to specify the invention according to the scope of claims pertinent based on the foregoing description.

**Claims**

1. A moving image search device (1) for searching scenes of moving image data for a scene similar to query moving image data, comprising:

   a moving image database (11) for storage of sets of moving image data containing set of the query moving image data, with the moving image data including sets of audio signal;
   a scene dividing unit (21) configured to divide a visual signal of the sets of moving image data into shots to output, as a scene, continuous shots having a small characteristic value set difference of an audio signal corresponding to the shots;
   a video signal similarity calculation unit (23) configured to calculate corresponding sets of video signal similarity between respective two scenes of scenes obtained by the division by the scene dividing unit (21) according to a characteristic value set of the visual signal and a characteristic value set of the audio signal to generate sets of video signal similarity data;
   a video signal similarity search unit (26) configured to search the scenes according to the sets of video signal similarity data to find a scene having a smaller similarity to each scene of the set of query moving image data than a certain threshold;
   an audio signal similarity calculation unit (24) configured to calculate a corresponding audio signal similarity between respective two scenes of the scenes obtained by the division by the scene dividing unit (21) to generate sets of audio signal similarity data; and
   an audio signal similarity search unit (24) configured to search the scenes according to the sets of audio signal similarity data to find a scene having a smaller similarity to each scene of the set of query moving image data than a certain threshold,
   **characterized in that** the audio signal similarity calculation unit (24) is configured to calculate the set of the audio signal similarity including a similarity based on a bass sound, a similarity based on a sound other than the bass sound of the audio signal, and a similarity based on a rhythm of the audio signal,
   wherein the similarity based on the bass sound between any two scenes is calculated by a bass pitch, acquiring the bass sound having a frequency range 40 to 250 Hz from the audio signal, estimating the bass pitch by use of a weighted power spectrum, and calculating the bass pitch similarity focusing on time and frequency;
   wherein the similarity based on the instrument other than the bass between the two scenes is calculated by calculating, from the audio signal, an energy of frequency indicated by each of pitch names of sounds each having a frequency range higher than that of the bass sound, and by calculating a sum of energy differences between the two scenes; and

wherein the similarity based on the rhythm between the two scenes is calculated by use of an autocorrelation function in such a way that the autocorrelation function is calculated by separating the audio signal into a high-frequency component and a low-frequency component repeatedly a predetermined number of times by use of a two-division filter bank and then by detecting an envelope from a signal containing the high-frequency component.

2. The moving image search device (1) according to claim 1, further comprising:
a video signal similarity display unit (29) configured to acquire and display coordinates corresponding to the similarity for each of the scenes searched out by the video signal similarity search unit.

3. The moving image search device (1) according to claim 1, further comprising:
an audio signal similarity display unit (30) configured to acquire and display coordinates corresponding to the similarity for each of the scenes searched out by the audio signal similarity search unit (27).

4. The moving image search device (1) according to claim 1, wherein
the scene dividing unit (21) calculates sets of characteristic value data on each clip from an audio signal of the sets of moving image data, calculates a probability of membership in each of audio classes representing respective types of sounds of clips, divides a visual signal of the sets of moving image data into shots, and calculates a fuzzy algorithm value of each of the shots from the probabilities of membership of clips corresponding to the shot in each of the audio classes to output, as a scene, continuous shots including adjacent shots having a small fuzzy algorithm value difference therebetween.

5. The moving image search device (1) according to claim 1, wherein
for each of the scenes obtained by division by the scene dividing unit (21), the video signal similarity calculation unit (23) divides the scene into clips to calculate a characteristic value set of a visual signal for each of the clips from the visual signal based on a color histogram of a predetermined frame of a moving image of the clip, divides the clip into audio signal frames to classify each of the audio signal frames into a speech frame and a background sound frame based on an energy and a spectrum of the audio signal in the audio signal frame and to calculate a characteristic value set of the audio signal of the clips , and calculates the corresponding similarity between respective scenes based on the characteristic value set of the visual signal and the audio signal in clip unit.

6. A moving image search program for searching scenes of moving image data for each scene similar to query moving image data, the moving image search program allowing a computer to function as:

scene dividing means which divides into shots visual signal of set of query moving image data and sets of moving image data stored in a moving image database (11), the moving image data including sets of audio signal, and outputs, as a scene, continuous shots having a small characteristic value set difference of an audio signal corresponding to the shots;

video signal similarity calculation means which calculates corresponding sets of video signal similarity between respective two scenes of scenes obtained by the division by the scene dividing means according to a characteristic value set of the visual signal and a characteristic value set of the audio signal to generate sets of video signal similarity data; and

video signal similarity search means which searches the scenes according to the sets of video signal similarity data to find a scene having a smaller similarity of to each scene of the set of query moving image data than a certain threshold,

an audio signal similarity calculation means which calculates a corresponding audio signal similarity between respective two scenes of the scenes obtained by the division by the scene dividing means to generate sets of audio signal similarity data; and

an audio signal similarity search means which searches the scenes according to the sets of audio signal similarity data to find a scene having a smaller similarity to each scene of the set of query moving image data than a certain threshold;

**characterized in that** the audio signal similarity calculation unit (24) is configured to calculate the set of the audio signal similarity including a similarity based on a bass sound, a similarity based on a sound other than the bass sound of the audio signal, and a similarity based on a rhythm of the audio signal;

wherein the similarity based on the bass sound between any two scenes is calculated by a bass pitch, acquiring the bass sound having a frequency range 40 to 250 Hz from the audio signal, estimating the bass pitch by use of a weighted power spectrum, and calculating the bass pitch similarity focusing on time and frequency;

wherein the similarity based on the instrument other than the bass between the two scenes is calculated by calculating, from the audio signal, an energy of frequency indicated by each of pitch names of sounds each having a frequency range higher than that of the bass sound, and by calculating a sum of energy differences between the two scenes; and

wherein the similarity based on the rhythm between the two scenes is calculated by use of an autocorrelation function in such a way that the autocorrelation function is calculated by separating the audio signal into a high-frequency component and a low-frequency component repeatedly a predetermined number of times by use of a two-division filter bank and then by detecting an envelope from a signal containing the high-frequency component.

7. The moving image search program according to claim 6, further allowing the computer to function as:
video signal similarity display means which acquires and displays coordinates corresponding to the similarity for each of the scenes searched out by the video signal similarity search means.

8. The moving image search program according to claim 6, wherein
the scene dividing means calculates sets of characteristic value data on each clip from an audio signal of the sets of moving image data, calculates a probability of membership in each of audio classes representing respective types of sounds of clips, divides a visual signal of the sets of moving image data into shots, and calculates a fuzzy algorithm value of each of the shots from the probabilities of membership of clips corresponding to the shot in each of the audio classes to output, as a scene, continuous shots including adjacent shots having a small fuzzy algorithm value difference therebetween.

9. The moving image search program according to claim 6, wherein
for each of the scenes obtained by division by the scene dividing means, the video signal similarity calculation means divides the scene into clips to calculate a characteristic value set of a visual signal for each of the clips from the visual signal based on a color histogram of a predetermined frame of a moving image of the clip, divides the clip into audio signal frames to classify each of the audio signal frames into a speech frame and a background sound frame based on an energy and a spectrum of the audio signal in the audio signal frame and to calculate a characteristic value set of the audio signal of the clips , and calculates the corresponding similarity between respective scenes based on the characteristic value set of the visual signal and the audio signal in clip unit.

**Patentansprüche**

1. Bewegtbild-Suchvorrichtung (1) zum Suchen von Szenen von Bewegt-Bild-Daten, die ähnlich sind zu gesuchten Bewegt-Bild-Daten, aufweisend:

eine Bewegtbild-Datenbank (11) zum Speichern von Sätzen von Bewegtbild-Daten, die Sätze der gesuchten Bewegtbild-Daten aufweisen, wobei die Bewegtbild-Daten Sätze von Audiosignalen aufweisen;
eine Szenenaufteileinheit (21), die dazu ausgebildet ist, ein visuelles Signal von Sätzen der Bewegtbild-Daten in auszugebende Aufnahmen aufzuteilen, um kontinuierliche Aufnahmen als Szene auszugeben, die einen kleinen Unterschied bei einem charakteristischen Wertesatz eines Audiosignals, das zu den Aufnahmen korrespondiert, haben;
eine Videosignal-Ähnlichkeit-Berechnungseinheit (23), die dazu ausgebildet ist, korrespondierende Sätze einer Videosignal-Ähnlichkeit zwischen entsprechenden zwei Szenen von Szenen zu berechnen, die erhalten werden durch die Teilung mittels der Szenenaufteileinheit (21), in Übereinstimmung mit einem charakteristischen Wertesatz des visuellen Signals und einem charakteristischen Wertesatz des Audiosignals, um Sätze von Videosignal-Ähnlichkeit-Daten zu erzeugen;
eine Videosignal-Ähnlichkeit-Sucheinheit (26), die dazu ausgebildet ist, Szenen in Übereinstimmung mit den Sätzen von Videosignal-Ähnlichkeit-Daten zu durchsuchen, um eine Szene zu finden, deren Ähnlichkeit zu jeder Szene des Satzes von gesuchten Bewegtbild-Daten kleiner ist als ein gewisser Schwellenwert;
eine Audiosignal-Ähnlichkeit-Berechnungseinheit (24), die dazu ausgebildet ist, eine korrespondierende Audiosignal-Ähnlichkeit zwischen zwei entsprechenden Szenen von Szenen zu erhalten, die erhalten werden mittels der Teilung durch die Szenenaufteileinheit (21), um Sätze von Audiosignalen-Ähnlichkeit-Daten zu erzeugen; und
eine Audiosignal-Ähnlichkeit-Sucheinheit (24), die dazu ausgebildet ist, die Szenen in Übereinstimmung mit den Sätzen von Audiosignalen-Ähnlichkeit-Daten zu durchsuchen, um eine Szene zu finden, deren Ähnlichkeit zu jeder Szene des Satzes von gesuchten Bewegtbild-Daten kleiner ist als ein bestimmter Schwellenwert,

**dadurch gekennzeichnet, dass**

die Audiosignal-Ähnlichkeit-Berechnungseinheit (24) dazu ausgebildet ist, den Satz von Audiosignalen-Ähnlichkeiten zu berechnen, einschließlich einer Ähnlichkeit basierend auf einem Bass-Sound, einer Ähnlichkeit basierend auf einem anderen Sound als dem Bass-Sound des Audiosignals und einer Ähnlichkeit basierend auf einem Rhythmus des Audiosignals,
wobei die Ähnlichkeit basierend auf dem Bass-Sound zwischen zwei beliebigen Szenen berechnet wird mittels einer Bass-Tonlage, wobei der Bass-Sound, der einen Frequenzbereich von 40 bis 250 Hz hat, von dem Audiosignal erhalten wird, die Bass-Tonlage unter Verwendung eines gewichteten Energiespektrums geschätzt wird und die Bass-Tonlage-Ähnlichkeit unter Fokussierung auf die Zeit und Frequenz berechnet wird;
wobei die Ähnlichkeit basierend auf dem anderen Instrument als dem Bass zwischen zwei Szenen berechnet wird mittels Berechnens aus dem Audiosignal einer Energie der Frequenz, die **gekennzeichnet ist durch** jeden der Namen der Tonlagen von Sounds, die alle einen Frequenzbereich haben, der höher ist als der des Bass-Sounds, und mittels Berechnens einer Summe von Energieunterschieden zwischen den beiden Szenen; und
wobei die Ähnlichkeit basierend auf dem Rhythmus zwischen den beiden Szenen berechnet wird unter Verwendung einer Autokorrelationsfunktion auf die Weise, dass die Autokorrelationsfunktion berechnet wird mittels wiederholten Separierens des Audiosignals in eine Hochfrequenzkomponente und eine Niederfrequenzkomponente für eine vorgegebene Anzahl von Malen unter Verwendung einer zweiteiligen Filterbank und dann mittels Erfassens einer Hüllkurve von einem Signal, das die Hochfrequenzkomponente aufweist.

2. Bewegtbild-Suchvorrichtung (1) nach Anspruch 1, ferner aufweisend:
eine Videosignal-Such-Anzeigeeinheit (29), die dazu ausgebildet ist, Koordinaten, die zu der Ähnlichkeit korrespondieren, für jede der Szenen, die mittels der Videosignal-Ähnlichkeit-Sucheinheit herausgesucht wurden, gesammelt und angezeigt werden.

3. Bewegtbild-Suchvorrichtung (1) nach Anspruch 1, ferner aufweisend:
eine Audiosignal-Ähnlichkeit-Anzeigeeinheit (30), die dazu ausgebildet ist, Koordinaten, die zu der Ähnlichkeit korrespondieren, für jede der Szenen, die mittels der Audiosignal-Ähnlichkeit-Sucheinheit (27) herausgesucht wurde, zu sammeln und anzuzeigen.

4. Bewegtbild-Suchvorrichtung (1) nach Anspruch 1, wobei
die Szenenaufteileinheit (21) Sätze von charakteristischen Wertedaten zu jedem Clip von Audiosignalen des Satzes von Bewegtbild-Daten berechnet, eine Wahrscheinlichkeit der Mitgliedschaft in jeder der Audioklassen, die entsprechende Typen von Sounds des Clips repräsentieren, berechnet, ein visuelles Signal der Sätze von Bewegtbild-Daten in Aufnahmen teilt und einen Fuzzy-Algorithmus-Wert jedes der Aufnahmen aus den Wahrscheinlichkeiten der Mitgliedschaft der Clips korrespondierend zu den Aufnahmen in jeder der Audioklassen berechnet, um kontinuierliche Aufnahmen als Szene auszugeben, die benachbarte Aufnahmen aufweisen, zwischen denen ein kleiner Unterschied des Fuzzy-Algorithmus-Werts besteht.

5. Bewegtbild-Suchvorrichtung (1) nach Anspruch 1, wobei
für jede der Szenen, die erhalten werden mittels Teilung durch die Szenenaufteileinheit (21), die Videosignal-Ähnlichkeit-Berechnungseinheit (23) die Szene in Clips aufteilt, um einen Satz charakteristischer Werte eines visuellen Signals für jeden der Clips aus dem visuellen Signal zu berechnen basierend auf einem Farbhistogramm eines vorgegebenen Einzelbildes eines bewegten Bildes des Clips, den Clip in Audiosignal-Einzelbilder teilt, um jedes der Audiosignal-Einzelbilder in ein Sprach-Einzelbild und in ein Hintergrundsound-Einzelbild zu klassifizieren basierend auf einer Energie und einem Spektrum des Audiosignals in dem Audiosignalen-Einzelbild und um einen Satz charakteristischer Werte des Audiosignals des Clips zu berechnen, und die entsprechende Ähnlichkeit zwischen entsprechenden Szenen basierend auf dem Satz charakteristischer Werte des visuellen Signals und des Audiosignals in der Clipeinheit berechnet.

6. Bewegtbild-Suchprogramm zum Suchen von Szenen von Bewegtbild-Daten, die ähnlich sind zu gesuchten Bewegtbild-Daten, für jede Szene, wobei das Bewegtbild-Suchprogramm einem Computer ermöglicht, betrieben zu werden als:

Mittel zum Teilen einer Szene, die ein visuelles Signal von Sätzen der gesuchten Bewegtbild-Daten und von Sätzen von Bewegtbild-Daten, die in einer Bewegtbild-Datenbank (11) gespeichert sind, in Aufnahmen aufteilt, wobei die Bewegtbild-Daten Sätze von Audiosignalen aufweisen, und kontinuierliche Aufnahmen als Szene ausgibt, die einen kleinen Unterschied des charakteristischen Wertesatzes eines Audiosignals korrespondierend zu den Aufnahmen haben;

Mittel zur Berechnung einer Videosignal-Ähnlichkeit, die entsprechende Sätze einer Videosignal-Ähnlichkeit zwischen entsprechenden zwei Szenen von Szenen berechnet, die erhalten werden durch die Teilung durch die Mittel zum Teilen der Szene, in Übereinstimmung mit einem charakteristischen Wertesatz des visuellen Signals und einem charakteristischen Wertesatz des Audiosignals, um Sätze von Videosignal-Ähnlichkeit-Daten zu erzeugen;

Mittel zum Suchen einer Videosignal-Ähnlichkeit, die die Szenen in Übereinstimmung mit den Sätzen von Videosignal-Ähnlichkeit-Daten durchsuchen, um eine Szene zu finden, bei der die Ähnlichkeit zu jeder Szene des Satzes von gesuchten Bewegtbild-Daten kleiner ist als ein bestimmter Schwellenwert,

Mittel zum Berechnen einer Audiosignal-Ähnlichkeit, die eine entsprechende Audiosignalen-Ähnlichkeit zwischen entsprechenden zwei Szenen der Szenen berechnet, die erhalten werden mittels der Teilung durch die Mittel zum Teilen der Szene, um Sätze von Audiosignal-Ähnlichkeit-Daten zu erzeugen; und

Mittel zum Suchen einer Audiosignalen-Ähnlichkeit, die die Szenen in Übereinstimmung mit den Sätzen von Audiosignal-Ähnlichkeit-Daten durchsucht, um eine Szene zu finden, deren Ähnlichkeit zu jeder Szene des Satzes von gesuchten Bewegtbild-Daten kleiner ist als ein bestimmter Schwellenwert;

**dadurch gekennzeichnet, dass** die Audiosignal-Ähnlichkeit-Berechnungseinheit (24) dazu ausgebildet ist, den Satz der Audiosignalen-Ähnlichkeit zu berechnen einschließlich einer Ähnlichkeit basierend auf einem Bass-Sound, einer Ähnlichkeit basierend auf einem anderen Sound als dem Bass-Sound des Audiosignals und einer Ähnlichkeit basierend auf einem Rhythmus des Audiosignals;

wobei die Ähnlichkeit basierend auf dem Bass-Sound zwischen zwei beliebigen Szenen berechnet wird mittels einer Bass-Tonlage, wobei der Bass-Sound, der einen Frequenzbereich von 40 bis 250 Hz hat, von dem Audiosignal erhalten wird, die Bass-Tonlage unter Verwendung eines gewichteten Energiespektrums geschätzt wird und die Bass-Tonlage-Ähnlichkeit unter Fokussierung auf die Zeit und Frequenz berechnet wird;

wobei die Ähnlichkeit basierend auf dem anderen Instrument als dem Bass zwischen zwei Szenen berechnet wird mittels Berechnens aus dem Audiosignal einer Energie der Frequenz, die **gekennzeichnet ist durch** jeden der Namen der Tonlagen von Sounds, die alle einen Frequenzbereich haben, der höher ist als der des Bass-Sounds, und mittels Berechnens einer Summe von Energieunterschieden zwischen den beiden Szenen; und

wobei die Ähnlichkeit basierend auf dem Rhythmus zwischen den beiden Szenen berechnet wird unter Verwendung einer Autokorrelationsfunktion auf die Weise, dass die Autokorrelationsfunktion berechnet wird mittels wiederholten Separierens des Audiosignals in eine Hochfrequenzkomponente und eine Niederfrequenzkomponente für eine vorgegebene Anzahl von Malen unter Verwendung einer zweiteiligen Filterbank und dann mittels Erfassens einer Hüllkurve eines Signals, das die Hochfrequenzkomponente aufweist.

7. Bewegtbild-Suchprogramm nach Anspruch 6, das ferner dem Computer ermöglicht, zu funktionieren als:
Mittel zum Anzeigen der Videosignal-Ähnlichkeit, die Koordinaten korrespondierend zu der Ähnlichkeit für jede der Szenen, die mittels der Mittel zum Suchen der Videosignal-Ähnlichkeit herausgesucht wurden, sammelt und anzeigt.

8. Bewegtbild-Suchprogramm nach Anspruch 6, wobei
die Mittel zum Aufteilen der Szenen Sätze von charakteristischen Wertedaten zu jedem Clip von Audiosignalen des Satzes von Bewegtbild-Daten berechnet, eine Wahrscheinlichkeit der Mitgliedschaft in jeder der Audioklassen, die entsprechende Typen von Sounds des Clips repräsentieren, berechnet, ein visuelles Signal der Sätze von Bewegtbild-Daten in Aufnahmen teilt und einen Fuzzy-Algorithmus-Wert jedes der Aufnahmen aus den Wahrscheinlichkeiten der Mitgliedschaft der Clips korrespondierend zu den Aufnahmen in jeder der Audioklassen berechnet, um als Szene kontinuierliche Aufnahmen auszugeben, die benachbarte Aufnahmen aufweisen, zwischen denen ein kleiner Unterschied des Fuzzy-Algorithmus-Werts besteht.

9. Bewegtbild-Suchprogramm nach Anspruch 6, wobei
für jede der Szenen, die erhalten werden mittels Teilung durch die Szenenaufteileinheit (21), die Videosignal-Ähnlichkeit-Berechnungseinheit (23) die Szene in Clips aufteilt, um einen Satz charakteristische Werte eines visuellen Signals für jeden der Clips aus dem visuellen Signal zu berechnen basierend auf einem Farbhistogramm eines vorgegebenen Einzelbildes eines bewegten Bildes des Clips, den Clip in Audiosignal-Einzelbilder teilt, um jedes der Audiosignal-Einzelbilder in ein Sprach-Einzelbild und in ein Hintergrundsound-Einzelbild zu klassifizieren basierend auf einer Energie und einem Spektrum des Audiosignals in dem Audiosignalen-Einzelbild und um einen Satz charakteristischer Werte des Audiosignals des Clips zu berechnen, und die entsprechende Ähnlichkeit zwischen entsprechenden Szenen basierend auf dem Satz charakteristischer Werte des visuellen Signals und des Audiosignals in der Clipeinheit berechnet.

**Revendications**

1. Dispositif de recherche d'images animées (1) destiné à rechercher, dans des scènes de données d'images animées, une scène similaire à des données d'images animées d'interrogation, comprenant :

   une base de données d'images animées (11) destinée au stockage d'ensembles de données d'images animées contenant un ensemble des données d'images animées d'interrogation, les données d'images animées incluant des ensembles de signaux audio ;
   une unité de division de scène (21) configurée de manière à diviser un signal visuel des ensembles de données d'images animées en des plans, en vue de fournir en sortie, sous la forme d'une scène, des plans continus présentant une petite différence d'ensemble de valeurs caractéristiques d'un signal audio correspondant aux plans ;
   une unité de calcul de similarité de signal vidéo (23) configurée de manière à calculer des ensembles correspondants de similarité de signal vidéo entre deux scènes respectives de scènes obtenues par la division, mise en oeuvre par l'unité de division de scène (21), selon un ensemble de valeurs caractéristiques du signal visuel et un ensemble de valeurs caractéristiques du signal audio, en vue de générer des ensembles de données de similarité de signal vidéo ;
   une unité de recherche de similarité de signal vidéo (26) configurée de manière à effectuer une recherche dans les scènes selon les ensembles de données de similarité de signal vidéo, en vue de trouver une scène présentant une similarité à chaque scène de l'ensemble de données d'images animées d'interrogation inférieure à un seuil donné ;
   une unité de calcul de similarité de signal audio (24) configurée de manière à calculer une similarité de signal audio correspondante entre deux scènes respectives des scènes obtenues par la division, mise en oeuvre par l'unité de division de scène (21), en vue de générer des ensembles de données de similarité de signal audio ; et
   une unité de recherche de similarité de signal audio (24) configurée de manière à effectuer une recherche dans les scènes, selon les ensembles de données de similarité de signal audio, en vue de trouver une scène présentant une similarité à chaque scène de l'ensemble de données d'images animées d'interrogation inférieure à un seuil donné ;
   **caractérisé en ce que** l'unité de calcul de similarité de signal audio (24) est configurée de manière à calculer l'ensemble de la similarité de signal audio, notamment une similarité basée sur un son grave, une similarité basée sur un son distinct du son grave du signal audio, et une similarité basée sur un rythme du signal audio ;
   la similarité basée sur le son grave entre deux scènes quelconques étant calculée par une hauteur tonale grave, par l'acquisition du son grave présentant une plage de fréquences de 40 à 250 Hz à partir du signal audio, par l'estimation de la hauteur tonale grave au moyen d'un spectre de puissance pondéré, et par le calcul de la similarité de hauteur tonale grave portant sur le temps et la fréquence ;
   la similarité basée sur l'instrument distinct du son grave entre les deux scènes étant calculée en calculant, à partir du signal audio, une énergie de fréquence indiquée par chacun parmi des noms de hauteur tonale de sons présentant chacun une plage de fréquences supérieure à celle du son grave, et en calculant une somme de différences d'énergie entre les deux scènes ; et
   la similarité basée sur le rythme entre les deux scènes étant calculée en utilisant une fonction d'autocorrélation de sorte que la fonction d'autocorrélation est calculée en séparant, de manière répétée, le signal audio en une composante haute fréquence et une composante basse fréquence, un nombre prédéterminé de fois, en utilisant un banc de filtres à deux divisions, et en détectant ensuite une enveloppe à partir d'un signal contenant la composante haute fréquence.

2. Dispositif de recherche d'images animées (1) selon la revendication 1, comprenant en outre :
   une unité d'affichage de similarité de signal vidéo (29) configurée de manière à acquérir et à afficher des coordonnées correspondant à la similarité pour chacune des scènes recherchées par l'unité de recherche de similarité de signal vidéo.

3. Dispositif de recherche d'images animées (1) selon la revendication 1, comprenant en outre :
   une unité d'affichage de similarité de signal audio (30) configurée de manière à acquérir et à afficher des coordonnées correspondant à la similarité pour chacune des scènes recherchées par l'unité de recherche de similarité de signal audio (27).

4. Dispositif de recherche d'images animées (1) selon la revendication 1, dans lequel :
   l'unité de division de scène (21) calcule des ensembles de données de valeurs caractéristiques sur chaque clip à partir d'un signal audio des ensembles de données d'images animées, calcule une probabilité d'appartenance dans chaque classe parmi des classes audio représentant des types respectifs de sons de clips, divise un signal visuel des ensembles de données d'images animées en des plans, et calcule une valeur d'algorithme flou de chacun des plans à partir des probabilités d'appartenance de clips correspondant au plan dans chacune des classes audio, en vue de fournir en sortie, sous la forme d'une scène, des plans continus incluant des plans adjacents présentant entre eux une petite différence de valeur d'algorithme flou.

**5.** Dispositif de recherche d'images animées (1) selon la revendication 1, dans lequel :
pour chacune des scènes obtenues par la division mise en oeuvre par l'unité de division de scène (21), l'unité de calcul de similarité de signal vidéo (23) divise la scène en des clips en vue de calculer un ensemble de valeurs caractéristiques d'un signal visuel pour chacun des clips, à partir du signal visuel, sur la base d'un histogramme de couleurs d'une trame prédéterminée d'une image animée du clip, divise le clip en des trames de signal audio en vue de classer chacune des trames de signal audio en une trame de parole et une trame de fond sonore sur la base d'une énergie et d'un spectre du signal audio dans la trame de signal audio et en vue de calculer un ensemble de valeurs caractéristiques du signal audio des clips, et calcule la similarité correspondante entre des scènes respectives sur la base de l'ensemble de valeurs caractéristiques du signal visuel et du signal audio, en unité de clip.

**6.** Programme de recherche d'images animées destiné à rechercher des scènes de données d'images animées pour chaque scène similaire à des données d'images animées d'interrogation, le programme de recherche d'images animées permettant à un ordinateur de fonctionner en tant que :

moyen de division de scène qui divise, en des plans, un signal visuel d'un ensemble de données d'images animées d'interrogation et des ensembles de données d'images animées stockés dans une base de données d'images animées (11), les données d'images animées incluant des ensembles de signaux audio, et qui fournit en sortie, sous la forme d'une scène, des plans continus présentant une petite différence d'ensemble de valeurs caractéristiques d'un signal audio correspondant aux plans ;
moyen de calcul de similarité de signal vidéo qui calcule des ensembles correspondants de similarité de signal vidéo entre deux scènes respectives de scènes obtenues par la division, mise en oeuvre par le moyen de division de scène, selon un ensemble de valeurs caractéristiques du signal visuel et un ensemble de valeurs caractéristiques du signal audio, en vue de générer des ensembles de données de similarité de signal vidéo ;
moyen de recherche de similarité de signal vidéo qui effectue une recherche dans les scènes selon les ensembles de données de similarité de signal vidéo, en vue de trouver une scène présentant une similarité à chaque scène de l'ensemble de données d'images animées d'interrogation inférieure à un seuil donné ;
moyen de calcul de similarité de signal audio qui calcule une similarité de signal audio correspondante entre deux scènes respectives des scènes obtenues par la division, mise en oeuvre par le moyen de division de scène, en vue de générer des ensembles de données de similarité de signal audio ; et
moyen de recherche de similarité de signal audio (24) qui effectue une recherche dans les scènes, selon les ensembles de données de similarité de signal audio, en vue de trouver une scène présentant une similarité à chaque scène de l'ensemble de données d'images animées d'interrogation inférieure à un seuil donné ;
**caractérisé en ce que** l'unité de calcul de similarité de signal audio (24) est configurée de manière à calculer l'ensemble de la similarité de signal audio, notamment une similarité basée sur un son grave, une similarité basée sur un son distinct du son grave du signal audio, et une similarité basée sur un rythme du signal audio ;
la similarité basée sur le son grave entre deux scènes quelconques étant calculée par une hauteur tonale grave, par l'acquisition du son grave présentant une plage de fréquences de 40 à 250 Hz à partir du signal audio, par l'estimation de la hauteur tonale grave au moyen d'un spectre de puissance pondéré, et par le calcul de la similarité de hauteur tonale grave portant sur le temps et la fréquence ;
la similarité basée sur l'instrument distinct du son grave entre les deux scènes étant calculée en calculant, à partir du signal audio, une énergie de fréquence indiquée par chacun parmi des noms de hauteur tonale de sons présentant chacun une plage de fréquences supérieure à celle du son grave, et en calculant une somme de différences d'énergie entre les deux scènes ; et
la similarité basée sur le rythme entre les deux scènes étant calculée en utilisant une fonction d'autocorrélation de sorte que la fonction d'autocorrélation est calculée en séparant, de manière répétée, le signal audio en une composante haute fréquence et une composante basse fréquence, un nombre prédéterminé de fois, en utilisant un banc de filtres à deux divisions, et en détectant ensuite une enveloppe à partir d'un signal contenant la composante haute fréquence.

**7.** Programme de recherche d'images animées selon la revendication 6, permettant en outre à l'ordinateur de fonctionner en tant que :
moyen d'affichage de similarité de signal vidéo qui acquiert et affiche des coordonnées correspondant à la similarité pour chacune des scènes recherchées par le moyen de recherche de similarité de signal vidéo.

8. Programme de recherche d'images animées selon la revendication 6, dans lequel :
le moyen de division de scène calcule des ensembles de données de valeurs caractéristiques sur chaque clip à partir d'un signal audio des ensembles de données d'images animées, calcule une probabilité d'appartenance dans chaque classe parmi des classes audio représentant des types respectifs de sons de clips, divise un signal visuel des ensembles de données d'images animées en des plans, et calcule une valeur d'algorithme flou de chacun des plans à partir des probabilités d'appartenance de clips correspondant au plan dans chacune des classes audio, en vue de fournir en sortie, sous la forme d'une scène, des plans continus incluant des plans adjacents présentant entre eux une petite différence de valeur d'algorithme flou.

9. Programme de recherche d'images animées selon la revendication 6, dans lequel :
pour chacune des scènes obtenues par la division mise en oeuvre par le moyen de division de scène, le moyen de calcul de similarité de signal vidéo divise la scène en des clips en vue de calculer un ensemble de valeurs caractéristiques d'un signal visuel pour chacun des clips, à partir du signal visuel, sur la base d'un histogramme de couleurs d'une trame prédéterminée d'une image animée du clip, divise le clip en des trames de signal audio en vue de classer chacune des trames de signal audio en une trame de parole et une trame de fond sonore sur la base d'une énergie et d'un spectre du signal audio dans la trame de signal audio et en vue de calculer un ensemble de valeurs caractéristiques du signal audio des clips, et calcule la similarité correspondante entre des scènes respectives sur la base de l'ensemble de valeurs caractéristiques du signal visuel et du signal audio, en unité de clip.

# FIG. 1

CENTRAL PROCESSING CONTROLLER 101

MOVING IMAGE DATABASE 11

VIDEO SIGNAL SIMILARITY DATA 12

AUDIO SIGNAL SIMILARITY DATA 13

107

1

SCENE DIVIDING UNIT 21

CLASSIFICATION UNIT 22

VIDEO SIGNAL SIMILARITY CALCULATION UNIT 23

AUDIO SIGNAL SIMILARITY CALCULATION UNIT 24

SEARCH UNIT 25

VIDEO SIGNAL SIMILARITY SEARCH UNIT 26

AUDIO SIGNAL SIMILARITY SEARCH UNIT 27

DISPLAY UNIT 28

VIDEO SIGNAL SIMILARITY DISPLAY UNIT 29

AUDIO SIGNAL SIMILARITY DISPLAY UNIT 30

51

## FIG. 2

A101  P101

## FIG. 3

A102b

A101  P102  A102a

# FIG. 4

## FIG. 5

```
( START SCENE DIVIDING PROCESSING )
            │
            ▼
[ FOR EACH PIECE OF MOVING IMAGE DATA ]        S101
            │
            ▼
[      READ AUDIO SIGNAL      ]                 S102
            │
            ▼
[   DIVIDE AUDIO SIGNAL INTO CLIPS   ]
            │
            ▼
[         FOR EACH CLIP         ]               S103
            │
            ▼
[ CALCULATE CLIP CHARACTERISTIC VALUE SET ]     S104
            │
            ▼
[ REDUCE CHARACTERISTIC VALUE SET BY PCA ]      S105
            │
            ▼
[ CALCULATE PROBABILITY OF MEMBERSHIP OF CLIP TO
  AUDIO CLASS BASED ON MDG ]
            │
            ▼
[                              ]                S106
            │
            ▼
[      READ VISUAL SIGNAL      ]                S107
            │
            ▼
[ DIVIDE VIDEO INTO SHOTS BY USE OF CHI-SQUARE
  TEST METHOD ]
            │
            ▼
[         FOR EACH SHOT         ]               S108
            │
            ▼
[ CALCULATE PROBABILITY OF MEMBERSHIP OF SHOT
  TO AUDIO CLASS ]                              S109
            │
            ▼
[     FUZZY ALGORITHM FOR SHOT     ]
            │
            ▼
[                              ]                S110
            │
            ▼
[ SCENE DIVISION USING FUZZY ALGORITHM VALUE ]
            │
            ▼
[                              ]
            │
            ▼
( END SCENE DIVIDING PROCESSING )
```

## FIG. 6

```
┌─────────────────────────────────────────────┐
│  START VIDEO SIGNAL SIMILARITY CALCULATION   │
│  PROCESSING                                   │
└─────────────────────────────────────────────┘
                     │
                     ▼
┌─────────────────────────────────────────────┐
│      FOR EACH PIECE OF MOVING IMAGE DATA      │
└─────────────────────────────────────────────┘
                     │
                     ▼
┌─────────────────────────────────────────────┐
│             FOR EACH SCENE                    │
└─────────────────────────────────────────────┘
                     │                    ⟋ S201
                     ▼
┌─────────────────────────────────────────────┐
│        DIVIDE VIDEO SIGNAL INTO CLIPS         │
└─────────────────────────────────────────────┘
                     │
                     ▼
┌─────────────────────────────────────────────┐
│              FOR EACH CLIP                    │
└─────────────────────────────────────────────┘
                     │                    ⟋ S202
                     ▼
┌─────────────────────────────────────────────┐
│   CALCULATE VISUAL SIGNAL CHARACTERISTIC VALUE SET │
└─────────────────────────────────────────────┘
                     │                    ⟋ S203
                     ▼
┌─────────────────────────────────────────────┐
│   CALCULATE AUDIO SIGNAL CHARACTERISTIC VALUE SET │
└─────────────────────────────────────────────┘
                     │
                     ▼
┌─────────────────────────────────────────────┐
│                                               │
└─────────────────────────────────────────────┘
                     │
                     ▼
┌─────────────────────────────────────────────┐
│                                               │
└─────────────────────────────────────────────┘
                     │
                     ▼
┌─────────────────────────────────────────────┐
│                                               │
└─────────────────────────────────────────────┘
                     │                    ⟋ S204
                     ▼
┌─────────────────────────────────────────────┐
│        CALCULATE INTER-SCENE SIMILARITY       │
└─────────────────────────────────────────────┘
                     │                    ⟋ S205
                     ▼
┌─────────────────────────────────────────────┐
│ GENERATE INTER-SCENE VIDEO SIGNAL SIMILARITY DATA │
└─────────────────────────────────────────────┘
                     │
                     ▼
┌─────────────────────────────────────────────┐
│   END VIDEO SIGNAL SIMILARITY CALCULATION     │
│   PROCESSING                                  │
└─────────────────────────────────────────────┘
```

# FIG. 7

START AUDIO SIGNAL SIMILARITY CALCULATION PROCESSING

FOR EACH PIECE OF MOVING IMAGE DATA

FOR EACH SCENE

S301
CALCULATE SIMILARITY BASED ON BASS SOUND OF AUDIO SIGNAL

S302
CALCULATE SIMILARITY BASED ON OTHER INSTRUMENT OF AUDIO SIGNAL

S303
CALCULATE SIMILARITY BASED ON RHYTHM OF AUDIO SIGNAL

S304
GENERATE INTER-SCENE AUDIO SIGNAL SIMILARITY DATA

END AUDIO SIGNAL SIMILARITY CALCULATION PROCESSING

FIG. 8

START PROCESSING OF CALCULATING
SIMILARITY BASED ON BASS SOUND

S311

EXTRACT BASS SOUND BY USE OF BANDPASS FILTER

S312

CALCULATE WEIGHTED POWER SPECTRUM
FOCUSING ON TIME AND FREQUENCY

S313

ESTIMATE BASS PITCH BY USE OF WEIGHTED
POWER SPECTRUM

S314

CALCULATE SIMILARITY OF BASS PITCH BY USE OF DTW

END PROCESSING OF CALCULATING SIMILARITY
BASED ON BASS SOUND

FIG. 9

START PROCESSING OF CALCULATING
SIMILARITY BASED ON OTHER INSTRUMENT

S321

CALCULATE ENERGY OF FREQUENCY INDICATED
BY PITCH NAME

S322

CALCULATE ENERGY RATIO

S323

CALCULATE SIMILARITY OF ENERGY RATIO OF PITCH
NAME BY USE OF DTW

END PROCESSING OF CALCULATING SIMILARITY
BASED ON OTHER INSTRUMENT

# FIG. 10

START PROCESSING OF CALCULATING
SIMILARITY BASED ON RHYTHM

S331

CALCULATE LOW-FREQUENCY AND
HIGH-FREQUENCY COMPONENTS BY USE OF
TWO-DIVISION FILTER BANK

S332

FULL-WAVE RECTIFICATION

S333

APPLICATION OF LOW-PASS FILTER

S334

DOWNSAMPLING

S335

REMOVE AVERAGE VALUE

S336

CALCULATE AUTOCORRELATION FUNCTION

S337

CALCULATE RHYTHM FUNCTION SIMILARITY
BY USE OF DTW

END PROCESSING OF CALCULATING
SIMILARITY BASED ON RHYTHM

# FIG. 11

(a)

$$\boxed{\text{START VIDEO SIGNAL SIMILARITY SEARCH PROCESSING}}$$

FOR EACH SCENE

S401

ACQUIRE VISUAL SIGNAL SIMILARITY

S402

ACQUIRE AUDIO SIGNAL SIMILARITY

S403

EXTRACT SCENE HAVING SIMILARITY TO QUERY MOVING IMAGE SCENE EQUAL TO OR ABOVE PREDETERMINED VALUE

$$\boxed{\text{END VIDEO SIGNAL SIMILARITY SEARCH PROCESSING}}$$

(b)

$$\boxed{\text{START VIDEO SIGNAL SIMILARITY DISPLAY PROCESSING}}$$

S451

CALCULATE COORDINATES IN THREE-DIMENSIONAL SPACE

S452

PERSPECTIVE TRANSFORMATION

S453

DISPLAY

$$\boxed{\text{END VIDEO SIGNAL SIMILARITY DISPLAY PROCESSING}}$$

# FIG. 12

(a)

START AUDIO SIGNAL SIMILARITY SEARCH PROCESSING

FOR EACH SCENE

ACQUIRE SIMILARITY BASED ON BASS SOUND — S501

ACQUIRE SIMILARITY BASED ON NON-BASS SOUND — S502

ACQUIRE SIMILARITY BASED ON RHYTHM — S503

— S504

EXTRACT SCENE HAVING SIMILARITY TO QUERY MOVING IMAGE SCENE EQUAL TO OR ABOVE PREDETERMINED VALUE

END AUDIO SIGNAL SIMILARITY SEARCH PROCESSING

(b)

START AUDIO SIGNAL SIMILARITY DISPLAY PROCESSING

CALCULATE COORDINATES IN THREE-DIMENSIONAL SPACE — S551

PERSPECTIVE TRANSFORMATION — S552

DISPLAY — S553

END AUDIO SIGNAL SIMILARITY DISPLAY PROCESSING

## FIG. 13

AUDIO CLIP

$D_1^{(1)}$
(Si+No)

[CLS#1]
Si+No/Sp+Mu
CLASSIFICATION

$D_2^{(1)}$
(Sp+Mu)

$D_1^{(2)}$
(Si)

[CLS#2]
Si/No
CLASSIFICATION

$D_2^{(2)}$
(No)

$D_1^{(3)}$
(Sp)

[CLS#3]
Sp/Mu
CLASSIFICATION

$D_2^{(3)}$
(Mu)

Si

No Sp

Mu

## FIG. 14

|  | REFERENCE SIGNAL 1 | REFERENCE SIGNAL 2 |
|---|---|---|
| CLS#1 | Si,No | Sp,Mu |
| CLS#2 | Si | No |
| CLS#3 | Sp | Mu |

# FIG. 15

AUDIO SIGNAL

S1101
DIVIDE AUDIO SIGNAL INTO FRAMES

S1102
CALCULATE VOLUME OF EACH FRAME

S1103
CALCULATE ZERO CROSS RATE OF EACH FRAME

S1104
CALCULATE PITCH OF EACH FRAME

S1105
CALCULATE FREQUENCY CENTER POSITION OF EACH FRAME

S1106
CALCULATE FREQUENCY BANDWIDTH OF EACH FRAME

S1107
CALCULATE SUB-BAND ENERGY RATE OF EACH FRAME

S1108
CALCULATE AVERAGE VALUE AND STANDARD DEVIATION FOR CHARACTERISTIC VALUE SETS (SIX KINDS IN TOTAL) OF FRAMES CONTAINED IN THE SAME CLIP

S1109
CALCULATE NON-SILENCE RATE OF EACH CLIP

S1110
CALCULATE ZERO RATE OF EACH CLIP

S1111
INTEGRATE CHARACTERISTIC VALUE SET OF EACH CLIP

OUTPUT

62

# FIG. 16

(a)

S1201

CHARACTERISTIC VALUE SET
CALCULATED FROM CLIP OF
PROCESS TARGET SIGNAL

↓ S1204

NORMALIZE CHARACTERISTIC VALUE SET IN CLIP UNIT

↓ S1205

PCA (PRINCIPAL COMPONENT ANALYSIS)

↓ S1206

CALCULATE (AXIS OF) PRINCIPAL COMPONENT HAVING
EIGENVALUE OF 1 OR MORE

↓

OUTPUT PRINCIPAL COMPONENT OF CLIP
OF PROCESS TARGET SIGNAL

(b)

S1251

CHARACTERISTIC
VALUE SET CALCULATED
FROM CLIP OF
REFERENCE SIGNAL 1

S1252

CHARACTERISTIC
VALUE SET CALCULATED
FROM CLIP OF
REFERENCE SIGNAL 2

↓ ↓ S1253

NORMALIZE CHARACTERISTIC VALUE SET IN CLIP UNIT

↓ S1254

PCA (PRINCIPAL COMPONENT ANALYSIS)

↓ S1255

CALCULATE (AXIS OF) PRINCIPAL COMPONENT HAVING
EIGENVALUE OF 1 OR MORE

↓

OUTPUT PRINCIPAL COMPONENT
OF CLIP OF REFERENCE SIGNAL

# FIG. 17

( EACH CLIP OF PROCESS TARGET SIGNAL )

INPUT VECTOR HAVING PRINCIPAL COMPONENT OF EACH CLIP OF PROCESS TARGET SIGNAL AS ELEMENT ⸺ S1301

CLS#1

S1302 — CALCULATE DISTANCE $d1^{(1)}$ FROM REFERENCE SIGNAL 1

CALCULATE DISTANCE $d2^{(1)}$ FROM REFERENCE SIGNAL 2 ⸺ S1304

S1303 — CALCULATE MEMBERSHIP DEGREE $D1^{(1)}$ OF REFERENCE SIGNAL 1 TO CLUSTER

CALCULATE MEMBERSHIP DEGREE $D2^{(1)}$ OF REFERENCE SIGNAL 2 TO CLUSTER ⸺ S1305

---

S1306

CLS#2  S1308

CALCULATE DISTANCE $d1^{(2)}$ FROM REFERENCE SIGNAL 1

CALCULATE DISTANCE $d2^{(2)}$ FROM REFERENCE SIGNAL 2

S1307 — CALCULATE MEMBERSHIP DEGREE $D1^{(2)}$ OF REFERENCE SIGNAL 1 TO CLUSTER

CALCULATE MEMBERSHIP DEGREE $D2^{(2)}$ OF REFERENCE SIGNAL 2 TO CLUSTER ⸺ S1309

CALCULATE PROBABILITY OF MEMBERSHIP $P_1$ TO AUDIO CLASS Si ⸺ S1310

CALCULATE PROBABILITY OF MEMBERSHIP $P_4$ TO AUDIO CLASS No ⸺ S1311

---

S1312

CLS#3  S1314

CALCULATE DISTANCE $d1^{(3)}$ FROM REFERENCE SIGNAL 1

CALCULATE DISTANCE $d2^{(3)}$ FROM REFERENCE SIGNAL 2

S1313 — CALCULATE MEMBERSHIP DEGREE $D1^{(3)}$ OF REFERENCE SIGNAL 1 TO CLUSTER

CALCULATE MEMBERSHIP DEGREE $D2^{(3)}$ OF REFERENCE SIGNAL 2 TO CLUSTER ⸺ S1315

CALCULATE PROBABILITY OF MEMBERSHIP $P_2$ TO AUDIO CLASS Sp ⸺ S1316

CALCULATE PROBABILITY OF MEMBERSHIP $P_3$ TO AUDIO CLASS Mu ⸺ S1317

EP 2 257 057 B1

# FIG. 18

INPUT MOVING IMAGE DATA

S1401

ACQUIRE FRAME

S1402

DIVIDE FRAME INTO 4×4 = 16 RECTANGULAR REGIONS

S1403

CREATE COLOR HISTOGRAM H (f, r, b)
OF SIXTY-FOUR COLORS FOR EACH REGION

S1404

CALCULATE DIFFERENCE EVALUATION $E_r$ OF COLOR
HISTOGRAM BETWEEN ADJACENT FRAMES

S1405

CALCULATE SUM $E_{sum}$ OF EIGHT SMALL VALUES
AMONG $E_r$ (r = 1, 2, ···, 16)

S1406

DETERMINE SHOT CUT AT TIME WHEN $E_{sum}$ TAKES
VALUE GREATER THAN THRESHOLD VALUE

OUTPUT SHOT SECTION

# FIG. 19

(a)  INPUT ($I_1 = 1, \cdots, 4$)

(b)  OUTPUT ($I_2 = 1, \cdots, 6$)

## FIG. 20

FUZZY CONTROL RULE 1
(I1 = 1, ⋯, 4 ; CORRESPONDING TO Si, Sp, Mu,
AND No, RESPECTIVELY)

| | | | | |
|---|---|---|---|---|
| $R_{I1}^1$ : | IF "$x_{I1}$ is NB" | THEN | "$y_{I1}$ is NB" |
| $R_{I1}^2$ : | IF "$x_{I1}$ is NBM" | THEN | "$y_{I1}$ is NBM" |
| $R_{I1}^3$ : | IF "$x_{I1}$ is NM" | THEN | "$y_{I1}$ is NM" |
| $R_{I1}^4$ : | IF "$x_{I1}$ is NSM" | THEN | "$y_{I1}$ is NSM" |
| $R_{I1}^5$ : | IF "$x_{I1}$ is NS" | THEN | "$y_{I1}$ is NS" |
| $R_{I1}^6$ : | IF "$x_{I1}$ is ZO" | THEN | "$y_{I1}$ is ZO"" |
| $R_{I1}^7$ : | IF "$x_{I1}$ is PS" | THEN | "$y_{I1}$ is PS" |
| $R_{I1}^8$ : | IF "$x_{I1}$ is PSM" | THEN | "$y_{I1}$ is PSM" |
| $R_{I1}^9$ : | IF "$x_{I1}$ is PM" | THEN | "$y_{I1}$ is PM" |
| $R_{I1}^{10}$ : | IF "$x_{I1}$ is PBM" | THEN | "$y_{I1}$ is PBM" |
| $R_{I1}^{11}$ : | IF "$x_{I1}$ is PB" | THEN | "$y_{I1}$ is PB" |

## FIG. 21

FUZZY CONTROL RULE 2 (SpMu, SpNo)

| | | | | | |
|---|---|---|---|---|---|
| $R_5^1$ : | IF "$x_1$ is NB" and "$x_3$ is NBM" | and "$x_4$ is NBM" | THEN | "$y_5$ is NB" |
| $R_5^2$ : | IF "$x_1$ is NB" and "$x_2$ is PS" | and "$x_3$ is NSM" | THEN | "$y_5$ is PM" |
| $R_5^3$ : | IF "$x_1$ is NB" and "$x_2$ is PM" | and "$x_3$ is NBM" | THEN | "$y_5$ is PBM" |
| $R_5^4$ : | IF "$x_1$ is NB" and "$x_2$ is PSM" | and "$x_3$ is NM" | THEN | "$y_5$ is PB" |
| $R_6^1$ : | IF "$x_1$ is NB" and "$x_3$ is NBM" | and "$x_4$ is NBM" | THEN | "$y_6$ is NB" |
| $R_6^2$ : | IF "$x_1$ is NB" and "$x_2$ is PS" | and "$x_4$ is NSM" | THEN | "$y_6$ is PM" |
| $R_6^3$ : | IF "$x_1$ is NB" and "$x_2$ is PM" | and "$x_4$ is NBM" | THEN | "$y_6$ is PBM" |
| $R_6^4$ : | IF "$x_1$ is NB" and "$x_2$ is PSM" | and "$x_4$ is NM" | THEN | "$y_6$ is PB" |

# FIG. 22

CALCULATE AVERAGE VALUE $x_{l1}$ OF PROBABILITY OF MEMBERSHIP $P_{l1}(k)$ IN ALL CLIPS WITHIN SAME SHOT — S1501

CALCULATE MEMBERSHIP FUNCTION $\mu(x_{l1})$ FOR EACH SHOT — S1502

ELEVEN LEVELS OF FUZZY COEFFICIENTS

CALCULATE OUTPUT $y_{l2}$ AND VALUE $\mu(y_{l2})$ OF MEMBERSHIP FUNCTION ACCORDING TO FUZZY CONTROL RULE FROM INPUT CONVERSION $x_{l1}$ AND VALUE $\mu(x_{l1})$ OF MEMBERSHIP FUNCTION — S1503

CALCULATE DISTANCE D $(\eta_1, \eta_2)$ OF MEMBERSHIP FUNCTION BETWEEN DIFFERENT SHOTS — S1504

DETERMINE SCENE CUT OF VIDEO SIGNAL BETWEEN FRAMES HAVING D $(\eta_1, \eta_2)$ GREATER THAN THRESHOLD VALUE — S1505

OUTPUT SCENE SECTION

## FIG. 23

START VISUAL SIGNAL CHARACTERISTIC VALUE SET
CALCULATION PROCESSING

↓ — S2101

EXTRACT LEADING IMAGE FRAME OF CLIP

↓ — S2102

CONVERSION FROM RGB COLOR SYSTEM TO HSV
COLOR SYSTEM

↓ — S2103

CALCULATE THREE-DIMENSIONAL COLOR HISTOGRAM,
AS CHARACTERISTIC VALUE SET, IN WHICH H AXIS IS
DIVIDED INTO TWELVE, S AXIS IS DIVIDED INTO TWO,
AND V AXIS IS DIVIDED INTO TWO

↓

END VISUAL SIGNAL CHARACTERISTIC VALUE SET
CALCULATION PROCESSING

## FIG. 24

START AUDIO SIGNAL CHARACTERISTIC VALUE SET
CALCULATION PROCESSING

↓ — S2201

DIVIDE INTO SHORT-TIME FRAMES

↓ — S2202

CALCULATE ENERGY OF AUDIO SIGNAL WITHIN FRAME

↓ — S2203

CALCULATE SPECTRUM OF AUDIO SIGNAL WITHIN FRAME

↓ — S2204

CLASSIFY FRAME INTO SPEECH FRAME AND
BACKGROUND SOUND FRAME

↓ — S2205

CALCULATE CHARACTERISTIC VALUE SET

↓

END AUDIO SIGNAL CHARACTERISTIC VALUE SET
CALCULATION PROCESSING

# FIG. 25

# FIG. 26

(a) PATHS #1 AND #2

(b) PATHS #3 TO #5

(c) PATHS #6 AND #7

# FIG. 27

( START INTER-SCENE SIMILARITY CALCULATION PROCESSING )

↓ ⟋ S2301

MATCHING BASED ON INTER-SCENE CHARACTERISTIC VALUE SET BY USE OF THREE-DIMENSIONAL DTW

↓ ⟋ S2302

LOCAL COST SETTING
○ DIFFERENCE IN MOVING IMAGE SIGNAL CHARACTERISTIC VALUE SET BETWEEN CLIPS
○ DIFFERENCE IN AUDIO SIGNAL CHARACTERISTIC VALUE SET BETWEEN CLIPS
○ DIFFERENCE IN CHARACTERISTIC VALUE SET OF BOTH SIGNALS BETWEEN CLIPS

↓ ⟋ S2303

LOCAL PATH SETTING
#1 ALLOW EXPANSION OR CONTRACTION OF CLIP OF QUERY SCENE IN TIME AXIS DIRECTION
#2 ALLOW EXPANSION OR CONTRACTION OF CLIP OF TARGET SCENE IN TIME AXIS DIRECTION
#3 ASSOCIATE MOVING IMAGE SIGNALS AS SIMILAR PORTIONS BETWEEN CLIPS
#4 ASSOCIATE SOUND SIGNALS AS SIMILAR PORTIONS BETWEEN CLIPS
#5 ASSOCIATE BOTH SIGNALS AS SIMILAR PORTIONS BETWEEN CLIPS
#6 ALLOW SHIFT IN MOVING IMAGE SIGNAL IN TIME AXIS DIRECTION BETWEEN SCENES
#7 ALLOW SHIFT IN SOUND SIGNAL IN TIME AXIS DIRECTION BETWEEN SCENES

↓ ⟋ S2304

MOVEMENT COST SETTING
$\alpha$ MOVEMENT COST FOR PATHS #1 AND #2
$\beta$ MOVEMENT COST FOR PATHS #3 AND #4
$\gamma$ MOVEMENT COST FOR PATHS #6 AND #7
($\alpha$, $\beta$ AND $\gamma$ ARE CONSTANTS)

↓ ⟋ S2301

CALCULATE OPTIMUM PATH BY MATCHING AS INTER-SCENE SIMILARITY

↓

( END INTER-SCENE SIMILARITY CALCULATION PROCESSING )

FIG. 28

FIG. 29

# FIG. 30

POWER SPECTRUM

MELODY OF BASS

250Hz                    500Hz

G11

G12

G13

| C | C# | D | D# | E | F | F# | G | G# | A | B | H |

EP 2 257 057 B1

FIG. 31

( PROCESSING OF CALCULATING SIMILARITY
BASED ON BASS SOUND )

FOR EACH SCENE OF MOVING IMAGE DATA

S3101

FOURIER TRANSFORMATION

S3102

PROVIDE FILTER HAVING PASSBAND OF 40 TO 250 Hz

S3103

CALCULATE POWER SPECTRUM P(s, f) AT EACH TIME

S3104

CALCULATE WEIGHT IN TIME AXIS DIRECTION

S3105

CALCULATE WEIGHT IN FREQUENCY AXIS DIRECTION

S3106

CALCULATE WEIGHTED POWER SPECTRUM

S3107

OUTPUT R(t, f)

S3108

OBTAIN FREQUENCY f GIVING MAXIMUM VALUE OF R(t, f)
AT EACH TIME t AND SET f AS B(t)

S3109

OUTPUT AS BASS SOUND

AS TO BASS SOUND IN TWO SCENES

S3110

CALCULATE CONSISTENCY OR INCONSISTENCY OF BASS
SOUND BETWEEN TIMES

S3111

SET COSTS d(i, j) AND Ci, j(b, a) IN DTW

S3112

CALCULATE SIMILARITY BY DTW

( END PROCESSING OF CALCULATING SIMILARITY
BASED ON BASS SOUND )

# FIG. 32

BASIC FREQUENCIES OF PITCH NAMES

| PITCH NAME | FREQUENCY [Hz] | PITCH NAME | FREQUENCY [Hz] |
|---|---|---|---|
| C | 262.8 | Fis | 371.7 |
| Cis | 278.4 | G | 393.8 |
| D | 295.0 | Gis | 417.2 |
| Dis | 312.5 | A | 442.0 |
| E | 331.1 | B | 468.3 |
| F | 350.8 | H | 496.1 |

# FIG. 33

# FIG. 34

POWER SPECTRUM

MELODY OF
OTHER INSTRUMENT

500Hz

G21

G22

G23

| C | C# | D | D# | E | F | F# | G | G# | A | B | H |

## FIG. 35

START PROCESSING OF CALCULATING SIMILARITY BASED ON OTHER INSTRUMENT

FOR EACH SCENE OF MOVING IMAGE DATA

S3201

FOURIER TRANSFORMATION

S3202

CALCULATE POWER SPECTRUM AT EACH TIME

S3203

CALCULATE ENERGY OF FREQUENCY $Px(f)$ INDICATED BY PITCH NAME X

S3204

CALCULATE ALL FREQUENCY ENERGIES

S3205

CALCULATE ENERGY RATIO $px(t)$

S3206

OUTPUT $px(t)$ AS ENERGY IN INSTRUMENT SOUND OTHER THAN BASS

AS TO ENERGY RATIO OF TWO SCENES

S3207

SET COSTS $d(i, j)$ AND $Cj, i (b, a)$ IN DTW

S3208

CALCULATE SIMILARITY BETWEEN TWO SCENES FOR EACH PITCH NAME BY DTW

S3209

CALCULATE SUM Da OF SIMILARITIES FOR ALL PITCH NAMES

S3210

OUTPUT Da AS SIMILARITY OF INSTRUMENT SOUND OTHER THAN BASS

END PROCESSING OF CALCULATING SIMILARITY BASED ON OTHER INSTRUMENT

FIG. 36

PROCESS TARGET
SIGNAL

TWO-DIVISION FILTER ——— S3301

LOW-FREQUENCY
COMPONENT — S3302

HIGH-FREQUENCY
COMPONENT — S3303

TWO-DIVISION FILTER

TWO-DIVISION FILTER

u TIMES

LOW   HIGH   LOW   HIGH ---- LOW   HIGH   LOW   HIGH

OUTPUT ONLY SIGNAL $x_u(n)$ CONTAINING HIGH-FREQUENCY COMPONENT — S3304

EP 2 257 057 B1

FIG. 37

FIG. 38

FIG. 39

(a)

LOW-FREQUENCY SIGNAL

LPF

HPF

(b)

HIGH-FREQUENCY SIGNAL

LPF

HPF

FIG. 40 (a)

(b)

FIG. 41

(a)

AVERAGE VALUE OF SIGNAL

(b)

# FIG. 42

AUTOCORRELATION OF Sin WAVEFORM
   AUTOCORRELATION > 0 : CORRELATED
   AUTOCORRELATION = 0 : CORRELATED
   AUTOCORRELATION > 0 : CORRELATED

(a)

(b)

EP 2 257 057 B1

## FIG. 43

S3401

INPUT ENVELOPE

AS TO SONG OF PROCESS TARGET SCENE

S3402

UPSAMPLING

S3403

OBTAIN y(n) BY ADDING UP yu(n) FOR u

S3404

CALCULATE AUTOCORRELATION FUNCTION Z(m) OF y(n)

S3405

APPLY DTW USING AUTOCORRELATION FUNCTION AS RHYTHM FUNCTION

S3406

OUTPUT SIMILARITY

## FIG. 44

## FIG. 45

MOVING IMAGE DATABASE — 11
107

VIDEO SIGNAL SIMILARITY DATA — 12

AUDIO SIGNAL SIMILARITY DATA — 13

1a

CENTRAL PROCESSING CONTROLLER — 101

SCENE DIVIDING UNIT — 21

CLASSIFICATION UNIT — 22

VIDEO SIGNAL SIMILARITY CALCULATION UNIT — 23

AUDIO SIGNAL SIMILARITY CALCULATION UNIT — 24

SEARCH UNIT — 25a

DISPLAY UNIT — 28a

## FIG. 46

Library    Analysis

Preference

P201    A201

## FIG. 47

RHYTHM ··· SOUND

OTHER INSTRUMENT BASS ··· MOVING IMAGE

$P_y$, $P_x$

## FIG. 48

(a)

START SEARCH PROCESSING

FOR EACH SCENE

ACQUIRE VISUAL SIGNAL SIMILARITY — S601

ACQUIRE AUDIO SIGNAL SIMILARITY — S602

ACQUIRE SIMILARITY BASED ON BASS SOUND — S603

ACQUIRE SIMILARITY BASED ON NON-BASS SOUND — S604

ACQUIRE SIMILARITY BASED ON RHYTHM — S605

— S606

ACQUIRE PREFERENCE PARAMETERS — S607

CALCULATE WEIGHTING FACTOR — S608

EXTRACT SCENE HAVING SIMILARITY TO QUERY MOVING IMAGE SCENE EQUAL TO OR ABOVE PREDETERMINED VALUE

END SEARCH PROCESSING

(b)

START DISPLAY PROCESSING

CALCULATE COORDINATES IN THREE-DIMENSIONAL SPACE — S651

PERSPECTIVE TRANSFORMATION — S652

DISPLAY — S653

END DISPLAY PROCESSING

FIG. 49

## FIG. 50

## FIG. 51

FIG. 52

FIG. 53

FIG. 54

FIG. 55

EP 2 257 057 B1

FIG. 56

FIG. 57

## FIG. 58

## FIG. 59

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007058258 A
- JP 2007274233 A

- WO 0104792 A1

**Non-patent literature cited in the description**

- **L. LU ; D. LIU ; H. J. ZHANG.** Automatic Mood Detection and Tracking of Music Audio Signals. *IEEE Trans . Audio, Speech and Language Proceeding,* 2006, vol. 14 (1), 5-8
- **T. LI ; M. OGIHARA.** Toward Intelligent Music Information Retrieval. *IEEE Trans. Multimedia,* 2006, vol. 8 (3), 564-574
- **NEVENKA DIMITROVA et al.** Asian conference on Computer vision, Taipei. *Visual Associations in DejaVideo,* January 2000, 1-11
- **RUI PEDRO PAIVA.** *Content-Based Classification and Retrieval of Music Overview and Research Trends,* 2002, 1-26

- Multimedia Databases and Image Communication. **QI TIAN et al.** Display Optimization For Image Browsing. Springer Berlin Heidelberg, 18 September 2001, vol. 2184, 167-176
- **CHENG WENGANG et al.** Content-based Video Retrieval Using Audio and Visual Clues. *IEEE Tencon 02, 2002 IEEE Region 10 Conference on Computers, Communications, Control and Power Engineering Proceedings,* 28 October 2002, vol. 1, 586-589